(19) Europäisches Patentamt
European Patent Office
Office européen des brevets

(11) EP 1 696 008 B1

(12) **EUROPEAN PATENT SPECIFICATION**

(45) Date of publication and mention of the grant of the patent:
**23.01.2008 Bulletin 2008/04**

(51) Int Cl.:
***C09D 11/00*** *(2006.01)*

(21) Application number: **06003622.5**

(22) Date of filing: **22.02.2006**

(54) **Dispersion, inkjet ink, method of manufacturing the dispersion, method of manufacturing the inkjet ink**

Dispersion, Tinte für den Tintenstrahldruck , Herstellungsmethoden für die Dispersion und Herstellungsmethode für die Tinte

Dispersion, encre por jet d' encre, procedé de production pour la dispersion et procedé der production pour l' encre

(84) Designated Contracting States:
**DE FR GB**

(30) Priority: **24.02.2005 JP 2005049127**
**24.02.2005 JP 2005049128**
**24.02.2005 JP 2005049130**

(43) Date of publication of application:
**30.08.2006 Bulletin 2006/35**

(73) Proprietor: **Toshiba TEC Kabushiki Kaisha**
**Tokyo 141-8664 (JP)**

(72) Inventors:
- **Ushirogouchi, Toru**
**c/o Intellectual Property Divison**
**Shinagawa-ku**
**Tokyo 141-8664 (JP)**
- **Akiyama, Ryozo**
**c/o Intellectual Property Divison**
**Shinagawa-ku**
**Tokyo 141-8664 (JP)**
- **Ohtsu, Kazuhiko**
**c/o Intellectual Property Divison**
**Shinagawa-ku**
**Tokyo 141-8664 (JP)**
- **Ishibashi, Mitsuru**
**c/o Intellectual Property Divison**
**Shinagawa-ku**
**Tokyo 141-8664 (JP)**
- **Kiyomoto, Hiroshi**
**c/o Intellectual Property Divison**
**Shinagawa-ku**
**Tokyo 141-8664 (JP)**
- **Hiroki, Masashi**
**c/o Intellectual Property Divison**
**Shinagawa-ku**
**Tokyo 141-8664 (JP)**
- **Kawakami, Yukiko**
**c/o Intellectual Property Divison**
**Shinagawa-ku**
**Tokyo 141-8664 (JP)**

(74) Representative: **Kramer - Barske - Schmidtchen**
**European Patent Attorneys**
**Landsberger Strasse 300**
**80687 München (DE)**

(56) References cited:
**EP-A- 1 491 592**
**EP-A- 1 528 089**
**EP-A- 1 621 348**
**WO-A-02/46323**
**US-A1- 2004 244 622**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to a dispersion, an inkjet ink, a method of manufacturing the dispersion, a method of manufacturing the inkjet ink, and a printed matter.

In a situation where a fairly large number of copies of printed matter are required such as in the cases of local advertisement bill, enterprise handout and a poster of large scale, a printing machine utilizing a form plate has been conventionally employed for meeting such requirements. In recent years however, an on-demand printer which is capable of quickly coping with the diversification of needs and of minimizing stocks has been increasingly utilized in place of the aforementioned conventional printing machine. As for such an on-demand printer, an electrophotographic printer where a toner or a liquid toner is employed as well as an inkjet printer which is capable of achieving high-velocity and high-quality printing are expected to be useful.

As in the case of the printing machine utilizing a form plate, the on-demand printer is known to employ a solvent type ink or a solvent type liquid toner both containing a pigment and an organic solvent. This technique of employing a solvent type ink or a solvent type liquid toner is however accompanied with the problem that the organic solvent volatilizes to such an extent that cannot be disregarded when the printing is repeated a certain number of times. Therefore, when this technique is employed, a problem of environmental contamination due to this volatilized organic solvent will be raised, thus necessitating the provision of a strict exhaust gas processing installation or a solvent recovery system.

On the other hand, in the case of the inkjet printer, since a solvent type ink can be handled in a closed system until the ink is discharged onto the surface of printing matter, and more over, since the waste of the solvent type ink can be minimized, it is possible, through the selection of relatively safe solvents and through the provision of suitable countermeasure for the exhaustion of solvent, to alleviate the aforementioned problem of environmental contamination.

Further, a photosensitive inkjet ink as well as an inkjet printer system employing the photosensitive inkjet ink is now increasingly taken notice of. The photosensitive ink to be employed this case typically comprises a radically polymerizable monomer, a photopolymerization initiator and a pigment. Once this photosensitive ink is delivered onto a printing surface, it can be quickly photo-cured. Further, there is also proposed a photopolymerizable photosensitive ink comprising a cation polymerizable monomer, a photo-cation generating agent and a pigment. Since the ink layer to be created by this photopolymerizable photosensitive ink can be instantaneously non-fluidized as it is irradiated with light, it is possible to obtain a printed matter which is safe and high in quality.

In an inkjet recording apparatus to be employed for such a quick drying printing, printing heads are linearly arrayed for accelerating printing and the printing is performed by running one pass on a printing face. Therefore, any ink delivery error leads to the generation of linear printing failure (missing) on the printing face. Therefore, it is indispensable to prevent such a delivery error as much as possible. Namely, the ink to be used for such an application as mentioned above is required to be excellent in stability of material in order to achieve very high printing accuracy and delivery stability.

The aforementioned cation polymerizable ink is now proposed for enhancing the adhesion of radically polymerizable ink as well as for overcoming the deterioration of sensitivity of ink that may be caused due to the inhibition of curing by the effect of oxygen. The demand for this cation polymerizable ink is expected to be increased from now on. However, since this kind of ink is highly reactive, the physical properties such as viscosity thereof are inherently liable to fluctuate considerably and hence this ink is unstable. The reason for this may be ascribed to the facts that when active species generate once due to some factors (for example, heat, etc.), the active species cannot be easily deactivated, resulting in the generation of numerous dark reaction of ink.

Further, according to recent studies, it has been made clear that in order to enhance the stability of this kind of ink, it is necessary to stabilize the conditions of ink not only macroscopically but also microscopically. For example, in the case of ordinary ink, as the particle diameter of pigment becomes smaller and the dispersion stability of pigment becomes higher, the printing error of ink can be minimized more effectively. Not only the cation polymerizable ink mentioned above but also the ink containing therein an ionic substance (a polymerization initiator, a surfactant, etc.) is generally liable to flocculate with time due to salting-out and the like in a colloidal dispersion system thereof. As a result, this kind of ink is accompanied with the problem that it is inferior in storage stability. Namely, when the viscosity, surface tension and elastic force of ink fluctuate due to the reaction of ink components, it will lead to the disturbance of the ejecting shape of ink, to poor reproducibility of printing, and in the worst case, to a critical condition such as discharging failure of ink and clogging of ink. Therefore, this problem is very serious.

EP 1 491 592 A2 relates to a processed pigment comprising a pigment having a dispersing agent absorbed physically and/or chemically onto part of the surface of the pigment, and a cationic polymerizable compound bonded through a covalent bond to the surface of the pigment, wherein the cationic polymerizable compound is preferably formed of an alicyclic epoxy compound.

WO 02/46323 A2 relates to an ultraviolet curable composition for printing on a printed circuit board using an inkjet printer comprising a mixture of reactive monomers and oligomers, at least one pigment, at least one photoinitiator, and at least one additive, wherein the monomer/oligomer mixture is formulated so that the ink has a high viscosity of

about 40 to 200 cp at 25°C, and a low viscosity of about 10 to 20 cp at high temperatures of about 50 to 80°C.

EP 1 621 348 A1 discloses a washing solution for washing an inkjet printer head which performs printing by feeding an ink comprising at least two kinds of polymerizable compounds each differing in viscosity, a photopolymerisation initiator, and pigment.

EP 1 528 089 A2 discloses a pigment dispersion comprising at least one resin-coated pigment comprising a resin and a pigment, and having an average particle diameter of 250 nm or less, and a dispersion medium containing as a major component a cationic polymeric compound having a viscosity of 30 mPa·s or less at a temperature of 25°C and a boiling point of 150°C or more at 1 atm.

US 2004/0244622 A1 relates to a dispersible colorant comprising a colorant and chargeable resin pseudo fine particles having a smaller size than the colorant, wherein the colorant and particles fix to each other.

Therefore, one of the objects of the present invention is to provide a dispersion which is minimal in the fluctuation of viscosity, stable in components thereof, and capable of obviating the problem of dispersion degradation such as flocculation and hence is especially suited for use in the inkjet ink for on-demand printing, and to provide a method of manufacturing such a dispersion.

Another object of the present invention is to provide an inkjet ink for on-demand printing, which is minimal in the fluctuation of viscosity, stable in components thereof, and capable of obviating the problem of dispersion degradation such as flocculation of pigment, and to provide a method of manufacturing such an ink.

A further object of the present invention is to provide a printed matter to be formed by using an inkjet ink for on-demand printing, which is minimal in the fluctuation of viscosity, stable in components thereof, and capable of obviating the problem of dispersion degradation such as flocculation of pigment. The above objects are achieved by the dispersions according to-claims 1 and 3, the inkjet-ink according to claim 2, the method according to claim 17 and the printed matter according to claim 19. Further developments of the present invention are set out in the dependent claims.

The invention can be more fully understood from the following detailed description when taken in conjunction with the accompanying drawings, in which:

The single figure is a schematic view of an inkjet recording apparatus where an inkjet ink according to one embodiment of the present invention can be employed.

Next, various embodiments of the present invention will be explained as follows.

A dispersion of powder according to one embodiment of the present invention is constructed such that the powder is dispersed in a dispersion medium containing an ionic compound by using a specific kind of polymer dispersing agent. A dispersion of pigment according to another embodiment of the present invention is also constructed such that the pigment is dispersed in a similar dispersion medium by using a specific kind of polymer dispersing agent. Hereinafter, the dispersion of powder and the dispersion of pigment will be collectively referred to as a dispersion for inkjet ink or simply as a dispersion.

An inkjet ink according to another embodiment of the present invention comprises a dispersion of powder which is dispersed by using a specific kind of polymer dispersing agent in a dispersion medium containing an ionic compound. An inkjet ink according to a further embodiment of the present invention comprises a dispersion of pigment which is dispersed by using a specific kind of polymer dispersing agent in a similar dispersion medium.

As for the kinds of powder to be included in a dispersion of powder according to one embodiment of the present invention, there is not any limitation as long as it is capable of exhibiting optical coloring and tinting functions which are demanded of. Further, the pigment useful in this case may be provided, in addition to the coloring and tinting properties, with other kinds of properties such as magnetic properties, fluorescent properties, electric conductivity and dielectric properties. If the pigment is provided with these various properties, a resultant image would be such exhibiting various properties. Furthermore, the dispersion may contain a kind of powder which is effective in improving the heat resistance or physical strength of inkjet ink.

As for the powder which is capable of exhibiting fluorescent properties, it is possible to employ not only inorganic fluorescence materials but also organic fluorescence materials. As for the inorganic fluorescence materials, specific examples of which include $MgWO_4$ $CaWO_4$, $(Ca,Zn)(POq)_2:Ti^+$, $Ba_2P_2O_7:Ti$ , $BaSi_2O_5:Pb^{2+}$, $Sr_2P_2O_7:Sn^{2+}$, $SrFB_2O_{3.5}:Eu^{2+}$, $MgAl_{16}O_{27}:Eu^{2+}$, and inorganic acid salts such as tungstenate and sulfate. As for the organic fluorescence materials, specific examples of which include acridine orange, amino acridine, quinacrine, anilinonaphthalene sulfonate derivatives, anthroyl oxystearic acid, auramine O, chlorotetracycline, cyanine dye such as merocyaninen and 1,1'-dihexyl-2,2'-oxacarboxycyanine, dansyl sulfonamide, dansyl choline, dansyl galactoside, dansyl tolidine, dansyl chloride derivatives such as dansyl chloride, diphenyl hexatriene, eosin, ε-adenosine, ethidium bromide, fluorescein, foamycine, 4-benzoylamide-4'-aminostilbene-2,2'-sulfonic acid, β-naphthyl triphosphic acid, oxonol dye, parinaric acid derivatives, perylene, N-phenylnaphthyl amine, pyrene, safranine O, fluorescamine, fluorescein isocyanate, 7-chloronitrobenzo-2-oxa-1,3-diazole, dansylaziridine, 5-(iodoacetamide ethyl) aminonaphthalene-1-sulfonic acid, 5-iodofluorescein, N-(1-anilinonaphthyl 4) maleimide, N-(7-dimethyl-4-methylcumanyl) maleimide, N-(3-pyrene) maleimide, eosin-5-iodoacetamide, fluorescein mercury acetate, 2-[4'-(2''-iodoacetamide)]aminonaphthalene-6-sulfonic acid, eosin, Rhodamine derivatives, organic EL dye, organic EL polymer, organic EL crystal and dendrimer.

As for the powder to be employed for enhancing the heat resistance and physical strength of ink layer, examples of which include oxides or nitrides of aluminum and silicon, filler and silicon carbide. For the purpose of providing the ink layer with electric conductivity, the ink may further contain conductive carbon pigment, carbon fiber, or powder or nano-fine particle of copper, silver, antimony and other noble metals. Iron oxide powder and ferromagnetic powder are suited for use in providing the ink layer with magnetic property. It is also possible to incorporate metal oxide powder such as tantalum oxide or titanium oxide having a high relative dielectric constant into the recording ink.

Further, it is also useful, as a functional colorant, to employ various kinds of powder such as natural clay, white lead, zinc white and metal carbonates such as magnesium carbonate, metal oxides such as barium and titanium.

The mixing ratio of the powder to a total of entire dispersion medium should preferably be confined within the range of 2 to 60% by weight. If the mixing ratio of the powder is less than 2% by weight, the effects thereof to provide the inkjet ink with functional properties would become insufficient. On the other hand, if the mixing ratio of the powder is higher than 60% by weight, the stability of the dispersion would be prominently degraded.

The average particle diameter of the powder should be as small as possible as long as the powder can be discharged from the inkjet nozzle and can exhibit the functions thereof. More specifically, the average particle diameter of the powder should be confined to not larger than 1/3, more preferably not larger than about 1/10 of the diameter of the opening of nozzle through which the inkjet ink is discharged. Incidentally, the diameter of the opening of nozzle is typically not larger than 10 μm, more preferably not larger than 5 μm. An average particle diameter of the powder which is suited for use in a printing inkjet ink is 0.3 μm or less, typical average particle diameters thereof ranging from several nano-meters to 0.2 μm.

On the other hand, the pigment dispersion according to one embodiment of the present invention is fundamentally capable of exhibiting the effects thereof irrespective of the kinds of pigments. Especially, blue pigments, black pigments and yellow pigments can be satisfactorily employed in the pigment dispersion. An average particle diameter of these pigments should be 200 nm or less in general.

Specific examples of blue pigments include metal oxide pigments such as cobalt blue, phthalocyanine pigments, bronze pigments, and metal powder pigments such as zinc powder. It is also possible to employ, as a blue pigment, phthalocyanine pigments such as phthalocyanine blue, threne pigments such as indanthrone blue, and organic pigments.

More specifically, as for the pigments that can be employed in a cyanine ink, examples thereof include C.I. Pigment Blue 15, C.I. Pigment Blue 15:3, C.I. Pigment Blue 15-15:2, C.I. Pigment Blue 15:3-15:4, C.I. Pigment Blue 15:5, C.I. Pigment Blue 15:34, C.I. Pigment Blue 16, C.I. Pigment Blue 17, C.I. Pigment Blue 20, C.I. Pigment Blue 22, C.I. Pigment Blue 25, C.I. Pigment Blue 45, C.I. Pigment Blue 60, C.I. Pigment Blue 1, C.I. Pigment Blue 2, C.I. Pigment Blue 3, C.I. Acid Blue 45, C.I. Vat Blue 4, and C.I. Vat Blue 60. Among these cyan pigments, it is especially preferable to employ phthalocyanine pigments which are resistive to the deterioration of color that may be caused by an acid. Further, in viewpoint of dispersion stability and tinting properties, Pigment Blue 15:3 is most preferable.

It is also possible, for the purpose of adjusting the color of ink, to incorporate dyes as an auxiliary component of pigment into the inkjet ink. For example, dyes which are low in acidity and basicity and excellent in solubility to a solvent, such as azoic dye, sulfur (building materials) dye, disperse dye, fluorescent brightening agent and oil soluble dye can be employed. Among them, it is more preferable to employ oil soluble dye such as azo dye, triaryl methane dye, anthraquinone dye and azine dye. Specific examples of such oil soluble dye include C.I. Solvent Blue-2, 11, 12, 25, 35, etc.; Diaresin Blue-J, A, K, N, etc.; Orient Oil Blue-II N, #603, etc.; and Sumiplast Blue BG, etc.

For the purpose of enhancing the photoabsorbance, saturation and color vision, pigments (and dyes) can be employed singly or in combination of two or more kinds.

The content of these blue pigments should be confined within the range of 2 to 30% by weight based on the dispersion medium. If the content of the blue pigments is less than 2% by weight, it would become difficult to secure a sufficient color density as they are employed as a coloring material in a subsequent process. On the other hand, if the content of the blue pigments is increased over 30% by weight, the dispersion stability thereof would be degraded. More preferably, the content of the blue pigments should be confined within the range of 3 to 27% by weight based on the dispersion medium.

As for the examples of black pigments, they include, for example, carbonaceous pigment such as carbon black, carbon refined and carbon nanotube; and metal oxide pigments such as iron black, titanium black and iron oxide. More specifically, as for the pigments that can be employed in the manufacture of a black ink, it is possible to employ carbon black such as Raven 5750, Raven 5250, Raven 5000, Raven 3500, Raven 1255 and Raven 700 (all available from Colombia Co., Ltd.); Regal 400R, Regal 330R, Regal 660R, Mogul L, Monarch 700, Monarch 800, Monarch 880, Monarch 900, Monarch 1000, Monarch 1100, Monarch 1300 and Monarch 1400 (all available from Cabot Co., Ltd.); No. 2300, No. 900, MCF88, No. 33, No. 40, No. 45, No. 52, MA7, MA8, MA100 and No. 2200B (all available from Mitsubishi Chemical Co., Ltd.); Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A and Special Black 4 (all available from Dexa Co., Ltd.).

The content of these black pigments should be confined within the range of 2 to 30% by weight based on the

dispersion medium. If the content of the black pigments is less than 2% by weight, it would become difficult to secure a sufficient color density as they are employed as a coloring material in a subsequent process. On the other hand, if the content of the black pigments is increased over 30% by weight, the dispersion stability thereof would be degraded. More preferably, the content of the black pigments should be confined within the range of 3 to 27% by weight based on the dispersion medium. It is also possible, for the purpose of adjusting the color of ink, to incorporate dyes as an auxiliary component of pigment into the inkjet ink in the same manner as in the case of the cyan pigments.

As for the yellow pigments, it is also possible to employ organic pigments including, for example, azo pigments (including azo lake, insoluble azo pigment, condensed azo pigment, benzimidazolone-based monoazo pigment); polycyclic pigments (such as perylone pigment, isoindolinone pigment, isoindoline pigment, quinophthalone pigment, etc.); and metal complex pigment.

As for the yellow pigments that can be employed in a yellow ink, examples thereof include Yellow 128, C.I. Pigment Yellow 129, C.I. C.I. Pigment Yellow 151, C.I. Pigment Yellow 154, C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 114, C.I. Pigment Yellow 139, C.I. Pigment Yellow 180 and C.I. Pigment Yellow 150. In particular, it is more preferable, among these yellow pigments, to employ nickel azo pigment and isoindoline pigment, especially C.I. Pigment Yellow 150 and Pigment Yellow 139, since these pigments are excellent in dispersion stability.

It is also possible, for the purpose of adjusting the color of ink, to incorporate dyes as an auxiliary component of pigment into the inkjet ink in the same manner as in the case of the cyan pigments. Specific examples of such dyes include, for example, C.I. Solvent Yellow-2, 6, 14, 15, 16, 19, 21, 33, 56, 61, 80, etc., Diaresin Yellow-A, F, GRN, etc. In the case of magenta ink, the effects of invention may not be so prominent as those to be derived from the employment of aforementioned pigments, the employment of quinacridone pigments may be effective in suppressing the generation of a gel-like aggregation.

For the purpose of enhancing the photoabsorbance, saturation and color vision, pigments (and dyes) can be employed singly or in combination of two or more kinds.

The content of these yellow pigments should be confined within the range of 2 to 30% by weight based on the dispersion medium. If the content of the yellow pigments is less than 2% by weight, it would become difficult to secure a sufficient color density as they are employed as a coloring material in a subsequent process. On the other hand, if the content of the yellow pigments is increased over 30% by weight, the dispersion stability thereof would be degraded. More preferably, the content of the yellow pigments should be confined within the range of 3 to 27% by weight based on the dispersion medium.

In order to enable the aforementioned powder or pigment to be uniformly dispersed in the dispersion medium at a predetermined mixing amount, a polymer dispersing agent comprising a first resinous dispersing agent and a second resinous dispersing agent is incorporated in the dispersion according to one embodiment of the present invention.

The first resinous dispersing agent is capable of adsorbing or bonding onto the surface of the pigment particles, thereby preventing the pigment particles from being flocculated. The pigment thus obtained may be called coated pigment where the pigment particles are coated with the first resinous dispersing agent. This first resinous dispersing agent acts to enhance the affinity of pigment particles to the dispersion medium, thus preventing the pigment particles from settling downward. Basically, any kind of resin which is excellent in affinity to the dispersion medium and provided with a steric separating power for preventing the flocculation among the pigments can be employed as the first resinous dispersing agent. For example, it is possible to employ a resin composition containing, as a major component, at least one selected from the group consisting of vinyl polymer or copolymer, acrylic polymer or copolymer, polyester, polyamide, polyimide, polyurethane, amino polymer, silicon-containing polymer, sulfur-containing polymer, fluorine-containing polymer and epoxy resin.

In order to provide these polymers with an enhanced dispersibility as a dispersing medium, the terminal of these polymers should preferably be excellent in bonding property and in affinity to the pigment particles. On the other hand, the main chain of the polymers should preferably be excellent in affinity to a solvent and provided with a physical repulsive force or electrostatic repulsive force for preventing the reflocculation with other pigment particles. For example, these polymers should preferably have a solubility parameter (about $\pm 5$ $Mpa^{1/2}$) which is equivalent to that of the dispersion medium, a molecular weight ranging from several hundreds to several tens of thousands, a polymerization degree ranging from about 10 to 200 and a Tg ranging from 10°C to 200°C. Further, these polymers should preferably have another terminal which is relatively high in chemical bond (covalent bond, electrostatic force, etc.), thereby providing it with affinity to the pigment. When these polymers are respectively composed of a copolymer comprising two or more kinds of monomers, it is generally possible to provide these polymers with the aforementioned composite functions. As for such polymers, a block copolymer can be also preferably employed.

Although the aforementioned terminal of polymer may not necessarily be limited to only one, it can be generally introduced into an end portion of a graft copolymer or an end portion of tandem polymer. The polymer thus obtained is

not only strong in bonding but also readily capable of forming a steric hindrance which is effective in suppressing the reflocculation among pigment particles.

As for the monomer for synthesizing such a polymer, it is possible to employ styrene and substituted styrene, (meta)acrylate, (meta)acrylic acid, (meta)acrylic amide, maleic acid, maleic anhydride, maleate, itaconic acid and esters thereof, hydroxystyrene and hydrogen-substituted derivatives thereof, etc. Further, monomers comprising an ester side chain having long chain alkyl, polyether, polycarbonate, polyester chain, etc. are advantageous in creating the aforementioned tandem polymer.

As for the aforementioned polymer, it is possible to employ the following compounds. They include, for example, polyester compounds to be obtained through a dehydrating condensation between a dihydroxy compound such as poly (oxyphthaloyloxymethylene-1,4-phenylenemethylene) and poly(1,4-cyclohexylene dimethylene succinate) and dicarboxylic acid; polyamide to be obtained through a condensation among adipic acid, diamine such as hexamethylene diamine, and dicarboxylic acid; polyamide to be obtained through the ring opening of cyclic lactone such as ε-caprolactam; a kind of polyamide which is relatively low in Tg and which can be obtained through a condensation between tetracarboxylic acid such as pyromellitic acid and aliphatic diamine; polyurethane resin to be obtained from a reaction between aliphatic diisocyanate such as isophorone dicyanate and dihydroxy compound; polyvinyl pyridine compound; polydimethyl siloxane and a ladder type polymer thereof; polyvinyl alcohol and vinyl ether compound; and polyether polymer to be obtained through the polymerization of an oxirane compound having a relatively rigid skeleton.

The terminal of these polymers may be capped with a compound having a functional group excellent in affinity to the pigment, specific examples of such a functional group including amino group, phosphoric group, etc. In this case, the adsorbing properties of polymer to the surface of pigment particles can be further enhanced.

Further, a polymer compound to be obtained through the polymerization between an amphipathic polymerizable surfactant having a polymerizable group and a crosslinking monomer and/or monofunctional monomer can be also preferably employed as the first resinous dispersing agent. As for the polymerizable group of the polymerizable surfactant, it is possible to preferably employ an unsaturated hydrocarbon group such as vinyl group, allyl group, acryloyl group, methacryloyl group, propenyl group, vinylidene group and vinylene group. These groups can be employed singly or in combination of two or more. As for the hydrophilic group of the polymerizable surfactant, it can be selected depending on the dispersion medium. When the dispersing medium is aqueous, at least one selected from sulfone group, sulfonic acid group, carboxyl group, carbonyl group, hydroxyl group and salts thereof can be preferably employed. On the other hand, when the dispersing medium is oily, it is possible to employ carboxyl group and esters thereof, lactone compound, carbonyl group and hydroxyl group.

In order to enhance the dispersion stability of the pigment particles, the pigment particles may be surface-modified. This surface modification is performed for enhancing the bonding between the first resinous dispersing agent and the pigment particles. For example, when carboxyl group or sulfonic acid group, both capable of strongly bonding to amino group representing a typical example of the terminal of the dispersing medium, is attached to part of the surface of the pigment particles, it is possible to remarkably enhance the dispersion stability of pigment. The modification of the surface of pigment by using these functional groups can be executed by a method wherein the surface of the pigment particles is oxidized by employing a suitable oxidizing agent. Alternatively, it is also possible to utilize the effects of sulfonating agent. As for the sulfonating agent useful in this case, it is possible to employ sulfuric acid, fuming sulfuric acid, $SO_2$ $SO_3$ derivatives thereof such as halogenated sulfonic acid, and a combination of a catalyst with rare earth element. It is also possible to employ, as a sulfonating agent, a compound which is highly reactive such as an organometallic compound having sulfonic acid group or a vinyl compound. Furthermore, it is also possible to suitably apply Strecker's Reaction to the surface modification of the pigment particles, wherein a salt such as sodium sulfide is applied to the pigment particles that have been subjected to halogenation treatment.

On the other hand, even if a sulfone modifying pigment (synergist) which is high in physical adsorption to pigment is adsorbed onto the surface of the pigment particles, almost the same surface modifying effects may be obtained. A surface-modified pigment which surface has been directly modified with a sulfonating agent is generally more excellent in bonding strength between the pigment and sulfonic acid group as compared with a synergist and hence excellent in dispersion stability. However, as long as the dispersion stability can be sufficiently secured even if a synergist is employed in viewpoints of easiness of handling and cost, there is no reason for denying it.

In order to obtain further stronger surface modification, it is preferable to perform a microencapsulating treatment in addition to the formation of aforementioned covalent bonding between a resinous dispersing agent and the pigment particles. The microencapsulated pigment can be manufactured according to any known method. For example, it is possible to employ a phase separation method (coacervation), a submerged drying method (interfacial precipitation method), a spray drying method, a pan coating method, a submerged curing coating method, an interfacial polymerization method, an in-situ method, and an ultrasonication method. More specifically, it is possible to employ a method of manufacturing an anionic microcapsulated pigment as disclosed in JP Patent Laid-open Publication (Kokai) No. 9-151342 (1997) or a method described in JP Patent Laid-open Publication (Kokai) No. 10-316909 (1998).

The ratio of modification by a functional group can be directly measured by a surface spectroscopic analysis

such as EDX if a modifying element includes sulfur atom or phosphorus atom for instance. In this case, the content of element to be measured should preferably be about 0.1% or more of the surface composition of pigment particles. If the modification ratio is too high, the acidity of pigment would become too strong so that the pigment may be reacted with a dispersing medium, thereby possibly accelerating the flocculation of pigment particles as well as the increase in viscosity of the resultant dispersion. In order to avoid such a problem, the modification ratio should desirably be confined to about 30% at most. The ratio of modification such as the covering ratio by using carboxylic acid or resin, which cannot be easily measured by EDX, can be estimated on the basis of the surface area that can be determined by adsorption process and the number of modifying group that can be estimated from a titrimetric method. Alternatively, the modification ratio can be estimated by thermogravimetric analysis (TG) which will be conducted to such an extent that would not cause the decomposition of the pigment particles.

The mixing amount of the first resinous dispersing agent may be confined to 1% to 30% based on the weight of the powder. In the case of pigment dispersion, the mixing amount of the first resinous dispersing agent varies depending on the kinds of pigments. For example, in the case of yellow pigment, the mixing amount of the first resinous dispersing agent would be confined within the range of 10 to 60% based on the weight of pigment. In the cases of blue pigment dispersion and black pigment, the mixing amount the first resinous dispersing agent would be confined within the range of 10 to 30% based on the weight of pigment. Irrespective of the powder dispersion and pigment dispersion, if the mixing amount of the first resinous dispersing agent is too small, it would become difficult to obtain sufficient effects. On the other hand, if the mixing amount of the first resinous dispersing agent is too large, it would raise various problems that the viscosity of the dispersion for inkjet would be increased extremely and the stability of these dispersions would be degraded, thus facilitating the occurrence of flocculation thereof.

By using a first resinous dispersing agent at a predetermined amount, the resin-covered pigment is obtained.

The resin-covered pigment thus obtained is then dispersed in the dispersion medium by using a second resinous dispersing agent and then an ionic compound is incorporated in the resultant dispersion, thus making it possible to obtain a stable dispersion.

The second resinous dispersing agent is a resin which has a basic group such as amino group on its terminal and which should preferably be more or less excellent in affinity to the first resinous dispersing agent. It is more preferable to select, as the second resinous dispersing agent, from those which are capable of creating dispersion stability through the adsorption or interaction with an ionic compound (to be discussed hereinafter) and through the repulsive force thereof with respect to the first resinous dispersing agent entirely covering the pigment particles.

As for the second resinous dispersing agent satisfying the aforementioned conditions, it is generally possible to employ polyolefin, polyester and epoxy resin each having amino terminal even through it cannot be definitely determined because of the combination thereof with the first resinous dispersing agent. More specifically, it is possible to employ polyepoxy compounds which can be derived from a reaction between a linear polymer having a number average molecular weight of 500-50,000 and carboxyl group on one end thereof and an organoamino compound having one secondary amino group. The polyepoxy compounds have amine value of 5-200 mgKOH/g and a number average molecular weight of 1,000-100,000. It is also possible to employ, as the second resinous dispersing agent, polyallylamine derivatives which can be derived from a reaction between polyallyl amine and at least one kind of compound selected from a co-condensed product of polyester having free carboxyl group and amide, a co-condensed product (polyester amide) of polyamide having free carboxyl group and amide, and a co-condensed product (polyester amide) of ester and amide.

The following compounds can be also employed as the second resinous dispersing agent. Namely, they are polyester polymers which can be derived from a reaction between a compound having a number average molecular weight of 500-50,000 and carboxyl group on one end thereof and a compound having one secondary amino group and which have amine value of 5-200 mgKOH/g and a number average molecular weight of 1,000-100,000; and polyester polymers which can be derived from a reaction between polyester and acrylic polymer having tertiary amino group and/or a basic nitrogen-containing heterocyclic group and which have amine value of 10-200 mgKOH/g and a number average molecular weight of 1,000-100,000.

As for specific examples of the polyepoxy compound, they include, for example, polyglycidyl ether compounds such as ethyleneglycol diglycidyl ether, polyethyleneglycol diglycidyl ether, propyleneglycol diglycidyl ether, polypropyleneglycol diglycidyl ether, neopentylglycol diglycidyl ether, 1,6-hexanediol diglycidyl ether, glycelol polyglycidyl ether, trimethylolpropane polyglycidyl ether, diglycelol polyglycidyl ether, polyglycelol polyglycidyl ether, and sorbitol polyglycidyl ether. Further, it is also possible to employ glycidyl ester-containing acrylic polymer which can be derived from the copolymerization between glycidyl(metha)acrylate and a polymerizable vinyl monomer other than the glycidyl(metha) acrylate. In this case, methylmethacrylate and styrene can be employed as the aforementioned polymerizable vinyl monomer.

The mixing amount of the second resinous dispersing agent should preferably be confined within the range of 2 to 30% by weight based on the powder. If the mixing amount of the second resinous dispersing agent falls outside this range, it may become difficult to obtain a powder dispersion having a suitable degree of viscosity and being stable in dispersion. Namely, if the content of the second resinous dispersing agent is too small, the dispersion stability thereof

would be badly degraded. On the other hand, if the content of the second resinous dispersing agent is too large, the resultant dispersion would become viscous, thus deteriorating the delivery stability of ink especially when the ink is used by inkjet system. A preferable range of the amount of the second resinous dispersing agent may differ more or less depending on the kind of pigment or powder. For example, in the cases of blue pigment and black pigment, the mixing amount of the second resinous dispersing agent should preferably be confined within the range of 5 to 30% by weight, more preferably 10 to 20% by weight based on the weight of pigment. In the case of yellow pigment, the mixing amount thereof should preferably be confined within the range of 1 to 30% by weight based on the weight of pigment. The same can be said in the case of pigment dispersion as in the case of the powder dispersion. Namely, if the content of the second resinous dispersing agent is too small, the dispersion stability thereof would be badly degraded. On the other hand, if the content of the second resinous dispersing agent is too large, the resultant dispersion would become viscous, thus degrading the discharge stability of ink.

The dispersion according to one embodiment of the present invention further comprises an ionic compound. For example, an ionic compound containing a polyvalent salt acts to deteriorate the stability of colloid dispersion, thus giving rise to the generation of salting out and flocculation. When this ionic compound containing a polyvalent salt is incorporated directly in the pigment covered with the first resinous dispersing agent, the dispersion stability of the pigment particles would be considerably degraded. whereas, in the case of pigment dispersion according to one embodiment of the present invention, since the second resinous dispersing agent is included therein in addition to the first resinous dispersing agent, the ionic compound is enabled to react with this second resinous dispersing agent. As a result, a stable electric charge generates on the surface of the pigment, thus making it possible to obtain a stable pigment dispersion.

As for specific examples of this ionic compound, it is possible to employ the following compounds which are used for stabilizing the ink or used as a thickener, an anti-sagging agent or defoaming agent. More specifically, they include organic solvent-soluble salts or organic salts such as metal salts, carbonates, etc.; organic-inorganic salts such as metal soaps as a surfactant or a dispersing assistant; and organic solvent-soluble ammonium salts composed of an ammonium compound such as alkyl ammonium represented by an organic electrolyte, and an anion such as fluoroborate anion, hexafluoroantimonate anion, hexafluoroarsenate anion, trifluoromethane sulfonate anion, paratoluene sulfonate anion, perchlorate anion, halogen anion, sulfonate anion-containing compounds, carboxylate anion-containing compounds, etc.

This ionic compound can be included in a dispersion medium at an amount of 0.01% to 40% by weight based on a total of the dispersion on the occasion of manufacturing a powder dispersion. In the case of the pigment dispersion, this ionic compound can be included in a dispersion medium at an amount of 0.01% to 20% by weight, more preferably 1% to 20% by weight based on a total of the dispersion. In any case, if the mixing amount of the ionic compound is too small, it would be impossible to enable the ionic compound to exhibit a sufficient effect thereof. On the other hand, if the mixing amount of the ionic compound is too large, the stability of the resultant dispersion would be degraded, thus giving rise to the generation of re-aggregation.

The dispersion according to one embodiment of the present invention can be applied to a photo-curing type liquid ink, wherein an onium salt compound is suitably employed as a photo-acid generating agent which is capable of generating an acid as it is irradiated with light. Since this onium salt compound is a representative organic salt, it can be suitably employed as ionic compound in the dispersion.

As for the onium salts which are useful in this case, specific examples thereof include diazonium salts, phosphonium salts, sulfonium salts and iodonium salts having, as a counter ion, fluoroborate anion, hexafluoroantimonate anion, hexafluoroarsenate anion, trifluoromethane sulfonate anion, paratoluene sulfonate anion, paranitrotoluene sulfonate anion, halogen anion, sulfonate anion, carboxylate anion or sulfate anion. Among these salts, those whose anionic species is free from boron, antimony or arsenic are more preferable in view points of the stability of coloring material and of environmental consideration. Especially, fluoroborate anion is most preferable.

As for more specific examples of these onium salts, the compounds represented by the following chemical formulas can be employed.

FDS-105 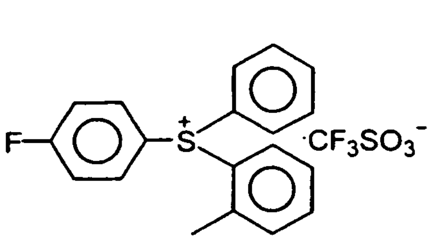

MDS-305 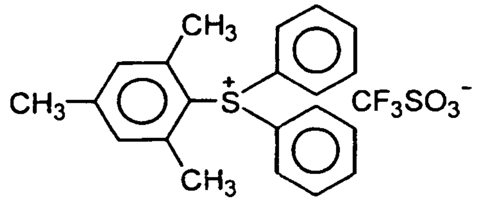

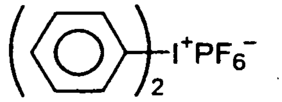

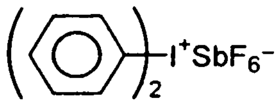

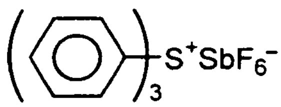

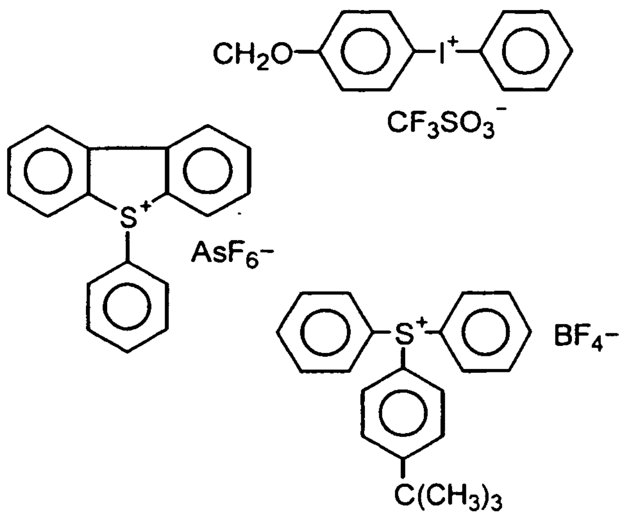

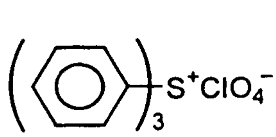

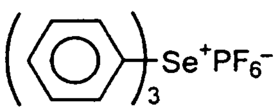

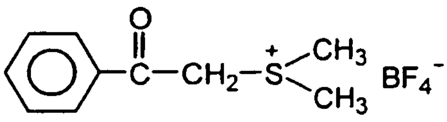

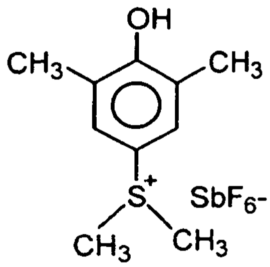

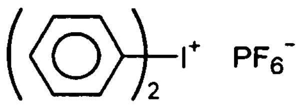

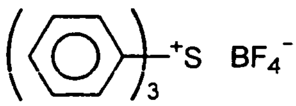

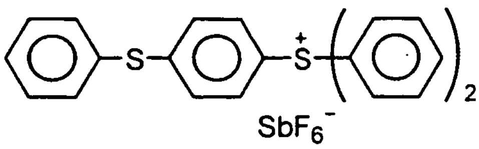

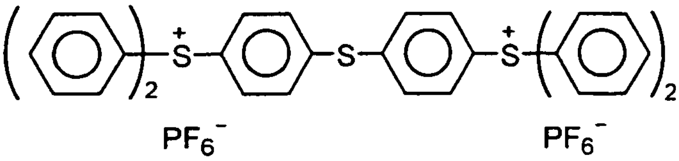

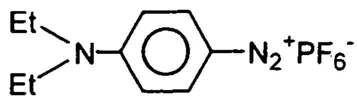

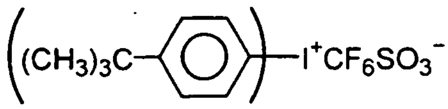

$[C_6H_5Fe^+C_6H_5]PF_6^-$

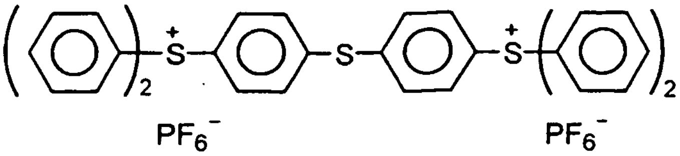

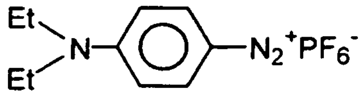

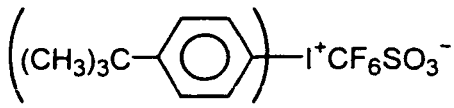

$[C_6H_5Fe^+C_6H_5]PF_6^-$

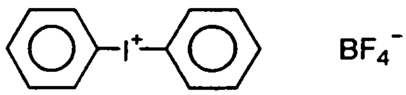

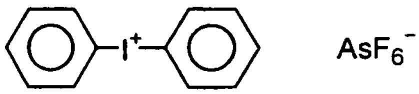

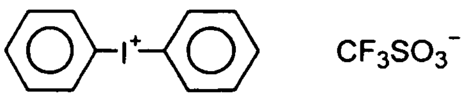

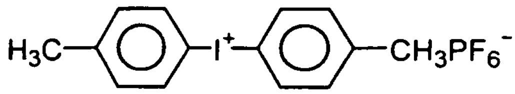

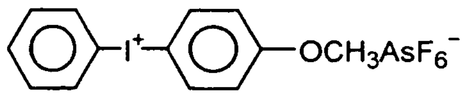

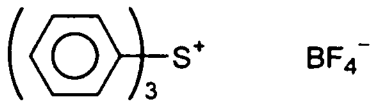

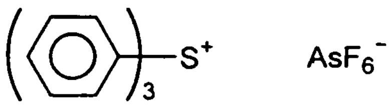

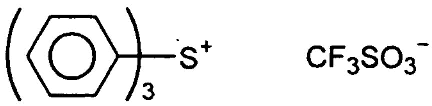

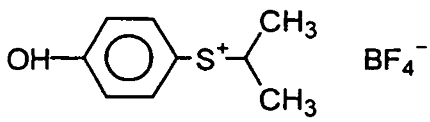

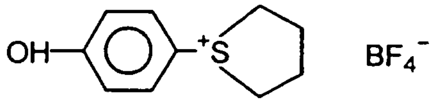

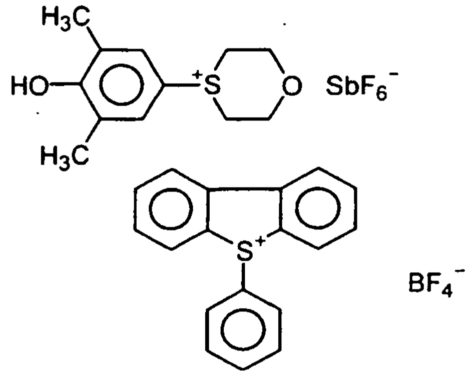

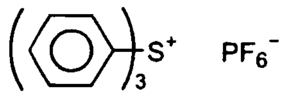

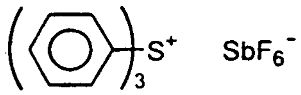

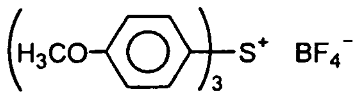

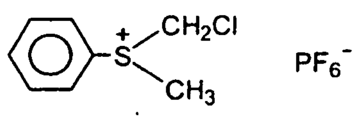

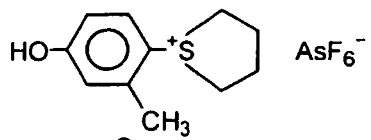

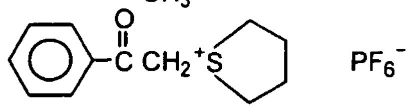

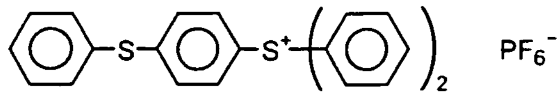

Specific examples of onium salts available in the market are, for example, MPI-103 (CAS.NO. [87709-41-9]; Midori Kagaku Co., Ltd.), BDS-105 (CAS.NO. [145612-66-4]; Midori Kagaku Co., Ltd.) NDS-103 (CAS.NO. [110098-97-0]; Midori Kagaku Co., Ltd.), MDS-203 (CAS.NO. [127855-15-5]; Midori Kagaku Co., Ltd.), DTS-102 (CAS.NO. [75482-18-7]; Midori Kagaku Co., Ltd.), DTS-103 (CAS.NO. [71449-78-0]; Midori Kagaku Co., Ltd.), MDS-103 (CAS.NO. [127279-74-7]; Midori Kagaku Co., Ltd.), MDS-105 (CAS.NO. [116808-67-4]; Midori Kagaku Co., Ltd.), MDS-205 (CAS.NO. [81416-37-7]; Midori Kagaku Co., Ltd.), BMS-105 (CAS.NO. [149934-68-9]; Midori Kagaku Co., Ltd.), TMS-105 (CAS.NO. [127820-38-6]; Midori Kagaku Co., Ltd.), UVACURE 1591 and 1590 (DAICEL UCB Co, Ltd.); UVI-6992 and 6976 (Dow Chemical Co., Ltd.), ESACURE-1064 (Lamberty Co., Ltd.); and IRGACURE 250 (Ciba-Geigy Co., Ltd.).

Among the aforementioned onium salts, sulfonium salt and iodonium salt are more excellent in stability. However, it is known that due to the process in the manufacture of these onium salts, these onium salts are unavoidably formed of a mixture comprising monovalent salt (a salt consisting of monovalent cation and one anion) and up to about 75% of not less than 2-valent salt (a salt consisting for example of bivalent cation and a couple of anions), so that the products of these onium salts available in the market are also formed of such a mixture of onium salts. Especially, sulfonium salt is more liable to be formed of such a mixture. It is known that when a multi-valent salt is included in the inkjet ink, the photosensitive wavelength of the ink is enabled to shift toward longer wavelength side, thereby generally rendering the ink to become higher in sensitivity. With a view to take advantage of this merit, a salt of not less than 2-valency is sometimes deliberately incorporated in the ink. UVACURE 1591 and 1590 (DAICEL UCB Co, Ltd.), UVI-6992 and 6976 (Dow Chemical Co., Ltd.) and ESACURE-1064 (Lamberty Co., Ltd.) are produced based on such a concept. However, multi-valent salts may badly affect the flocculation stability of the pigment dispersion to be used in the inkjet ink where especially fine particles are required. More specifically, the employment of multi-valent salts may lead to the generation of a weak linkage between pigment particles and a dispersant, thereby giving rise to the generation of gelling or flocculation. Therefore, the restriction of the presence of these multi-valent salts in inkjet ink to as minimum as possible would generally lead to the improvement of the dispersion stability of pigment as well as the discharge performance of inkjet ink.

Therefore, generally speaking, the content of multi-valent onium salt should preferably be confined to not more than 20% by weight based on a total weight of entire onium salts. More preferably, the content of multi-valent onium salt should be confined to not more than 5% by weight. Most preferably, multi-valent onium salt should not be included in

the inkjet ink.

Since fluorophosphates salt of aryl sulfonium and fluorophosphates salt of aryl iodonium are very excellent in enhancing flocculation stability of coloring pigments among the aforementioned onium salts, the employment of these fluorophosphates salts is preferable. Even in the case of monovalent onium salts, they are capable of gradually substituting, with time, for a terminal amine resin employed as a dispersant if the dispersant become insufficient. Therefore, it is desirable that onium salts should be constructed such that they cannot be easily moved into the joint portion between the surface of pigment and the terminal of dispersant. This can be realized by using an onium salt compound having in its structure a relatively large substituent group. Further, since the adsorption of ion onto the surface of pigment would be minimized by steric hindrance, the benzene ring in the onium salt should preferably have an organic group having 1 to 20 carbon atoms. It is more preferable that not less than 50% of benzene ring is provided with 4 to 20 carbon atoms. If the benzene ring is regulated in this manner, the scattering of decomposed matters into air would be suppressed during the photo-reaction in addition to the improvement of dispersion stability, thereby making it possible to enhance the safety. Further, since these compounds are more excellent in solubility to a solvent, the phenomenon of the precipitation of salts in the ink can be also suppressed. Still more, the generation of particles several microns in size that may become a cause for discharge failure can be advantageously minimized.

When a monovalent onium salt is employed, the photosensitive wavelength is caused to shift toward the short wavelength side, thereby inclining the photosensitivity thereof to degrade. The inclusion, in the structure of onium salt, of aromatic substituent group having sulfur or oxygen atom, both being VI elements, in a heterocyclic ring or as an interconnecting group is desirable in overcoming the aforementioned problem.

An onium salt comprising a relatively large organic group in its structure as shown in the following general formula (1) or (2) is advantageous in the respects that it is excellent in dissolution stability and dispersion stability.

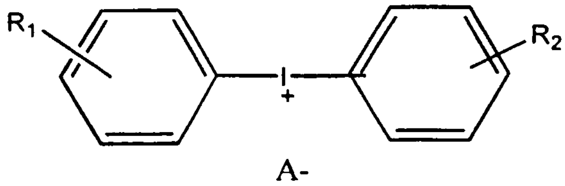

(1)

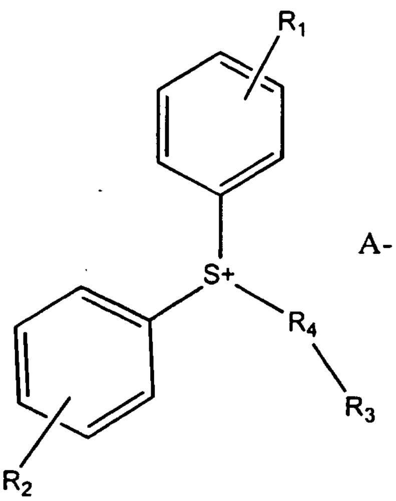

(2)

Herein, A- is fluorophosphate anion; $R_1$, $R_2$ and $R_3$ may be the same or different and at least one of them is an organic group having 4 to 20 carbon atoms and the rest are an organic group having 1 to 20 carbon atoms and including hydrogen atom; and $R_4$ is a bivalent aromatic substituent group or a bivalent aromatic substituent group containing a VI atom therein.

As for specific examples of the organic group to be introduced into $R_1$, $R_2$ and $R_3$, they include alkyl group

having 4 to 20 carbon atoms such as propyl, butyl, hexyl, heptyl, octyl, nonyl, decanyl, etc.; alkyloxy group having 4 to 20 carbon atoms such as propyloxy, butyloxy, hexyloxy, heptyloxy, octyloxy, nonyloxy, decanyloxy, etc.; and a substituent group having 4 to 20 carbon atoms and polyethylene oxide skeleton where ethylene glycol is dehydrocondensed.

As for specific examples of the bivalent aromatic substituent group to be introduced into $R_4$, they include a group having a phenylene skeleton such as phenylene and biphenylene; a group having a phenylene sulfide skeleton such as phenylene sulfide and phenylene disulfide; a group having a thiophene skeleton such as benzothiophenylene, thiophenylene and bithiophenylene; and a group having a furan skeleton such as furanylene and benzofuranylene.

The aforementioned onium salts are known to suppress the generation of harmful by-product such as benzene during the process of photo-reaction. When a dispersion containing these onium salts is employed as an inkjet ink, it would become very advantageous in terms of environment and safety.

The aforementioned powder or pigment, a polymer dispersing agent containing the first and second resinous dispersing agents, and an ionic compound are incorporated into a dispersing medium to obtain a dispersion. The dispersion thus obtained is diluted with an inkjet ink solvent and mixed with additives to prepare the inkjet ink according to one embodiment of the present invention. The dispersing medium for preparing the dispersion should preferably be the same as the solvent to be employed for preparing the inkjet ink. Under a certain circumstance, a low boiling point solvent may be employed as a dispersing medium for the dispersion and then a solvent for preparing the inkjet ink may be added thereto, the low boiling point solvent being subsequently removed. The solvent for the inkjet ink may be selected from an ordinary solvent for oil ink and a solvent for radical polymerization type ink. However, the employment of cation polymerization type (chemical amplification type) solvent is more preferable since it will make it useful not only as a photo-acid generating agent but also as an ionic compound.

Incidentally, the term "inkjet ink" herein means an ink which is fluid at the ordinary temperature, more specifically an ink having a viscosity of not higher than 50 cp (=mPa·s), more preferably not higher than 30 mPa·s at a temperature of 25°C and adapted for use in an inkjet system. Further, when the head of inkjet is temperature-controllable, it is more preferable to employ an ink whose viscosity at the controlled temperature of the head is within the range of 5 to 20 mPa·sec.

In the followings, although the dispersing medium for the dispersion will be mainly discussed, the solvent for the inkjet ink will be also explained. As for the dispersing medium according to one embodiment of the present invention, the employment of a compound which is capable of polymerizing in the presence of an acid to be employed in a photo-curing type cation inkjet ink is most preferable. However, even if a solvent which is adapted for use in other kinds of photo-curing type inkjet ink or in the ordinary oil inkjet ink, or various kinds of organic solvent (intermediate solvent) which are adapted for use in a solid inkjet ink or in an intermediate process for the manufacture of ink are employed, it is possible to obtain a desirable dispersion where pigment particles are stably dispersed. The oil ink prepared using this desirable dispersion would be advantageous since discharge error of ink can be minimized. As for the intermediate solvent, it is possible to employ, for example, a low boiling point organic solvent such as methylethyl ketone, acetone, and xylene. As for the solvent for oil ink, it is preferably to employ those which are capable of exhibiting some degree of solubility to organic salt compounds and capable of giving an ink having a viscosity of 5-20 mPa·sec. at a regulated temperature of the head of inkjet (35-60°C in general). In the case of the solid inkjet ink, it is preferable to employ a solvent which is capable of exhibiting some degree of solubility to organic salt compounds and also capable of giving an ink exhibiting a fluidity of about 100 mPa·s or less at a temperature of not higher than 50°C.

Examples of such a solvent are monohydric or polyhydric alcohols having a relatively large number of carbon atom and esterified/etherified compounds thereof; polyether compounds having a terminal alcohol such as an adduct of ethylene glycol or propylene glycol such as poly(ethylene glycol); aliphatic compounds having a relatively large number of carbon atom; and esters such as lactate.

More specific examples thereof include monoether or diether of monohydric alcohols (such as decanol, dodecanol, oleyl alcohol, stearoyl alcohol, hexadecanol, eicosanol), of polyhydric alcohols (for example, ethylene glycol, diethylene glycol (DEG), triethylene glycol, propylene glycol, tetraethylene glycol, polyethylene glycol, glycerol, 2-methyl-2,4-pentadiol, 2-ethyl-2-hydroxymethyl-1,3-propanediol (EHMP), 1,5-pentadiol, 1,2-hexanediol, 1,2,6-hexanetriol and thioglycol), or of lower alkyl that can be derived from alkylene glycol (for example, monomethyl ether or monoethyl ether of ethylene glycol, monomethyl ether or monoethyl ether of diethylene glycol, monomethyl ether or monoethyl ether of propylene glycol, monomethyl ether or monoethyl ether of triethylene glycol, dimethyl ether or diethyl ether of diethylene glycol, monobutyl ether of polyethylene glycol (PEGMBE), and monobutyl ether of diethylene glycol (DEGMBE)); nitrogen-containing compounds (for example, urea, 2-pyrrolidinone, N-methyl-2-pyrrolidinone, and 1,3-dimethyl-2-imidazolidinone); and sulfur-containing compounds (for example, dimethyl sulfoxide, and tetramethylene sulfoxide).

As for specific examples of paraffin hydrocarbon solvent, they include normal paraffin hydrocarbon such as octane, nonane, decane, dodecane, etc.; isoparaffin hydrocarbon such as isooctane, isodecane, isododecane, etc.; and cycloparaffin hydrocarbon such as cyclohexane, cyclooctane, cyclodecane, decalin, etc. As for the products available in the market, they include Isoper E, Isoper G, Isoper H, Isoper M, Exxol D130, Exxol D140 (all available from EXXON Chemicals Co., Ltd.); Shellsol (Shell Oil Co., Ltd.); Soltrol (Philips Oil Co., Ltd.); Begasol (Mobile Petroleum Co., Ltd.); IP Solvent 2835 (Idemitsu Petrochemicals Co., Ltd.); Molesco White P-40 and Molesco White P-55 (all available from

Muramatsu Petroleum Research Co., Ltd.); Liquid Paraffin No. 40-S and Liquid Paraffin No. 55-S (all available from Chuo Kasei Co., Ltd.).

Among these compounds, those which are relatively low in boiling point can be employed in a solvent type ink, and those having a boiling point of 200°C or more and low in volatility are suited for use in an oil ink. In the case of the solid inkjet ink, those which are extremely low in fluidity at normal temperature can be selected from the aforementioned compounds and employed therein.

Depending on the kinds of printing medium to which ink is applied, the following penetrating solvents or solvents which are high in volatility may be additionally incorporated into the ink. For example, it is possible to employ low molecular alcohols (for example, methyl alcohol, ethyl alcohol, n-propyl alcohol, isopropyl alcohol, n-butyl alcohol, s-butyl alcohol, t-butyl alcohol, isobutyl alcohol, furfuryl alcohol and tetrahydrofurfuryl alcohol); ketone or keto-alcohols (for example, acetone, methylethyl ketone and diacetone alcohol); ethers (for example, tetrahydrofuran and dioxane); and esters (for example, ethyl lactate, ethylene carbonate and propylene carbonate). These solvents can be used in a solvent type ink.

As described above, the compounds which are polymerizable in the presence of an acid are most preferable for use as a dispersion medium according to one embodiment of the present invention, since a photo-acid generating agent and an ionic compound can be co-used as constituting components of ink. When these compounds are employed, it is possible to manufacture a printed matter which is high in photosensitivity and adhesion. Therefore, the dispersion may be substantially formed of a polymerizable compound having such features. This expression of "solvent is substantially formed of a polymerizable compound" is intended to include not only a situation wherein "solvent is formed of only a polymerizable compound" but also a situation wherein "solvent is formed of a polymerizable compound and a minute amount of impurities which are unavoidably intermingled in the solvent". This "a minute amount of impurities which are unavoidably intermingled in the solvent" may be existed in the solvent at a concentration of, at most, not more than 10% by weight based a total weight of the solvent. More preferably, the content of "impurities which are unavoidably intermingled in the solvent" should be confined to not more than 5% by weight in general. If the content of impurities exceeds this upper limit, i.e. 10% by weight, substantial residual dispersion medium may fly into air atmosphere, raising the problem of environmental safety or residual dispersion may remain inside a cured material, thus degrading the curing property of the ink.

The compounds which are polymerizable in the presence of an acid should preferably be selected from those singly exhibiting a fluidity of about 100 mPa·s or less at a temperature of 50°C. Specific examples thereof include compounds 1000 or less in molecular weight and having a cyclic ether group such as epoxy group, oxetane group and oxorane group; acrylic or vinyl compounds having the aforementioned substituent groups on their side chain; carbonate compounds; low molecular melamine compounds; vinyl ethers; vinyl carbazoles; styrene derivatives; alpha-methylstyrene derivatives; vinyl alcohol esters including esters of vinyl alcohol with acryl or methacryl; and monomers having a cation polymerizable vinyl bond. These compounds may be employed in combination of two or more kinds.

There is not any particular limitation with respect to the viscosity of the powder dispersion and of the pigment dispersion according to one embodiment of the present invention. In order to apply the powder dispersion and the pigment dispersion to the inkjet, these dispersions should preferably be diluted to have a viscosity of not more than several hundreds mPa·sec at a temperature of 25°C, thereby rendering these dispersions to have a realistic viscosity for producing an ink having a viscosity ranging from 5 to 20 mPa·sec at a regulated temperature of the head.

There is not any particular limitation also with respect to the viscosity of the dispersion medium. In order to apply the dispersion medium to the inkjet where the ink thereof is required to be low in viscosity in particular, the dispersion medium should be selected from the compounds (or mixtures of compounds) having a viscosity of not more than 300 mPa·sec at a temperature of 25°C and a boiling point of not less than 150°C at 1 atm. When the upper limit of viscosity of the dispersion medium is limited in this manner, it is possible to enhance the dispersibility of pigment particles and to provide it with a sufficient fluidity. Further, when the lower limit of viscosity of the dispersion medium is limited in this manner, it is possible to minimize, as low as possible, the content of malignant volatile components which might be included in the dispersion. When the viscosity of the dispersion medium exceeds 300 mPa·sec, the stability of dispersion would be degraded and, at the same time, the normal discharge of ink from the nozzle would become difficult when the dispersion is worked into an inkjet ink in particular.

When the polymerizable compound which can be polymerized in the presence of an acid contains an aliphatic skeleton or an alicyclic skeleton, it is possible, when the polymerizable compound is employed together with other kinds of components, to enhance the transparency of inkjet ink as it is exposed to light. As a result, it is possible to provide an ink layer with appropriate thermoplasticity and resolubility after the curing of the ink layer. Therefore, various properties such as sensitivity, fixing property, transferability and maintenancing property can be enhanced. Especially, when the polymerizable compound is formed of an epoxy compound having an alicyclic skeleton, it is possible to provide the ink with not only higher boiling point but also lower viscosity to some degree in addition to the reactivity.

When the acid-polymerizable compound is formed of an epoxy compound, it is possible to employ a compound having a hydrocarbon group having a bivalent aliphatic or alicyclic skeleton each having 1 to 15 carbon atoms wherein epoxy or alicyclic epoxy group is attached to at least one of the terminals of the hydrocarbon group. It is also possible

to employ a compound having a bivalent group comprising an aliphatic chain or an alicyclic skeleton wherein epoxy or alicyclic epoxy group is attached to at least one of the terminals of the bivalent group.

When an epoxy compound satisfying the aforementioned conditions is employed as a solvent and included in a solvent for inkjet ink at an amount of at least 40 parts by weight, it is possible to secure sufficient effects thereof. Incidentally, if the solvent is to be constituted solely by the epoxy compound, the content of the epoxy compound should preferably be not less than 30% by weight, more preferably not less than 40% by weight based on the entire weight of inkjet ink. If the content of the epoxy compound is less than 30% by weight, the clogging of nozzle may generate.

Although there is not any particular limitation with regard to the number of epoxy group to be introduced into the molecular skeleton of the epoxy compound, it is preferable that the number of valence is limited to around 2 to 3 at most in order to provide an ink layer with flexibility and resolubility after the curing thereof. Specific examples of such an epoxy compound include the compounds that can be represented by following general formulas (3) or (4).

$$R^{21}\text{-}A^{21}\text{-}R^{22} \qquad (3)$$

$$R^{23}\text{-}A^{22} \qquad (4)$$

In these general formula (3) and (4), $R^{21}$, $R^{21}$ and $R^{22}$ represent individually epoxy group or epoxy group having an alicyclic skeleton; $A^{21}$ and $A^{22}$ represent individually a functional group.

The epoxy compounds represented by the general formula (3) or (4) generally have a viscosity ranging from 1 to 300 mPa·sec.

The epoxy compounds represented by the aforementioned general formula (3) or (4) may be employed together with an epoxy compound to be represented by the following general formula (5). The epoxy compounds represented by the following general formula (5) generally have a viscosity of as high as 20 mPa·sec to 1000 mPa·sec or so. Therefore, the employment of the epoxy compounds represented by the following general formula (5) are useful in giving flexibility or ultimate hardness to the ink layer after the curing thereof.

$$R^{24}\text{-}A^{23}\text{-}\,(R^{25})_k \qquad (5)$$

In the general formula (5), $R^{24}$ and $R^{25}$ represent individually epoxy group or epoxy group having an alicyclic skeleton; and $A^{23}$ represents (k+1)-valent functional group having at least alkylene group and/or an alicyclic skeleton (k is a natural number).

For example, if 40 to 90 parts by weight of a low viscosity epoxy compound (15 mPa·sec or less) and 10 to 50 parts by weight of a high viscosity epoxy compound (more than 15 mPa·sec), both based on 100 parts by weight of liquid ink, are incorporated into inkjet ink, it is advantageous in realizing as lowest fluidity as necessary for the discharge of ink (a viscosity of 20 mPa·sec or less at a temperature of 50°C). It is especially desirable to limit the weight ratio between the low viscosity epoxy compound and the high viscosity epoxy compound to the range of 1:1 to 10:1. By doing so, it is possible to obtain a liquid ink provided with properties such as a viscosity suitable for the discharge of ink, photo-curability, thermoplasticity and re-solubility.

As long as the quantity is limited, a compound which is relatively high in viscosity such as those which are solid at normal temperature for example may be incorporated into the dispersing medium, thus constituting part of the dispersing medium. When such a component is included in the dispersing medium, the dispersibility of pigment particles can be further enhanced and, at the same time, the flexibility of ink layer after the curing thereof can be enhanced. Further, when a compound which is relatively large in valence and high in reactivity is employed in this case, the hardness and solvent resistance of cured matter can be enhanced. Specific examples of such a compound include compounds 5000 or less in molecular weight and having a cyclic ether group such as epoxy group, oxetane group and oxorane group for instance; acrylic or vinyl compounds having the aforementioned substituent groups on their side chain; carbonate compounds; low molecular melamine compounds; a monomer having a vinyl linkage which is capable of effecting cation polymerization such as vinyl ethers, vinyl carbazoles, styrene derivatives, alpha-methylstyrene derivatives, and vinyl alcohol esters including esters of vinyl alcohol with acrylic or methacrylic acid; and a oligomer to be obtained from the polymerization of at least one kind of the aforementioned monomers.

Further, the dispersing medium may contain the following compounds in addition to the aforementioned components. Namely, they include a homopolymer or copolymer of vinyl alcohol; resins containing acid-reactive and dehydrocondensing OH group, COOH group, acetal group, etc. and having a molecular weight of 5000 or less such as casein and cellulose; polycarbonate resins having a molecular weight of 5000 or less; copolymers to be derived from a reaction between polyamic acid, polyamino acid or acrylic acid and a vinyl compound having an acid-polymerizable double bond on its side chain; copolymers to be derived from a reaction between vinyl alcohol and a vinyl compound having an acid-polymerizable double bond on its side chain; methylolated melamine compound; and polymers (ester oligomers) having terminal hydroxyl group.

When it is desired to prepare an inkjet ink having the following specific composition in particular, at least 50 parts by weight of the solvent should be formed of an acid-polymerizable compound provided with an alicyclic skeleton and/or an aliphatic skeleton and having a viscosity of not higher than 20 mPa·s and a boiling point of not lower than 150°C under normal temperature and normal pressure. More specifically, a photo-acid generating agent should be included in the ink at an amount of 1 to 10 parts by weight based on 100 parts by weight of the acid-polymerizable compound, and a pigment should be employed as a coloring component. In this case, a portion of the carbon atoms of aliphatic skeleton and/or alicyclic skeleton may be oxidized or substituted by oxygen atom.

Although there is not any particular limitation with regard to the number of epoxy group to be introduced into the molecular skeleton of the acid-polymerizable compound having an aliphatic skeleton and/or an alicyclic skeleton, it is preferable that the number of valence is limited to around 2 to 3 at most in order to provide an ink layer with flexibility and resolubility after the curing thereof. Generally, these acid-polymerizable compounds are formed of a mixture comprising a compound having a viscosity of as low as 1 mPa·s to 30 mPa·s and a compound having a viscosity which is equivalent to or higher than the aforementioned range. However, if these low viscosity compounds are excessively included in the ink, the discharge of inkjet ink may be disturbed or the volatility of ink may be increased. Therefore, the content of these low viscosity compounds should preferably be limited to 90% by weight at most.

On the other hand, in viewpoint of safety, it is preferable, when aliphatic epoxy compounds are to be employed, to select from those having a relatively large number of carbon atom and a relatively high molecular weight since such compounds are relatively low in mutanogenicity. Because of the same reason, it is preferable to mainly employ epoxy compounds having an alicyclic skeleton which is relatively low in mutanogenicity.

As for examples of the alicyclic epoxy compound, they include limonene(di)oxide, oxabicycloheptane, α-pinene oxide, (3,4'-epoxycyclohexane)methyl-3,4-epoxycyclohexane carboxylate, 4-vinylcyclohexene-1,2-epoxide, and substituted compounds thereof. As for the epoxy compound having an aliphatic skeleton, it is possible to employ compounds having at least one glycidyl ether group in the aliphatic skeleton having at least two carbon atoms such for example as neopentylglycol diglycidyl ether, ethyleneglycol diglycidyl ether, glycerol di(tri)glycidyl ether, 1,6-hexanediol diglycidyl ether, and decaneglycidyl ether. Further, it is also possible to employ hydrogenated bisphenol A, novolac, and glycidyl-etherified bisphenol. However, since these compounds are generally high in viscosity, it is more preferable to employ these epoxy compounds in combination with an epoxy compound which is lower in viscosity.

As for specific examples of the aforementioned epoxy compounds which are available in the market, they include alicyclic epoxy compounds such as Celloxide 2021, Celloxide 2021A, Celloxide 2021P, Celloxide 2081, Celloxide 2000 and Celloxide 3000 (all available from DAICEL Chemical Industries Ltd.); (metha)acrylate compounds having epoxy group such as Cyclomer A200 and Cyclomer M100; methacrylate having methylglycidyl group such as MGMA; glycidol representing a low molecular epoxy compound; β-methylepichlorohydrin; α-pinene oxide; α-olefin monoepoxide having 12 to 14 carbon atoms; α-olefin monoepoxide having 16 to 18 carbon atoms; epoxidized soy bean oil such as Dimac S-300K; epoxidized linseed oil such as Dimac L-500; and polyfunctional epoxy compounds such as Epolead GT301 and Epolead GT401.

It is also possible to employ alicyclic epoxy compounds (such as Cylacure; Dow Chemical Co., Ltd, U.S.); low molecular weight phenol compounds which are hydrogenated and aliphatized with terminal hydroxyl group thereof being substituted by a group having epoxy; glycidyl ether of polyhydric aliphatic alcohol/alicyclic alcohol such as ethylene glycol, glycerin, neopentyl alcohol, hexanediol and trimethylol propane; glycidyl esters of hexahydrophthalic acid; and glycidyl esters of hydrogenated aromatic polyhydric carboxylic acid.

Further, in order to improve the chemical resistance of the printed image, the ink may include a transparent liquid epoxy resin excellent in weathering resistance and high in Tg. Specific examples of such a resin include epoxidized polybutadiene such as Epolead PB3600 and PB3600M (trademark, DAICEL Chemical Industries., Ltd.); EHPE3150; and EHPE3150CE (trademark, DAICEL Chemical Industries., Ltd.). In addition to these epoxy resins, it is also possible to incorporate lactone-modified alicyclic epoxy resin, examples of which including Placell GL61, GL62, G101, G102, G105, G401, G402, G403X (trademark, DAICEL Chemical Industries., Ltd.), etc.

Among these compounds, Celloxide 2000, Celloxide 3000, and glycidyl ether to be derived from the modification of α-pinene oxide, ethylene glycol, glycerine, neopentyl alcohol or hexanediol are more preferable in viewpoints of viscosity and volatility. In particular, limonene dioxide (Celoxide 3000; product name) and α-pinene oxide to be obtained from a natural material as a starting material are also preferable in viewpoints of viscosity and reactivity.

The properties demanded of printed matter may vary depending on the application thereof. For example, when the printed matter is to be employed for the outer package of can or PET bottle or for the outer package of container made of an oily material, the printed matter is required to be excellent in solvent resistance and in adhesion. In order to cope with such situations, a compound having phenolic hydroxyl group such as glycidyl ether compound of bisphenol A; glycidyl ether compound of phenolic oligomer such as phenol novolac and polyhydroxy styrene; or ordinary aromatic epoxy compound such as styrene oxide may be incorporated in the ink at a suitable ratio as mentioned above in addition to the aforementioned alicyclic epoxy compound and aliphatic epoxy compound.

Further, in a situation where high speed printing of several tens meters per minute for example is demanded

and where the resistance to solvent is also required, it is possible to overcome such a situation by using an oxetane compound as a solvent which can be polymerized by an acid. When aromatic oxetane compound is employed as a major component however, the viscosity of the inkjet ink may be remarkably increased. In order to overcome such a problem, it is preferable to incorporate an aliphatic or alicyclic oxetane compound. These oxetane compounds may be formed of a (poly)alkylene oxide structure or oxorane structure containing ether linkage in part of the aliphatic chain or alicyclic structure thereof. With respect to mixing amount of the aromatic oxetane compound, it is preferable, in view of viscosity as desired, to employ it at an amount of 0 to 40% by weight.

However, if a printed matter is required to be resistive to a solvent of high solubility, the mixing amount of the aromatic oxetane compound may be increased over the aforementioned range. Since the viscosity of ink increases due to this increased content of the oxetane compound, it is desirable to employ it in combination with a low viscosity compound such as a low viscosity epoxy compound, a compound having oxetane on the acrylic side chain or a vinyl ether compound.

As for the bivalent or multivalent aliphatic or alicyclic oxetane compounds, specific examples thereof include compounds having an alicyclic group into which at least one oxetane-containing group is introduced such as di[1-ethyl (3-oxetanyl)] methyl ether, 3- ethyl-3-(2-ethylhexyloxymethyl) oxetane, [(1-ethyl-3-oxetanyl)methoxy] cyclohexane, bis[(1-ethyl-3-oxetanyl)methoxy] cyclohexane and bis[(1-ethyl-3-oxetanyl)methoxy] norbornane. It is also possible to employ ether compounds comprising aliphatic polyhydric alcohol such as ethylene glycol, propylene glycol and neopentyl alcohol, to which oxetane-containing alcohol such as 3-ethyl-3-hydroxymethyl oxetane is dehydrocondensed.

Specific examples of the oxetane compounds comprising an aromatic skeleton include 1,4-bis[(1-ethyl-3-oxetanyl)methoxy] benzene, 1,3-bis[(1-ethyl-3-oxetanyl)methoxy] benzene, 4,4'-bis[(3-ethyl-3-oxetanyl)methoxy] biphenyl, and phenol novolac oxetane.

Among these compounds, [(1-ethyl(3-oxetanyl)] methyl ether is more preferable for use since this compound is low in viscosity. The employment of acrylic compound or methacrylic compound having oxetane group on their side chain is also effective in suppressing the increase of viscosity and in obtaining effect of accelerating the curing of ink as in the case of oxetane compound.

In order to enhance cure hardness and to lower the viscosity of ink in addition to the enhancement of curing speed and solvent resistance of printed images, it is preferable to incorporate a vinyl ether compound. As for specific examples of such a vinyl ether compound, it is possible to employ a well known vinyl ether compound which has a poly (alkylene glycol) skeleton and is relatively low in volatility. This vinyl ether compound however tends to lower the hardness of cured material. Therefore, in order to provide a printed matter with a desirable cure hardness, it is preferable to incorporate vinyl ether compounds represented by the following general formula (6) into the inkjet ink. These vinyl ether compounds may be employed singly or in combination of two or more kinds.

$$R^{13}\text{-}R^{14}\text{-}(R^{13})_p \qquad (6)$$

Wherein $R^{13}$(s) is a substituent group selected from vinyl ether group and hydroxyl group wherein at least one of $R^{13}$(s) is a group having a vinyl ether skeleton; $R^{14}$ is a group of (p+1) valency selected from an alicyclic skeleton, a cyclic ether compound, terpenoid skeleton and an aromatic skeleton; and p is a positive integer including zero.

Generally, a vinyl ether compound which is bonded to methylene group of aliphatic glycol derivatives or of cyclohexane dimethanol is well known. Since the polymerization reaction of this vinyl ether compound is greatly obstructed by the presence of pigment, it has been considered difficult to incorporate it as a component for ink. Whereas, in the case of vinyl ether compounds represented by the aforementioned general formula (6), at least one vinyl ether group is directly bonded to an alicyclic skeleton, a cyclic ether compound, terpenoid skeleton or an aromatic skeleton, so that even if this vinyl ether compound is included in ink together with pigment, the resultant ink would indicate excellent curing properties.

These vinyl ether compounds may be used in combination with the aforementioned epoxy compounds or oxetane compounds. Alternatively, an acid-polymerizable compound to be employed as a solvent may be entirely constituted by this vinyl ether compound.

As for the specific examples of the (p+1)-valent organic group $R^{14}$ in the aforementioned general formula (6), it is possible to employ a (p+1)-valent group including benzene ring, naphthalene ring and biphenyl ring, and a (p+1)-valent group that can be derived from an alicyclic compound such as cycloalkane skeleton, norbornane skeleton, adamantane skeleton, tricyclodecane skeleton, tetracyclododecane skeleton, terpenoid skeleton and cholesterol skeleton.

More specifically, the specific examples of such vinyl ether compounds include compounds comprising alicyclic polyol or phenol derivatives such as cyclohexane (poly)ol, norbornane (poly)ol, tricyclodecane (poly)ol, adamantane (poly)ol, benzene (poly)ol, naphthalene (poly)ol, anthracene (poly)ol and biphenyl (poly)ol, wherein hydrogen atom of the hydroxyl group in these polyols is substituted by vinyl group. It is also possible to employ a compound consisting of a polphenol compound such as polyvinyl phenol or phenol novolac wherein hydrogen atom of the hydroxyl group thereof is substituted by vinyl group. There will be no problem even if these compounds mentioned above are such that some

of hydroxyl groups are left remained or methylene group constituting the alicyclic skeleton is partially substituted or oxidized by ketone group, lactone or oxygen atom. These compounds may be preferable, since the volatility thereof can be minimized.

Especially, since cyclohexyl monovinyl ether compound is highly volatile, at least cyclohexane ring thereof should preferably be oxidized into cyclohexanone ring if cyclohexyl monovinyl ether compound is to be employed.

Among these compounds, a cyclic ether compound having a substituent group containing a vinyl ether structure is more preferable. In terms of curability and safety, a cyclic ether skeleton having not only five-membered ring skeleton but also a crosslinking structure or spiro structure is most preferable. Such a vinyl ether compound can be synthesized by using a method wherein a corresponding alcohol compound and vinyl ether source such as vinyl acetate or propenyl ether are employed as starting materials and the alcohol is substituted so as to form vinyl ether by using a catalyst such as iridium chloride (J. Am. Soc. vol. 124, No. 8, 1590-1591(2002)).

Among these compounds mentioned above, epoxy compounds, oxetane compounds and vinyl ether compounds each having a skeleton found abundantly in nature such as terpenoid skeleton or norbornane skeleton are more preferable in view of cost.

As for the dispersing medium to be employed according to one embodiment of the present invention, it is possible to employ a radically polymerizable compound other than ordinary solvents for oil ink and photo-cation polymerizable compounds. This radically polymerizable compound can be mixed with a photo-racidal generating agent so as to employ it as a solvent for a photo-curable inkjet ink.

As for the radically polymerizable compound, it is possible to employ generally known acrylic or methacrylic ester compounds of monool or polyol for example. As for the monoacrylate, an acrylate or methacrylate compound having terpenoid skeleton attached to the ester side chain thereof can be preferably employed since these monoacrylate compounds are excellent in safety.

For example, acrylic compounds disclosed in JP Patent Laid-open Publication (Kokai) 08-82925 (1996) can be suitably employed as monomers. As for specific examples of such acrylic ester compounds and methacrylic ester compounds, they include ester compounds which can be obtained by epoxidizing the double bond of terpen having an unsaturated linkage and then acrylic acid or methacrylic acid is added thereto, wherein specific examples of terpen include myrcene, carene, ocimene, pinene, limonene, camphene, terpinolene, tricyclene, terpinene, fenchene, phellandrene, sylvestrene, sabinene, dipentene, bornene, isopregol, carvone, etc. Alternatively, it is also possible to employ ester compounds to be derived from acrylic acid or methacrylic acid and alcohols originated from terpene such as citronellol, pinocampheol, geraniol, phentyl alcohol, nerol, borneol, isoborneol, linalol, menthol, terpineol, thujyl alcohol, citroneral, ionone, irone, cinerol, citral, pinol, cyclocitral, carvomenthone, ascaridole, safranal, piperithol, menthenemonol, dihydrocarvone, carveol, sclareol, manool, hinokiol, ferruginol, totarol, sugiol, farnesol, patchouli alcohol, nerolidol, carotol, cadinol, lantheol, eudesmol, phytol, etc. It is also possible, additionally for the purpose of improving the adhesion, to employ alkyl acrylate, hydroxyethyl acrylate, or ordinary acrylate or methacrylate compounds such as acrylate having alicyclic epoxy group attached to its side chain.

In order to enhance the reactivity of the aforementioned monomers, it is possible to employ also polyfunctional acrylates. For example, it is possible to employ polyacrylate compounds of polyhydric alcohol compounds, polyacrylate compounds of polyhydric aromatic alcohols, polyacrylate compounds of polyhydric alicyclic alcohols, and styrene compounds having a substituent group. As for the specific examples of such monomers, they include, for example, di- or polyacrylate compounds of ethylene glycol, polyethylene glycol, propylene glycol, glycerin, neopentyl alcohol, trimethylol propane, pentaerythritol, and vinyl alcohol-based oligomers; urethane acrylate compounds; di- or polyacrylate compounds of phenol, cresol, naphthol, bisphenol, novolac-based condensation compounds of these aromatic alcoholic compounds, and vinyl phenolic oligomers; and di- or polyacrylate compounds of di- or polyhydroxyl compounds where these alcohols are hydrogenated, such as cyclohexane, hydrogenated bisphenol, decahydronaphthalene alicyclic compounds, terpene-based alicyclic compounds, dicyclopentane and tricyclodecane-based alicyclic compounds. It is also possible to suitably employ compounds where a group containing vinyl ether is substituted for an acrylate moiety of the aforementioned compounds.

As for specific examples of dihydric acrylate, the following compounds can be employed. Namely, they include, for example, 1,4-butane diol diacrylate, 1,6-hexane diol diacrylate, 1,9-nonane diol diacrylate, 2-n-butyl-2-ethyl-1,3-propane diol diacrylate, dipropylene glycol diacrylate, tripropylene glycol diacrylate, tetraethylene glycol diacrylate, triethylene glycol diacrylate, 3-methyl-1,5-pentane diol diacrylate, a mixture of 2-methyl-1,8-octane diol diacrylate and 1,9-nonane diol diacrylate, dimethylol tricyclodecane diacrylate, hydroxypivalic acid neopentylglycol diacrylate, polytetramethylene glycol diacrylate, trimethylol propane triacrylate, pentaerythritol triacrylate, trimethylol propane EO-added triacrylate, EO-modified trimethylolpropane triacrylate, caprolactone-modified trimethylolpropane triacrylate, glycerin PO-added triacrylate, glycerin propoxy triacrylate, tris-acryloyloxyethyl phosphate, pentaerythritol tetraacrylate, pentaerythritolethoxy tetraacrylate, polyethylene glycol diacrylate, and urethane acrylate.

Further, the following products can be also employed. Namely, they include V#195, V#230, V#260, V#265, V#310HP, V#335HP, V#295, V#300, V#360, V#GPT, V#3PA and V#400 (trade name; all available from Ohsaka Yuki

Kagaku Industries Ltd.); HDODA, DPGDA, TPGDA, PEG300DA, PEG400DA, Ebecryl 11, IRR 214, TMPTA, PETIA, Ebecryl 160, Ebecryl 2047, OTA 480, Ebecryl 53, Ebecryl 40 (trade name; all available from DAICEL UCB Co., Ltd.); Light Acrylate 1.6HX-A, Light Acrylate 1.9ND-A, Light Acrylate BEPG-A, Light Acrylate 3EG-A, Light Acrylate 4EG-A, Light Acrylate 9EG-A, Light Acrylate 14EG-A, Light Acrylate NP-A, Light Acrylate MPD-A, Light Acrylate MOD-A, Light Acrylate DCP-A, Light Acrylate HPP-A, Light Acrylate PTMGA-250, Light Acrylate TMP-A, Light Acrylate PE-3A, Light Acrylate TMP-3EO-A, Light Acrylate 6EO-A, and Light Acrylate PE-4A (trade name; all available from Kyouei Kagaku Co., Ltd.).

In addition to the aforementioned compounds, a compound having an olefin structure on its substituent group may be also employed as a radically polymerizable compound. Generally, an aliphatic compound having olefin in its structure is poor in polymerization, so that compounds having, as a substituent group, an olefin skeleton or styrene skeleton having a ring structure of distorted structure such as 5-membered ring can be suitably employed. For example, monomer compounds having any one of the aforementioned series of alcohol, maleic acid or norbornene skeleton, as well as monomer compounds comprising styrene or hydroxy styrene where any of hydrogen atoms is converted to a substituent group having other kind of aliphatic hydrocarbon such as terpenoid skeleton are preferable for use.

In order to employ the aforementioned radically polymerizable compounds as a solvent, it is preferable to include a photo-radical generating agent in the inkjet ink. As for the photo-radical generating agent, it is possible to employ a photo-radical polymerization initiator such as Michler's ketone and benzophenone, which are available in the market as IRGACURE or DAROCURE (trade name; Nagase Sangyo Co., Ltd.).

More specifically, specific examples of the photo-radical generating agent include benzophenone and acetophenone derivatives or benzoin alkyl ether or ester, for example $\alpha$-hydroxy- or $\alpha$-aminocetophenone, 4-aroyl-1,3-dioxorane, benzyl ketal, 2,2-diethoxyacetophenone, p-dimethyl aminoacetophenone, p-dimethyl aminopropiophenone, benzophenone, 2-chlorobenzophenone, pp'-dichlorobenzophenone, pp'-bisdiethyl aminobenzophenone, Michler's keton, benzyl, benzoin, benzyldimethyl ketal, tetramethyl thiuram monosulfide, thioxanthone, 2-chlorothioxanthone, 2-methylthioxanthone, azobisisobutyronitrile, benzoin peroxide, di-tert-butyl peroxide, 1-hydroxycyclohexyl phenylketone, 2-hydroxy-2-methyl-1-phenyl-1-on, 1-(4-isopropylphenyl)-2-hydroxy-2-methylpropane-1-on, methylbenzoyl formate, benzoin isopropyl ether, benzoin methyl ether, benzoin ethyl ether, benzoin ether, benzoin isobutyl ether, benzoin n-butyl ether, and benzoin n-propyl; 1-hydroxy-cyclohexyl-phenyl ketone, 2-benzyl-2-dimethylamino-1-(4-morpholinophenyl)-butanone-1,1-dydroxy-cyclohexyl-phenyl-ketone, 2,2-dimethoxy-1,2-diphenylethan-1-on, bis($\eta^5$-2,4-cyclopentadien-1-yl)-bis(2,6-difluoro-3-(1H-pyrol-1-yl)-phenyl)titanium, bis(2,4,6-trimethylbenzoyl)-phenylphosphine oxide, 2-methyl-1[4-(methylthio)phenyl]-2-morpholinopropan-1-on, 2-hydroxy-2-methyl-1-phenyl-propan-1-on (DAROCURE 1173), bis(2,6-dimethoxybenzoyl)-2,4,4-trimethyl-pentylphosphine oxide, 1-[4-(2-hydroxyethoxy)-phenyl]-2-hydroxy-2-methyl-1-propan-1-on monoacylphosphine oxide, bisacylphosphine oxide, or titanocene, fluorescein, anthraquinone, thioxanthone or xanthone, lophine dimer, trihalomethyl compound or dihalomethyl compound, activated ester compound and organoboron compound.

These photo-radical generating agent are available from the market in the name of IRGACURE 379, IRGACURE 127, IRGACURE 369 and IRGACURE 907 (trade name; Ciba-Geigy Co., Ltd.). In addition to these compounds, a polymerization promoter such as diethanol amines may be included in the ink.

The dispersion is diluted using any of aforementioned solvents and then mixed, as desired, with a photo-polymerization initiator such as a photo-acid generating agent or a photo-radical generating agent and with additives, thus obtaining an inkjet ink according to one embodiment of the present invention.

As for the photo-acid generating agent, it is possible to employ the onium salts described above. The mixing amount of the photo-acid generating agent in the inkjet ink may be suitably determined based on the acid-generating efficiency of the photo-acid generating agent to be employed and on the quantity of pigment to be added. In one embodiment of the present invention, the photo-acid generating agent is incorporated in the inkjet ink, based on the sensitivity, at an amount of 2 to 10% by weight in general, preferably 2 to 8% by weight, more preferably 2 to 6% by weight based on 100% by weight of the entire solvents to be polymerized by the effect of acid in the inkjet ink.

When a sensitizing agent is concurrently incorporated into the ink however, the mixing amount of the photo-acid generating agent can be reduced to the range of 1 to 4% by weight. This is more desirable, since the corrosion of metallic members such as piping and head members can be minimized. Further, a photo-radical generating agent is concurrently incorporated into the ink, the resultant ink would be simultaneously provided with photosensitivity to the generation of photo-radicals. As for specific examples of the sensitizing agent, they include acridine compounds, benzofuravins, perylene, anthracene, thioxantone and laser dyes. Among them, a compound formed of dihydroanthracene where hydrogen atom thereof is substituted by an organic group or thioxantone derivatives are desirable, since they are expected to exhibit enhanced effects. The mixing amount of the sensitizing agent (dye) may be generally 20 to 100% by weight, more preferably 30 to 60% by weight based on the photo-polymerization initiator.

If the mixing amount of the photo-polymerization initiator is less than 1 part by weight based on 100 parts by weight of the solvent, the sensitivity of the inkjet ink would be degraded. On the other hand, if the mixing amount of the photo-polymerization initiator exceeds 10% by weight, the increase in viscosity with time of the ink would become

prominent due to the deterioration of dispersion or to the dark reaction of dispersant, thus degrading not only the coating property of ink but also the hardness of ink film after the photo-curing thereof. Furthermore, it may lead to the generation of corrosion of the piping or head members of the recording apparatus.

A nonpolar photo-acid generating agent which is capable of generating a relatively strong acid of different kind may be concurrently incorporated a photo-acid generating agent. As for specific examples of such a nonpolar photo-acid generating agent, they can be preferably selected from the group consisting of sulfonyl compounds, sulfonate compounds, sulfamide compounds and organic halogen compounds. Among them, compounds which are capable of generating a strong acid such as fluoromethane sulfonic acid, hydrochloric acid or bromic acid are preferable as a photo-acid generating agent.

More specifically, it is possible to employ a sulfamide compound such as trifluoromethane sulfonamide of N-hydroxynaphthalimide, and organic halide compounds such as triazine halide compound. The mixing amounts of these onium salts and nonpolar photo-acid generating agent may preferably be 0.3-2 parts by weight and 2-10 parts by weight, respectively, based on 100 parts by weight of the solvent.

The inkjet ink according to one embodiment of the present invention is suited for use in the inkjet recording. In the case of oil ink, the recording medium is a main absorption medium and an after-image is enabled to be formed on this absorption medium, thus enabling it to be used as it is as a printed matter. Further, when a solvent having drying characteristics is employed, the solvent is evaporated to form an ink layer on the surface of the recording medium.

In the case where a photo-sensitive inkjet ink is employed, light is irradiated onto the ink layer thus obtained. As a result, an acid generates from the photopolymerization initiator, and then, this acid acts as an initiator for the chain reaction of a polymerizable compound or as a catalyst for the crosslinking reaction thereof. In this photo-sensitive inkjet ink, the aforementioned polymerizable compound is utilized as at least part of the solvent. Typically, almost entire volume of the solvent is constituted by the polymerizable compound. As the ratio of the polymerizable compound to an entire volume of solvent is sufficiently high, there is little possibility that an organic solvent is volatilized in the process of printing. Therefore, it is possible to obviate the problem of atmospheric contamination that might be caused due to the evaporation of organic solvents, thus unnecessitating the provision of an exhausting apparatus or a solvent-recovery system.

Further, the acid generated in the latter chemically amplified type ink is diffuses into the ink layer, thus enabling the acid to act as a catalyst. The crosslinking reaction to be brought about through the diffusion of the acid or through the catalytic action of the acid can be accelerated by applying heat to the liquid ink. Different from the radical polymerization, this crosslinking reaction would not be obstructed by the presence of oxygen. As a result, a plurality of crosslinking reactions occur using only one photon, thereby making it possible to realize a high sensitivity. Moreover, the crosslinking reaction can take place quickly even in a deep portion of the ink layer and in the interior of the recording medium. Therefore, as compared with the case of radical polymerization system, the ink layer to be obtained in this manner would become far more excellent in adhesion.

Accordingly, by the employment of this liquid ink, the ink layer can be rapidly non-fluidized by the application of light irradiation and some degree of heating after finishing the discharge of ink onto the surface of printing matter. Namely, it is possible to obtain a printed matter of high quality without necessitating a large scale exposure system. Incidentally, the non-fluidized film thus obtained should preferably be thermoplastic (namely, it can be re-fluidized through the application of heat. The retention time of the non-fluidized state may be only a short time).

Different from the inkjet ink where a radical polymerization is utilized, the aforementioned inkjet ink does not require the employment of a radically polymerizable monomer which is highly stimulating to skin and badly smelling. The inkjet ink according to one embodiment of the present invention is easy to handle.

As described above, the chemically amplified type ink does not require the employment of an organic solvent and the ink layer to be obtained therefrom can be quickly non-fluidized. Because of this, it is possible to easily fix a printed image without substantially generating bleeding on the printing surface of various characteristics. Additionally, there is little possibility of the deterioration of printed surface which may otherwise occur due to the drying of the ink layer. Further, in the case of the inkjet ink according to one embodiment of the present invention, since pigment to be employed as a color component can be included in the ink at a high concentration, it is now possible to obtain a printed pattern which is clear and excellent in weathering resistance.

Since the chemically amplified type inkjet ink among various kinds of the inkjet ink according to one embodiment of the present invention is a photosensitive ink which requires the application of heating, the volatility of ink should preferably be as low as possible in viewpoint of safety and odor. More specifically, the volatilizing rate of ink after the exposure thereof and at a temperature of 80°C should preferably be confined to not higher than 0.2 $mg/cm^2 \cdot min$. The quantity of volatilization herein is a quantity of volatilization (mg) per minute that will be generated when a vessel having an opening area of 10 $cm^2$ for instance is heated. Although this quantity of volatilization varies depending on the size of the opening of the vessel, this value is usually defined as a value that can be obtained when a Petri dish having a diameter of 6 cm and containing 4g of ink therein is heated under the ordinary pressure. If the ink is formulated to fall outside the aforementioned range, the rate of volatilization becomes too large, the environmental safety would be degraded and at the same time, the problem of odor would become more severe. On the other hand, if the ink is formulated

such that the volatility thereof is very poor, e.g. 0.00001 mg/cm$^2$.min or less, the viscosity of the ink would become too high in general so that there is much possibility that the discharge of inkjet would become difficult.

As already explained, the inkjet ink according to one embodiment of the present invention should preferably be formulated so as to have a fluidity ranging from 5 to 20 mPa·sec at the temperature of the nozzle head, or at least 50 mPa·sec, more preferably at least 30 mPa·s at the ordinary temperatures. In order to enable the ink to have the aforementioned fluidity and when the ink contains "n" kinds of acid-polymerizable compounds, the viscosity $\eta_t$ represented by the following formula (1) should preferably be confined within the range of 3 to 30 mPa·s, more preferably 5 to 20 mPa·s at the temperature of the nozzle head.

$$\eta_t = \exp(\chi_1 \cdot \ln(\eta_1) + \chi_2 \cdot \ln(\eta_2) + \chi_3 \cdot \ln(\eta_3) + \cdots + \chi_n \cdot \ln(\eta_n)) \quad (1)$$

(wherein $X_1$, $X_2$, $X_3$ --- $X_n$ represent weight ratios of each of the components; and $\eta_1$, $\eta_2$, $\eta_3$ --- $\eta_n$ represent the viscosity of the individual component at the ordinary temperature and the ordinary pressure)

If the viscosity $\eta_t$ fails to fall within this range, the discharge of ink may become very difficult or disturbance of image may occur due to irregular discharge of ink.

The inkjet ink according to one embodiment of the present invention is cured through the irradiation of light, thus forming an ink layer. When the ink layer has sufficient plasticity and resolubility after the curing thereof, the ink layer can be transferred to a recording medium after the process of discharging a liquid ink on an image carrier to form the ink layer. Namely, in this process, an inkjet ink is discharged onto the image carrier to form an ink layer which is then subjected to the irradiation of light and heating to cure the ink layer. Further, by applying only a pressure or both pressure and heating to the ink layer under the condition where the ink layer is kept contacted with a recording medium, the ink layer re-fluidizes or plasticizes, thereby making it possible to transfer the ink layer onto the recording medium.

In the case where the inkjet ink is directly discharge onto a recording medium, the ink layer formed on the recording medium is subjected to the irradiation of light and heating to cure or preliminarily cure the ink layer. Subsequently, the resultant ink layer is further subjected to heating to completely cure the ink layer, thus fixing the ink layer onto the recording medium.

Although the inkjet ink according to one embodiment of the present invention should desirably be high in stability of discharge of inkjet ink. Generally however, the viscosity of inkjet ink is inclined to readily become higher with time, so that the properties thereof may not be retained for a long period of time. In that case, it is desirable to additionally incorporate, as a viscosity stabilizing agent, a basic compound and/or a compound capable of expressing basicity. These basic compounds are concurrently capable of effectively protecting not only the interior of the inkjet head of recording apparatus but also the metal portions of the piping of ink from being eroded by acids. Therefore, the employment of these basic compounds is preferable in all kinds of the inkjet ink according to one embodiment of the present invention.

As for the aforementioned basic compound, it is possible to employ any kinds of inorganic basic materials as well as organic basic materials which are capable of being dissolved in the aforementioned acid-polymerizable compounds. However, in view of solubility, the employment of organic basic materials is more preferable. Specific examples of such organic basic materials include ammonia compound, ammonium compounds, substituted or unsubstituted alkylamine, substituted or unsubstituted aromatic amine, pyridine, pyrimidine, and organic amines having a hetrocyclic skeleton such as imidazole. More specific examples of such organic basic materials include n-hexyl amine, dodecyl amine, aniline, dimethyl aniline, diphenyl amine, triphenyl amine, diazabicyclooctane, diazabicycloundecane, 3-phenyl pyridine, 4-phenyl pyridine, lutidine, 2,6-di-t-butylpyridine, and sulfonyl hydrazides such as 4-methylbenzene sulfonyl hydrazide, 4,4'-oxybis(benzenesulfonyl hydrazide) and 1,3-benzenesulfonyl hydrazide.

Ammonium compounds can be also employed as a basic compound. Preferable examples of the ammonium compounds are quaternary ammonium salts, wherein the substituent group of the ammonium atom may be methyl, ethyl, propyl, isopropyl, butyl, dodecyl, phenyl or benzyl; and the counter ion may be hydroxyl ion, -OR (R is alkyl having 1 to 4 carbon atoms), -OCOR'(R' is alkyl, aryl or alkylaryl), OCOO- and OSOO-. Especially preferable examples of the basic compounds are tetramethyl ammonium hydroxide and ammonium salt of tetrabutyl hydroxide. These basic compounds can be employed singly or in combination of two or more kinds.

When a basic compound exhibiting a very strong basicity such as imidazole is incorporated in this case, the polymerization thereof with time may occur or otherwise, a side reaction such as decomposition of photo-acid generating agent may be likely to take place. On the other hand, if a basic compound which is very weak in basicity is employed in this case, it would become difficult to sufficiently secure the effect of stabilizing the viscosity of ink through the addition of the basic compound. For example, it is preferable to employ basic compounds exhibiting a base dissociation constant pKb of 4 or more at a temperature of 25°C and in a state of aqueous solution thereof. However, if the pKb of the basic compounds is higher than 11, such compounds would be incapable of exhibiting the effect of stabilizing the viscosity of

ink. Suitable examples of basic compounds which are capable of satisfying the aforementioned conditions are pyridine derivatives, aniline derivatives, aminonaphthalene derivatives, other kinds of nitrogen-containing heterocyclic compounds and the derivatives thereof.

Specific examples of the pyridine derivatives include 2-fluoropyridine, 3-fluoropyridine, 2-chloropyridine, 3-chloropyridine, 3-phenylpyridine, 2-benzylpyridine, 2-formylpyridine, 2-(2'-pyridyl) pyridine, 3-acetylpyridine, 2-bromopyridine, 3-bromopyridine, 2-iodopyridine, 3-iodopyridine, and 2,6-di-tert-butylpyridine.

Specific examples of the aniline derivatives include aniline, 4-(p-aminobenzoyl) aniline, 4-benzylaniline, 4-chloro-N,N-dimethylaniline, 3,5-dibromoaniline, 2,4-dichloroaniline, N,N-dimethylaniline, N,N-dimethyl-3-nitroaniline, N-ethylaniline, 2-fluoroaniline, 3-fluoroaniline, 4-fluoroaniline, 2-iodoaniline, N-methylaniline, 4-methylthioaniline, 2-bromoaniline, 3-bromoaniline, 4-bromoaniline, 4-bromo-N,N-dimethylaniline, 2-chloroaniline, 3-chloroaniline, 4-chloroaniline, 3-chloro-N,N-dimethylaniniline, 3-nitroaniline, 4-nitroaniline, 2-methoxyaniline, 3-methoxyaniline, diphenylamine, 2-biphenylamine, o-toluidine, m-toluidine, p-toluidine, 3,3'-diaminodiphenyl sulfone, 4,4'-diaminodiphenyl sulfone, and 4,4'-bis(4-aminophenoxy) diphenyl sulfone.

Specific examples of the aminonaphthalene derivatives include, for example, 1-amino-6-hydroxynaphthalene, 1-naphthylamine, 2-naphthylamine, diethylaminonaphthalene, and N-methyl-1-naphthylamine.

Specific examples of other kinds of nitrogen-containing heterocyclic compounds and the derivatives thereof include, for example, cinnoline, 3-acetylpiperidine, pyrazine, 2-methylpyraxzine, methylaminopyrazine, pyridazine, 2-aminopyrimidine, 2-amino-4,6-dimethylpyrimidine, 2-amino-5-nitropyrimidine, 2,4,6-triamino-1,3,5-triazine, pyrrol, pyrazole, 1-methylpyrazole, 1,2,4-triazole, indazole, benzotriazole, quinazoline, quinoline, 3-aminoquinoline, 3-bromoquinoline, 8-carboxyquinoline, 3-hydroxyquinoline, 6-methoxyquinoline, 5-methylquinoline, quinoxaline, thiazole, 2-aminothiazole, 3,4-diazaindole, purine, 8-azapurine, indole and indolizine.

Among them, the employment of aniline derivatives as a basic compound is especially preferable in terms of viscosity stability, volatility, basicity and low side-reaction.

However, since the aniline compounds are relatively low basicity, the employment thereof in combination with an oxetane compound exhibiting basicity per se is not preferable in general. The oxetane compound should preferable be selected from those exhibiting such a high basicity that the pKb thereof at 25°C is confined within the range of 3 to 7. More specifically, basic compounds such as amine having an aliphatic skeleton or amine having an alicyclic skeleton can be suitably employed.

When the aforementioned basic compounds are capable of forming a salt with an anion and if the acidity of the anion is relatively low, the basic compounds will be enabled to exhibit a weak basicity, thereby enabling such basic compounds to be employed likewise.

Since the inkjet ink according to one embodiment of the present invention is basically required to be heated subsequent to the exposure thereof, the aforementioned basic compounds should preferably be as low in volatility as possible. More specifically, the boiling point of these basic compounds should preferably be not lower than 150°C, more preferably not lower than 180°C.

The mixing amount of the basic compounds or of the compounds capable of expressing basicity should preferably be confined within the range of 1 mol% to 30 mol%, more preferably 2 mol% to 15 mol% based on a total molar quantity of the photo-acid generating agent. If the mixing amount of these compounds exceeds over the upper limit, the sensitivity of the ink would remarkably degraded. If the mixing amount of these compounds exceeds the lower limit, the effect of stabilizing the viscosity of the ink would become insufficient.

The employment of a photo-sensitive basic compound that can be decomposed by the irradiation of light or radiation would be preferable, since the deterioration of sensitivity due to the addition of a basic material can be minimized.

As for the photo-sensitive basic compound, it is possible to preferably employ sulfonium compounds and iodonium compounds. As for the sulfonium compounds, the compounds represented by the following general formulas (SS1) to (SS4) can be exemplified.

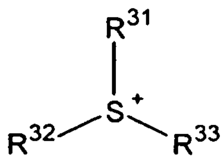

X1-

(SS1)

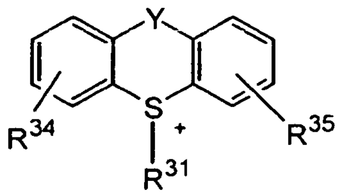

X1- (SS2)

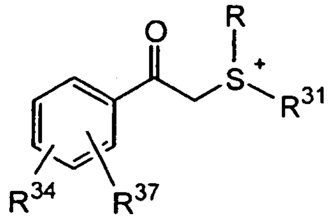

X1- (SS3)

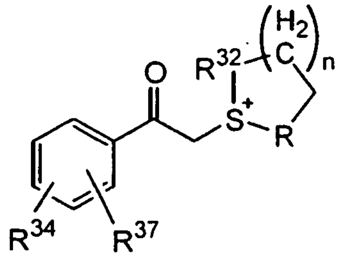

X1- (SS4)

wherein $R^{31}$, $R^{32}$ and $R^{33}$ may be the same or different and are individually alkyl group, aryl group, heteroaryl group, alkylaryl group, halogen atom, alkoxy group, phenoxy group, thiophenol group, phenylsulfonyl-substituted aryl group or phenylsulfenyl-substituted aryl group; Y is $CH_2$, O or S; $R^{34}$, $R^{35}$, $R^{36}$ and $R^{37}$ may be the same or different and are individually alkyl group, alkoxy group or halogen atom; and X1- represents a basic anion.

Preferable examples of $R^{31}$, $R^{32}$ and $R^{33}$ include methyl, ethyl, propyl, isopropyl, butyl, phenyl, biphenyl, tolyl, xylyl, chlorophenyl, bromophenyl, methoxyphenyl, ethoxyphenyl, propyloxyphenyl, butyloxyphenyl, tert-butyloxyphenyl, phenoxyphenyl, thiophenoxyphenyl, phenoxyphenyl, thiophenoxyphenyl and phenylsulfonylphenyl.

Preferable examples of $R^{34}$, $R^{35}$, $R^{36}$ and $R^{37}$ include alkyl group, methoxy group, ethoxy group, chlorine atom and bromine atom.

Specific examples of X1- include anions such as hydroxyl ion, -OR (R is alkyl having 1 to 4 carbon atoms), -OCOR'(R' is alkyl, aryl or alkylaryl), OCOO- and OSOO-.

As for the iodonium compounds, the compounds represented by the following general formulas (IS1) to (IS3) can be exemplified.

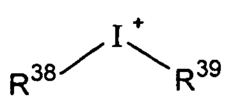

X2- (IS1)

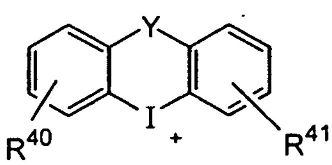

X2- (IS2)

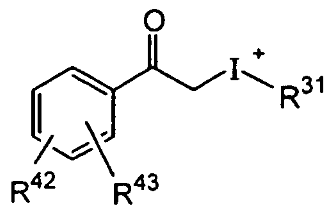

X2- (IS3)

wherein $R^{38}$ and $R^{39}$ may be the same or different and are individually alkyl group, aryl group, heteroaryl group, heteroalkyl group, alkylaryl group, halogen atom, alkoxy group, phenoxy group, thiophenol group, phenylsulfonyl-mono, di or tri-substituted aryl group or phenylsulfenyl-mono, di or tri-substituted aryl group; Y is $CH_2$, O or S; $R^{40}$, $R^{41}$, $R^{42}$ and $R^{43}$ may be the same or different and are individually alkyl group, alkoxy group or halogen atom; n is an integer of 5 or 6; and X2- represents a basic anion.

Preferable examples of $R^{38}$ and $R^{39}$ include methyl, ethyl, propyl, isopropyl, butyl, phenyl, biphenyl, tolyl, xylyl, chlorophenyl, bromophenyl, methoxyphenyl, ethoxyphenyl, propyloxyphenyl, butyloxyphenyl, tert-butyloxyphenyl, phenoxyphenyl, thiophenoxyphenyl, phenoxyphenyl, thiophenoxyphenyl and phenylsulfonylphenyl.

Preferable examples of $R^{40}$, $R^{41}$, $R^{42}$ and $R^{43}$ include alkyl group, methoxy group, ethoxy group, chlorine atom and bromine atom.

Specific examples of X2- include anions such as hydroxyl ion, -OR (R is alkyl having 1 to 4 carbon atoms), -OCOR'(R' is alkyl, aryl or alkylaryl), OCOO- and OSOO-.

Especially preferable examples of such sulfonium compounds and iodonium compounds are triphenylsulfonium acetate, triphenyl sulfonium hydroxide, triphenyl sulfonium phenolate, tris-(4-methylphenyl) sulfonium hydroxide, tris-(4-methylphenyl) sulfonium acetate, tris-(4-methylphenyl) sulfonium phenolate, diphenyl iodonium hydroxide, diphenyl iodonium acetate, diphenyl iodonium phenolate, bis-(4-t-butylphenyl) iodonium hydroxide, bis-(4-t-butylphenyl) iodonium acetate, bis-(4-t-butylphenyl) iodonium phenolate, thiophenyl-substituted triphenylsulfonium acetate, and thiophenyl-substituted triphenylsulfonium hydroxide.

In addition to the aforementioned basic compounds, it is also possible to incorporate other kinds of basic compounds into the ink. Further, in order to obtain excellent results in terms of photosensitivity and shelf life stability, the photo-acid generating agent should preferably be selected from those which are similar in kinds to the basic compound. For example, the photo-acid generating agent and the basic compound should preferably be both formed of sulfonium compounds or iodonium compounds.

Alternatively, it is also possible to preferably employ a compound which is not inherently basic but is capable of generating a basic compound through the decomposition thereof with time, since the basic compound thus generated can act to neutralize the acids generating gradually. Specific examples of such a compound include compounds which are capable of generating a basic compound as they are heated, such as NBC-101 (trade name; Midori Kagaku Co., Ltd.), and carbamate compounds such as $\alpha,\alpha$-dimethyl-3,5-dimethoxybenzyl carbamate.

The inkjet ink according to one embodiment of the present invention may further comprise, for adjusting the surface tension thereof, a small quantity of low molecular additives such as a nonionic or ionic surfactant and an antistatic agent. When a cationic additive is employed as a low molecular additive, it is preferable to select a compound whose acidity is lower than that of carboxylic acid. The reason is that some kinds of cationic additive may promote the curing dark reaction of the ink. Further, certain kinds of low molecular additives and dyes that exhibit strong basicity are also undesirable as they not only degrade sensitivity of ink but also promote the curing dark reaction occasionally. Therefore, the low molecular additives should preferably be selected from those exhibiting nearly neutrality or from nonionic additives.

When a printing surface is highly basic, the influence thereof can be minimized by the incorporation of aforementioned radically polymerizable compound into the inkjet ink according to one embodiment of the present invention. This technique can be also applied to the cases where pigments or printing surface is liable to be affected by the acid. As for the examples of such a radically polymerizable compound, they include, for example, an acrylic monomer, a methacrylic monomer, a styrene monomer, and a compound having a plurality of vinyl-based polymerizable groups of these monomers. When a vinyl ether compound is included in the inkjet ink, it can be employed in combination with an acrylic monomer or may be allowed to radically polymerize singly. Likewise, when a compound provided with radically polymerizable properties and cationically polymerizable properties, such as CEL2000 (trademark, DAICEL Chemical Industries., Ltd.), epoxycyclohexyl (meth)acrylate, glycidyl methacrylate, and ester compounds formed from vinyl alcohols and acrylic or methacrylic acid, etc. is incorporated into the ink, it would be possible to obtain advantages associated with both radical polymerizability and cationic polymerizability. In this case, a photoradical polymerization initiator such as Michler's ketone known as Irgar Cure (trade mark) and benzophenone can be incorporated into the ink together with a photocrosslinking type radical generating agent such as bisazide. This technique may be employed also in a case where the ink layer is required to have excellent chemical resistance after the curing thereof.

In the preparation of the inkjet ink according to one embodiment of the present invention, it is generally desired that volatile components such as water and organic solvents should not be included in the inkjet ink are as much as possible. However, water or the aforementioned ordinary organic solvents to be used in the preparation of raw materials, such as methylethyl ketone, propylene glycol-based solvents, ethyl lactate and xylene, may be entered into the inkjet ink if the quantity thereof is limited to an unavoidable degree. Further, if the inkjet recording apparatus is provided with a gas exhausting mechanism or a solvent recovery mechanism for instance, a little quantity of organic solvents may be contained in the ink for the purpose of obtaining desired printed matters. In this case, it is preferable, in safety viewpoint, to employ water, alcohols, isoper or terpene.

Among various kinds of inkjet ink according to the embodiments of the present invention, ones whose image-forming capability depends largely on the chemically amplified mechanism are designed such that an acid is enabled to generate from a photo-acid generating agent as the ink thereof is irradiated with light, and the acid thus generated is diffused due to the heating thereof, thus enabling the acid to function as a catalyst for the crosslinking reaction or decomposition reaction. Therefore, in the case of this kind of inkjet ink, the presence of basic ions in a great magnitude would become a cause for degrading the sensitivity of the ink. Therefore, attention should be paid so that the inkjet ink can be prevented from being contaminated by a large quantity of basic ions not only in the process of preparing the inkjet ink but also even in the process of manufacturing each of the constituent components.

Next, the method of printing as well as the method of recording by using a recording apparatus provided with a heating mechanism so as to make it possible to use a chemically amplified type ink among various kinds of recording apparatuses to which the aforementioned inkjet ink is applicable will be explained with reference to drawing.

FIGURE is a schematic view of a typical inkjet recording apparatus for performing the recording using the aforementioned inkjet ink. The inkjet recording apparatus 1 shown in FIGURE is provided with a transferring mechanism 3 for transferring a recording medium 2. Along the running direction of the transferring mechanism 3, there are successively disposed, starting from the upstream side to the downstream side, an inkjet type recording head 4, a light source 5 and a heater as a heating mechanism 6.

With respect to the recording medium (or an article to which printing is applied) 2, there is not any particular limitation on the kinds thereof as long as printing can be performed on the recording medium 2. Namely, it is possible to employ, as the recording medium 2, various kinds of materials including paper, an OHP sheet, a resin film, non-woven fabric, a porous film, a plastic plate, a circuit board and a metallic substrate.

The transferring mechanism 3 is constructed so as to enable the recording medium 2 to pass successively through the recording head 4, the light source 5 and the front side of heater 6 for instance. In this case, the transferring mechanism 3 is designed such that the recording medium 2 can be transferred from the right side to the left side in the drawing. This transferring mechanism 3 can be constituted for example by a belt and/or a roller for transferring the recording medium 2, and a driving mechanism for driving the belt and/or the roller. Alternatively, this transferring mechanism 3 may be further provided with a guiding member for assisting the transfer of the recording medium 2.

The recording head 4 is provided so as to discharge a liquid ink onto the recording medium 2 according to image signals, thereby forming an ink layer. As for the recording head 4, it is possible to employ a serial scanning type head mounted on a carriage or a line scanning type head having a width larger than that of the recording medium 2. In viewpoint of achieving a high-speed printing, the latter head is generally more advantageous as compared with the former head. With respect to the method of dischargung a liquid ink from the recording head 4, there is not any particular limitation. For example, by using the pressure of vapor to be generated by the heat of a heating element, the droplets of ink can be ejected. Alternatively, by using a mechanical pressure pulse to be generated from a piezoelectric element, the droplets of ink can be ejected.

The light source 5 irradiates light to the ink layer formed on the recording medium 2, thus enabling acid to generate in the ink layer. As for the light source 5, it is possible to employ a mercury lamp such as a low, medium or high pressure mercury lamp; a tungsten lamp; an arc lamp; an excimer lamp; an excimer laser, a semiconductor laser; a YAG laser; a laser system constituted by a combination of laser and nonlinear optical crystal; a high-frequency induction ultraviolets generating apparatus; an electron beam irradiating apparatus; an X-ray irradiating apparatus; etc. Among them, the high-frequency induction ultraviolets generating apparatus, the high/low pressure mercury lamp and the semiconductor laser would be more preferable, since these devices are advantageous in simplifying the system involved. The light source 5 may be provided with a converging mirror or a sweep optical system.

The heater 6 employed as a heating mechanism is designed to heat the ink layer formed on the recording medium 2, thus promoting the crosslinking reaction using an acid as a catalyst. As for this heater 6, it is possible to employ an infrared lamp; a roller housing therein a heating element (heat roller); a blower for ejecting hot air or heated air; etc.

By using the aforementioned apparatus 1, the printing to the recording medium can be performed by the following method.

First of all, by the transferring mechanism 3, the recording medium 2 is transferred from the right side to the left side in the drawing. The transferring speed of the recording medium 2 may be confined for example within the range

of 0.1 to 100 m/min.

As the recording medium 2 is transferred up to a location in front of the recording head 4, the aforementioned liquid ink is discharged from the recording head 4 according to the image signals. As a result, a prescribed ink layer (not shown) is formed on the recording medium 2.

Then, the recording medium 2 having the ink layer is transferred to a location in front of the light source 5. At the moment when the recording medium 2 passes through a location in front of the light source 5, light is irradiated from the light source 5 to the ink layer formed on the recording medium 2, thereby enabling an acid to generate in the ink layer. Incidentally, the intensity of irradiated beam at the surface of ink layer may be confined generally within the range of several $mW/cm^2$ to 1 $KW/cm^2$ though this range may be varied depending on the wavelength of the light source to be employed. The dosage of exposure to the ink layer can be optionally determined depending on the sensitivity of liquid ink or on the transferring speed of the printing matter (i.e. the transferring speed of the recording medium 2).

Thereafter, the recording medium 2 is transferred to the interior of or in the vicinity of the heater 6. At the moment when the recording medium 2 passes through the interior of or in the vicinity of the heater 6, the ink layer formed on the recording medium 2 is heated by the heater 6 to promote the crosslinking reaction in the ink layer. Incidentally, in the apparatus shown in Figure, the heating time by the heater 6 is generally relatively short, i.e. ranging from several seconds to several tens seconds. Accordingly, in order to cure the ink layer is substantially completely by the heater 6, the heating should be performed with the maximum ultimate temperature being controlled to become relatively high, i.e. not higher than about 200°C, more preferably within the range of 60 to 200°C, most preferably within the range of about 80 to 180°C.

Subsequently, the recording medium 2 is transferred to the interior of stocker (or vessel) (not shown), thus finishing the printing.

The heating mechanism for heating the ink layer may not be restricted to the heater 6 which is disposed at a downstream side of the light source as shown in the drawing. For example, the light source 5 may be utilized as a heating source by moving the light source 5 close to recording medium 2 on the occasion of irradiating light to the ink layer insofar as the printing surface would not be damaged. Likewise, it is also possible to utilize the light source as a heating source by omitting the provision of a heat-dissipating mechanism such as_a cold mirror. When a high-output bulb of several hundreds watts is employed as a light source, since a cooling mechanism provided together with the light source, part of the exhaust heat mechanism is modified so as to enable the waste heat to intentionally return to the surface of printing paper. By such a mechanism, the ink layer can be heated by using heat to be generated from the light source.

For example, it is possible to provide a light source having an output of not less than one hundred watts and provided with a mechanism which is capable of re-introducing an air flow which has been once utilized for cooling the light source onto the surface of printing paper or into the interior of transferring/sustaining mechanism so as to utilize the air flow for heating the ink layer. The ultimate temperature of the recording medium that can be realized through the recirculation of heat of the light source may be such that makes it possible to obtain the same degree of effect as obtainable from the heating by the aforementioned heater. Although it depends on the heating time, a preferable range of temperature may be generally at least 60°C or more, more preferably within the range of 80 to 100°C. When the speed of exposure is relatively high, e.g. several meters/sec., the ultimate temperature may be as high as 180°C so as to instantaneously heat the recording medium.

When a light source which is capable of generating infrared ray in addition to the visible light is employed as the light source 5 for instance, the irradiation of light and the heating to the recording medium can be concurrently performed. Such a light source is preferable since it will promote the curing of ink layer.

Since the ink layer is heated also from the heat to be generated from the light source 5 as the ink layer is irradiated with light, the heating mechanism may not necessarily be installed as an independent member as in the case of the heater 6. However, if only the heat from the light source 5 is utilized for heating the ink layer and then the heated ink layer is left to stand at the ordinary temperature for completely curing the ink layer, it will take a long time. Therefore, the standing of ink layer at the ordinary temperature should preferably be applied to only on the occasions where sufficiently a long period of time can be secured for complete curing of the ink layer. For example, in the case of the printed matters such as newspaper which will be distributed next day, it is possible to secure such a long time as about a whole day and night for allowing the ink layer to cure, and therefore it is possible to completely cure the ink layer even if the ink layer is left to stand at the ordinary temperature.

The images (printed matters) to be obtained by using the aforementioned recording method and ink would be excellent not only in quality of printing but also in curing property, thus making them excellent in four respects, i.e. hardness, adhesion, sun-proof and safety. Namely, in addition to the inhibition of emission of poisonous materials from the printed images after the curing thereof, the reduction of weight of the ink during the exposure thereof can be restricted to within 10%, thus making it possible to desirably minimize the scattering matters in the atmosphere of printing. It is possible, through the curing of the inkjet ink according to one embodiment of the present invention, to obtain printed matters excellent in properties.

As described above, the pigments to be employed in the inkjet ink may be further provided with other properties

such as magnetism, fluorescence, conductivity, dielectric property, electromagnetic exothermic property, etc. in addition to the coloring and tinting properties. If the inkjet ink containing such a pigment provided with these various properties is employed, it may become possible to obtain a printed matter having various functions. Next, some of such examples will be explained.

At first, a case where the inkjet ink contain a pigment provided with magnetism will be explained.

First of all, an inkjet ink containing, as a pigment, powder provided with magnetism is prepared. This inkjet ink can be prepared fundamentally in the same manner as already explained above. Namely, a dispersion is prepared in the same manner as explained above except that the pigment is replaced by magnetic powder. Then, the resultant dispersion is diluted to obtain the inkjet ink. As for the magnetic powder, it is possible to employ, for example, iron, cobalt, nickel, an alloy or oxide thereof.

Then, this inkjet ink is discharged onto a recording medium to draw a pattern such as a bar code pattern. After finishing the discharge of ink, light such as ultraviolet ray is immediately irradiated against the ink layer. The quantity of irradiation on this occasion may be determined depending on the mixing amount of the pigment in the inkjet ink or on the sensitivity of the inkjet ink, the dosage of the irradiation ordinary ranging from several hundreds mJ to one thousand and several hundreds mJ. Even immediately after the irradiation of light, the stickiness and fluidity of the ink layer would be varnished. However, the ink layer may be left to stand in a stocker at a temperature ranging from the ordinary temperature to 60°C, thus completely curing the ink layer. Since the ink layer cured in this manner is provided with magnetism, it is possible to read out a secondary information other than image information by a magnetism detecting mechanism such as a magnetic head.

Next, a case where the inkjet ink contains a conductive pigment will be explained.

First of all, an inkjet ink containing, as a pigment, powder having electric conductivity is prepared. In the preparation of this inkjet ink, a dispersion containing a conductive pigment is prepared. As for this conductive pigment, it can be selected from, for example, silver, gold, copper, aluminum, carbon, nickel, iron, cobalt, lead, tin, antimony, an alloy comprising an optional combination of these metals and a composite thereof with an organic material. Namely, an inkjet ink containing a conductive pigment can be prepared in the same manner as described above except that the aforementioned conductive pigment is employed in place of the magnetic pigment. For the purpose of enhancing the electric conductivity through the reduction in content of resin in an ink layer to be ultimately formed, the mixing amount of the polymerizable compound in the inkjet ink may be decreased and, at the same time, an organic solvent may be incorporated into the inkjet ink.

Then, the inkjet ink thus obtained is discharged onto a recording medium such as an insulating substrate to draw a pattern such as a wiring pattern. After finishing the discharge of ink, light such as ultraviolet ray is immediately irradiated against the ink layer. The quantity of irradiation on this occasion may be determined depending on the mixing amount of the pigment in the inkjet ink or on the sensitivity of the inkjet ink, the dosage of the irradiation ordinary ranging from several hundreds mJ to one thousand and several hundreds mJ. Even immediately after the irradiation of light, the stickiness and fluidity of the ink layer would be varnished. However, the ink layer may be left to stand in a stocker at a temperature ranging from the ordinary temperature to 60°C, thus completely curing the ink layer. The electric conductivity of the ink layer can be further enhanced by applying heat and pressure to the ink layer. Further, when alloy powder which is relatively low in melting point is employed as a conductive pigment, the ink layer may be heated up to a fluidizing temperature of the ink to obtain a conductive pattern. Since the printed pattern obtained in this manner is provided with electric conductivity, it is possible to employ the pattern as a circuit pattern or a resistor pattern.

Alternatively, when an inkjet ink containing, as a pigment, dielectric powder made of an alloy or oxide of barium, lead, bismuth, iridium, ruthenium, tantalum, platinum, titanium, strontium or chromium; or ceramic power is employed, it is possible to form a dielectric layer of capacitor or inductor. In this case, when the ink layer is sintered after it is formed into a pattern, it may become possible to enhance the property thereof. Further, when an inkjet ink containing a pigment provided with photocatalizing function or bactericidal action such as titanium oxide powder is employed, it is possible to form a printed pattern having such a function and action. As for the electromagnetic exothermic powder, it is possible to employ, for example, electromagnetic exothermic ceramics or silicone resin. This electromagnetic exothermic powder can be employed for the purpose of selectively heating a printed portion by electromagnetic wave. This powder can be employed for enhancing the electromagnetic heating property of all kinds of the inkjet ink described above.

Furthermore, by taking advantage of the techniques illustrated in these embodiments, it is possible to perform overlapped printing or to form a relatively thick printed pattern. More specifically, a step of discharging inkjet ink onto a predetermined region of a recording medium to obtain an ink layer and a step of curing the ink layer are repeated a plurality of times, thereby making it possible to form an image which has been partially corrected or an image having an embossed portion which can be tactilely recognized. For example, it is possible to form a printed pattern for the handicapped such as Braille, a printed pattern such as a topographic map where the thickness thereof is fluctuated in conformity with the contour lines, and a portion of device having a thickness of several tens μm or more.

Next, various embodiments of the present invention will be explained in detail with reference to examples.

By using blue pigments, black pigments and yellow pigments, various kinds of pigment dispersions were prepared.

As for the blue pigment dispersion, Pigment Blue 15:3 was employed and the blue pigment dispersion was manufactured according to three kinds of methods as explained below.

(C-1)

A mixed solution comprising 100g of Pigment Blue 15:3, and 0.1 mol of vanadium acetylacetonate [V(acac)$_3$] was stirred in chloroform for 4 hours at a temperature of 60°C while treating the mixture with an ultrasonic dispersion head (Nippon Seiki Co., Ltd.). The atmosphere on this occasion was formulated to comprise sulfur dioxide ($SO_2$)(0.5 atm=50.5 kPa) and oxygen (0.5 atm=50.5 kPa) and the conditions of the head were set to 24 KHz and 300W. The reaction solution was then washed with water and then, chloroform was fractionated.

By removing chloroform under a reduced pressure, surface-modified cyan was obtained and dried under a reduced pressure. By EDX elemental analysis, the sulfonic acid-modification ratio was identified and estimated as being 1.8%. A broad absorption was appeared in the vicinity of 3200 $cm^{-1}$ of IR absorption, and at the same time, indications of the generation of hydroxyl group was recognized on the surface of the pigment.

When the aforementioned procedures were applied to several kinds of phthalocyanine pigment available in the market, phthalocyanine pigment surface-modified with sulfonic acid group in the same manner as described above was recognized in each sample.

60 g of the surface-modified phthalocyanine pigment thus obtained was added to 1500 g of pure water and stirred for 30 minutes to obtain a slurry. On the other hand, epoxy resin (Epolead available from DAICEL Chemical Industries Ltd.) was dissolved, as a first resinous dispersing agent, in toluene to prepare a toluene solution. Then, 60 g of toluene solution was added little by little to the slurry and stirred. Since the phthalocyanine pigment which was dispersed in water gradually shifted to toluene side, the phthalocyanine pigment was separated by filtration and dried in vacuum. Subsequently, by ozone treatment, the surface of the phthalocyanine pigment was subjected to a reaggregation-preventing treatment, thus obtaining capsulized cyan pigment. When this cyan pigment was observed by TEM (transmission electron microscope), it was possible to confirm the formation of a capsule-like film of epoxy resin on the surface of the pigment.

Next, by changing the quantity of epoxy resin to be employed, the content of the first resinous dispersing agent was adjusted. Further, by using zirconia bead 0.1 mm in diameter and a bead mill (Synmal Enterprises Co., Ltd.) and by operating the bead mill at a peripheral speed of 8 m/sec, each of the pigments was re-dispersed in methylethyl ketone (MEK) employed as a pre-dispersion medium to obtain a dispersion precursor, respectively.

To each of these dispersion precursors, an equivalent quantity of a main dispersion medium was added. The resultant mixture was stirred for one hour and then heated one hour with stirring at a temperature of 50°C and a pressure of 50 mmHg, which was followed by a 3-hour heating at a pressure of 5 mmHg to remove MEK. In the same manner, various kinds of pigment dispersions as shown in the following Table 1 were manufactured. As for the main dispersion medium, limonene dioxide (Celloxide 3000 available from DAICEL Chemical Industries Ltd.), neopentylglycol diglycidyl ether (SR-NPG available from Sakamoto Yakuhin Industries Ltd.), triethyleneglycol vinyl ether (DVE-3 available from ISP Japan Co., Ltd.), [1-ethyl(3-oxetanyl)]methyl ether (OXT-221 available from Toa Gosei Co., Ltd.), ethyl lactate, an oxanorbornane compound having a couple of vinylether-containing groups (ONB-DVE available from DAICEL Chemical Industries Ltd.), or isobornyl acrylate (IBA; available from Aldrich Co., Ltd.) was employed.

Incidentally, in some of the samples, methylethyl ketone was employed as it was without changing the solvent.

(C-2)

Pigment Blue 15:3, polyester resin having a terminal amino group (Solsperse 32000, Avisia Co., Ltd.) as the first resinous dispersing agent, and 1/10 by volume, based on the polyester resin, of a synergist (Solsperse 5000, Avisia Co., Ltd.) were added to MEK employed as a pre-dispersion medium. Then, the resultant mixture was subjected to a preliminary dispersion treatment by a homogenizer to obtain a dispersion. Then, by using zirconia bead 0.1 mm in diameter and a bead mill (Synmal Enterprises Co., Ltd.) and by operating the bead mill at a peripheral speed of 8 m/sec, the dispersion was subjected to a recycling treatment for two hours to obtain an MEK solution of surface-coated pigment (dispersion precursor). Various kinds of MEK solution were prepared in the same manner as described above except that the mixing amount of the first resinous dispersing agent to the pigment was variously altered.

This dispersion precursor was then dried and observed by TEM (transmission electron microscope), confirming the formation of a film made of polyester resin on the surface of the pigment. Although a portion of the polyester resin was found left remained without being adsorbed on the surface of pigment, an accurate coverage of resin was identified as follows. Namely, re-dispersion by centrifugal separation/decantation and ultrasonication (24 KHz, 300 W) was repeated. As a result, a pigment dispersion where redundant resin was washed out was obtained. Then, the pigment in this pigment dispersion was subjected to thermogravimetric analysis (TG) to identify an accurate coverage of resin, the

results being indicated in the following Table 1.

To each of these dispersion precursors, an equivalent quantity of a main dispersion medium was added. The resultant mixture was stirred for one hour and then heated one hour with stirring at a temperature of 50°C and a pressure of 50 mmHg, which was followed by a 3-hour heating at a pressure of 5 mmHg to remove MEK. In the same manner, various kinds of pigment dispersions as shown in the following Table 1 were manufactured.

(C-3)

Permajet Blue B2G (Clariant Co., Ltd.) was added to MEK and then subjected to a preliminary dispersion treatment by a homogenizer to obtain a dispersion. Then, by using zirconia bead 0.1 mm in diameter and a bead mill and by operating the bead mill at a peripheral speed of 8 m/sec, the dispersion was subjected to a recycling treatment for two hours to obtain an MEK solution of surface-coated pigment (dispersion precursor).

This dispersion precursor was then dried and observed by TEM (transmission electron microscope), confirming the formation of a film made of vinyl chloride/vinyl acetate copolymer on the surface of the pigment. Although a portion of the resin (copolymer) was found dissociated from the surface of pigment, an accurate coverage of resin was identified as follows. Namely, re-dispersion by centrifugal separation/decantation and ultrasonication (24 KHz, 300 W) was repeated. As a result, a pigment dispersion where redundant resin was washed out was obtained. Then, the pigment in this pigment dispersion was subjected to thermogravimetric analysis (TG) to identify an accurate coverage of resin, the results being indicated in the following Table 1.

To each of these dispersion precursors, an equivalent quantity of a main dispersion medium was added. The resultant mixture was stirred for one hour and then heated one hour with stirring at a temperature of 50°C and a pressure of 50 mmHg, which was followed by a 3-hour heating at a pressure of 5 mmHg to remove MEK. In the same manner, various kinds of pigment dispersions as shown in the following Table 1 were manufactured.

Table 1

| Pigment dispersion | Pigment | | Content of resin (%) | Dispersing medium | Remarks |
|---|---|---|---|---|---|
| | Kinds | Content (%) | | | |
| I-C1(1)25s | P.B.15:3 | 1 | 25 | SR-NPG | Not tinted |
| I-C1(2)25s | P.B.15:3 | 2 | 25 | SR-NPG | Poor tinting |
| I-C1(10)25s | P.B.15:3 | 10 | 25 | SR-NPG | |
| I-C1(25)25s | P.B.15:3 | 25 | 25 | SR-NPG | |
| I-C1(35)25s | P.B.15:3 | 35 | 25 | SR-NPG | High viscosity |
| I-C1(25)5s | P.B.15:3 | 25 | 5 | DVE-3 | |
| I-C1(25)10s | P.B.15:3 | 25 | 10 | DVE-3 | |
| I-C1(25)20s | P.B.15:3 | 25 | 20 | DVE-3 | |
| I-C1(25)30s | P.B.15:3 | 25 | 30 | DVE-3 | |
| I-C1(25)35s | P.B.15:3 | 25 | 35 | DVE-3 | High viscosity |
| I-C2(1)25c | P.B.15:3 | 1 | 25 | C3000 | Not tinted |
| I-C2(2)25c | P.B.15:3 | 2 | 25 | C3000 | Poor tinting |
| I-C2(10)25c | P.B.15:3 | 10 | 25 | C3000 | |
| I-C2(25)25c | P.B.15:3 | 25 | 25 | C3000 | |
| I-C2(35)25c | P.B.15:3 | 35 | 25 | C3000 | High viscosity |
| I-C2(25)5c | P.B.15:3 | 25 | 5 | C3000 | |
| I-C2(25)10c | P.B.15:3 | 25 | 10 | C3000 | |
| I-C2(25)20c | P.B.15:3 | 25 | 20 | C3000 | |
| I-C2(25)30c | P.B.15:3 | 25 | 30 | C3000 | |
| I-C2(25)35c | P.B.15:3 | 25 | 35 | C3000 | High viscosity |

(continued)

| Pigment dispersion | Pigment | | Content of resin (%) | Dispersing medium | Remarks |
|---|---|---|---|---|---|
| | Kinds | Content (%) | | | |
| I-C3(25)30e1 | P.B.15:3 | 25 | 30 | Ethyl lactate | |
| I-C3(25)40el | P.B.15:3 | 25 | 40 | Ethyl lactate | |
| I-C3(25)50el | P.B.15:3 | 25 | 50 | Ethyl lactate | High viscosity |
| I-C2(1)25ox | P.B.15:3 | 1 | 25 | OXT-221 | Not tinted |
| I-C2(2)2ox | P.B.15:3 | 2 | 25 | OXT-221 | Poor tinting |
| I-C2(10)25ox | P.B.15:3 | 10 | 25 | OXT-221 | |
| I-C2(25)25ox | P.B.15:3 | 25 | 25 | OXT-221 | |
| I-C2(25) 25m | P.B.15:3 | 25 | 25 | MEK | |
| I-C2(25)25on | P.B.15:3 | 25 | 25 | ONB-DVE | |
| I-C2(25)25ib | P.B.15:3 | 25 | 25 | IBA | |
| *: The content of pigment is represented by % based on a total weight of dispersion medium, and the content of resin is represented by % based on the weight of pigment. | | | | | |

By using Special Black 250 (carbon black; Dexa Co., Ltd.), a black pigment dispersion was manufactured according to the following method.

Special Black 250 (carbon black; Dexa Co., Ltd.), polyester resin having a terminal amino group (Solsperse 32000, Avisia Co., Ltd.) as the first resinous dispersing agent, and 1/10 by volume, based on the polyester resin, of a synergist (Solsperse 5000, Avisia Co., Ltd.) were added to MEK employed as a pre-dispersion medium, wherein the mixing ratio of the dispersant resin to the pigment was variously altered. Then, the resultant mixture was subjected to a preliminary dispersion treatment by a homogenizer to obtain a dispersion. Then, by using zirconia bead 0.1 mm in diameter and a bead mill (Synmal Enterprises Co., Ltd.) and by operating the bead mill at a peripheral speed of 8 m/sec, the dispersion was subjected to a recycling treatment for two hours to obtain an MEK solution of surface-coated pigment (dispersion precursor). Various kinds of MEK solution were prepared in the same manner as described above except that the mixing ratio of the first resinous dispersing agent to the pigment was variously altered.

This dispersion precursor was then dried and observed by TEM (transmission electron microscope), confirming the formation of a film made of polyester resin on the surface of the pigment. Although a portion of the polyester resin was found left remained without being adsorbed on the surface of pigment, an accurate coverage of resin was identified as follows. Namely, re-dispersion by centrifugal separation/decantation and ultrasonication (24 KHz, 300W) was repeated. As a result, a pigment dispersion where redundant resin was washed out was obtained. Then, the pigment in this pigment dispersion was subjected to thermogravimetric analysis (TG) to identify an accurate coverage of resin, the results being indicated in the following Table 2.

To each of these dispersion precursors, an equivalent quantity of a main dispersion medium was added. The resultant mixture was stirred for one hour and then heated one hour with stirring at a temperature of 50°C and a pressure of 50 mmHg, which was followed by a 3-hour heating at a pressure of 5 mmHg to remove MEK. In the same manner, various kinds of pigment dispersions as shown in the following Table 2 were manufactured. The main dispersion medium employed herein was limonene dioxide (Celloxide 3000 available from DAICEL Chemical Industries Ltd.), neopentylglycol diglycidyl ether (SR-NPG available from Sakamoto Yakuhin Industries Ltd.), [1-ethyl(3-oxetanyl)]methyl ether (OXT-221 available from Toa Gosei Co., Ltd.), ethyl lactate, triethyleneglycol vinyl ether (DVE-3 available from ISP Japan Co., Ltd.), an oxanorbornane compound having a couple of vinylether-containing groups (ONB-DVE available from DAICEL Chemical Industries Ltd.), divinyl ether of isosorbitol (ISB-DVE available from DAICEL Chemical Industries Ltd.), or isobornyl acrylate (IBA; available from Aldrich Co., Ltd.).

Incidentally, in some of the samples, methylethyl ketone was employed as it was without changing the solvent.

Table 2

| Pigment dispersion | Pigment content (%) | Content of resin (%) | Dispersing medium | Remarks |
|---|---|---|---|---|
| I-B(1)25s | 1 | 25 | SR-NPG | Not tinted |
| I-B(2)25s | 2 | 25 | SR-NPG | Poor tinting |

(continued)

| Pigment dispersion | Pigment content (%) | Content of resin (%) | Dispersing medium | Remarks |
|---|---|---|---|---|
| I-B(10)25s | 10 | 25 | SR-NPG | |
| I-B(25)25s | 25 | 25 | SR-NPG | |
| I-B(35)25s | 35 | 25 | SR-NPG | Hight viscosity |
| I-B(25)5s | 25 | 5 | DVE-3 | |
| I-B(25)10s | 25 | 10 | DVE-3 | |
| I-B(25)20s | 25 | 20 | DVE-3 | |
| I-B(25)30s | 25 | 30 | DVE-3 | |
| I-B(25)35s | 25 | 35 | DVE-3 | High viscosity |
| I-B(1)25c | 1 | 25 | C3000 | Not tinted |
| I-B(2)25c | 2 | 25 | C3000 | Poor tinting |
| I-B(10)25c | 10 | 25 | C3000 | |
| I-B(25)25c | 25 | 25 | C3000 | |
| I-B(35)25c | 35 | 25 | C3000 | High viscosity |
| I-B(25)Sc | 25 | 5 | C3000 | |
| I-B(25)10c | 25 | 10 | C3000 | |
| I-B(25)20c | 25 | 20 | C3000 | |
| I-B(25)30c | 25 | 30 | C3000 | |
| I-B(25)35c | 25 | 35 | C3000 | High viscosity |
| I-B(25)30el | 25 | 30 | Ethyl lactate | |
| I-B(25)40el | 25 | 40 | Ethyl lactate | |
| I-B(25)50el | 25 | 50 | Ethyl lactate | High viscosity |
| I-B(1)25ox | 1 | 25 | OXT-221 | Not tinted |
| I-B(2)25ox | 2 | 25 | OXT-221 | Poor tinting |
| I-B(10)25ox | 10 | 25 | OXT-221 | |
| I-B(25)25ox | 25 | 25 | OXT-221 | |
| I-B(25)25m | 25 | 25 | MEK | |
| I-B (25) 25on | 25 | 25 | ONB-DVE | |
| I-B (25) 25ib | 25 | 25 | IBA | |
| *: The content of pigment is represented by % based on a total weight of dispersion medium, and the content of resin is represented by % based on the weight of pigment. The pigments employed herein were all Special BK250. | | | | |

As for the yellow pigment dispersion, Pigment Yellow 150 (Clariant Co., Ltd.), Pigment Yellow 139 (Clariant Co., Ltd.: Graphtol Yellow H2R), and Pigment Yellow 180 (Clariant Co., Ltd.: Toner Yellow HG) were employed and the yellow pigment dispersion was manufactured according to two kinds of methods as explained below.

(Y-1)

First of all, Pigment Yellow 150 (Clariant Co., Ltd.), Pigment Yellow 139 (Clariant Co., Ltd.: Graphtol Yellow H2R), and Pigment Yellow 180 (Clariant Co., Ltd.: Toner Yellow HG) were prepared. Then, polyester resin having a terminal amino group (Solsperse 32000, Avisia Co., Ltd.) as the first resinous dispersing agent, and 1/10 by volume, based on the polyester resin, of a synergist (Solsperse 5000, Avisia Co., Ltd.) were added to MEK employed as a pre-dispersion medium. Then, the resultant mixture was subjected to a preliminary dispersion treatment by a homogenizer to obtain a dispersion. Then, by using zirconia bead 0.1 mm in diameter and a bead mill (Synmal Enterprises Co., Ltd.) and by_operating the bead mill at a peripheral speed of 8 m/sec, the dispersion was subjected to a recycling treatment for two hours to obtain an MEK solution of surface-coated pigment (dispersion precursor). Various kinds of MEK solution were prepared in the same manner as described above except that the mixing amount of the first resinous dispersing agent to the pigment was variously altered.

This dispersion precursor was then dried and observed by TEM (transmission electron microscope), confirming the formation of a film made of polyester resin on the surface of the pigment. Although a portion of the polyester resin was found left remained without being adsorbed on the surface of pigment, an accurate coverage of resin was identified as follows. Namely, re-dispersion by centrifugal separation/decantation and ultrasonication (24 KHz, 300 W) was repeated. As a result, a pigment dispersion where redundant resin was washed out was obtained. Then, the pigment in this pigment dispersion was subjected to thermogravimetric analysis (TG) to identify an accurate coverage of resin, the results being indicated in the following Tables 3 and 4.

To each of these dispersion precursors, an equivalent quantity of a main dispersion medium was added. The resultant mixture was stirred for one hour and then heated one hour with stirring at a temperature of 50°C and a pressure of 50 mmHg, which was followed by a 3-hour heating at a pressure of 5 mmHg to remove MEK. In the same manner, various kinds of pigment dispersions as shown in the following Tables 3 and 4 were manufactured. The main dispersion medium employed herein was limonene dioxide (Celloxide 3000 available from DAICEL Chemical Industries Ltd.), neopentylglycol diglycidyl ether (SR-NPG available from Sakamoto Yakuhin Industries Ltd.), [1-ethyl(3-oxetanyl)]methyl ether (OXT-221 available from Toa Gosei Co., Ltd.), ethyl lactate, triethyleneglycol vinyl ether (DVE-3 available from ISP Japan Co., Ltd.), an oxanorbornane compound having a couple of vinylether-containing groups (ONB-DVE available from DAICEL Chemical Industries Ltd.), or isobornyl acrylate (IBA; available from Aldrich Co., Ltd.).

Incidentally, in some of the samples, methylethyl ketone was employed as it was without changing the solvent.

(Y-2)

Permajet Yellow HG (Clariant Co., Ltd.) was added to MEK and then subjected to a preliminary dispersion treatment by a homogenizer to obtain a dispersion. Then, by using zirconia bead 0.1 mm in diameter and a bead mill and by operating the bead mill at a peripheral speed of 8 m/sec, the dispersion was subjected to a recycling treatment for two hours to obtain an MEK solution of surface-coated pigment (dispersion precursor).

This dispersion precursor was then dried and observed by TEM (transmission electron microscope), confirming the formation of a film made of vinyl chloride/vinyl acetate copolymer on the surface of the pigment. Since a portion of the resin (copolymer) was observed as being dissociated from the surface of pigment, re-dispersion by centrifugal separation/decantation and ultrasonication (24 KHz, 300W) was repeated. As a result, redundant resin was washed out and three kinds of dispersion precursors differing in the coverage of resin were obtained. Then, the coverage of resin respectively determined by thermogravimetric analysis (TG) on each of the dispersion precursors is also shown in the following Table 4.

To each of these dispersion precursors, an equivalent quantity of a main dispersion medium was added. The resultant mixture was stirred for one hour and then heated one hour with stirring at a temperature of 50°C and a pressure of 50 mmHg, which was followed by a 3-hour heating at a pressure of 5 mmHg to remove MEK. In the same manner, various kinds of yellow pigment dispersions as shown in the following Table 3 were manufactured.

Table 3

| Pigment dispersion | Pigment | | Content of resin (%) | Dispersing medium | Remarks |
|---|---|---|---|---|---|
| | Kinds | Content (%) | | | |
| I-Y1(1)50s | P.Y.150 | 1 | 50 | SR-NPG | Not tinted |
| I-Y1(2)50s | P.Y.150 | 2 | 50 | SR-NPG | Poor tinting |
| I-Y1(10)50s | P.Y.150 | 10 | 50 | SR-NPG | |
| I-Y1(25)50s | P.Y.150 | 25 | 50 | SR-NPG | |
| I-Y1(35)50s | P.Y.150 | 35 | 50 | SR-NPG | High viscosity |
| I-Y1 (25) 5s | P.Y.150 | 25 | 5 | DVE-3 | |
| I-Y1 (25) 10s | P.Y.150 | 25 | 10 | DVE-3 | |
| I-Y1 (25) 15s | P.Y.150 | 25 | 15 | DVE-3 | |

(continued)

| Pigment dispersion | Pigment | | Content of resin (%) | Dispersing medium | Remarks |
|---|---|---|---|---|---|
| | Kinds | Content (%) | | | |
| I-Y1 (25) 30s | P.Y.150 | 25 | 30 | DVE-3 | |
| I-Y1 (25) 45s | P.Y.150 | 25 | 45 | DVE-3 | |
| I-Y1 (25) 60s | P.Y.150 | 25 | 60 | DVE-3 | |
| I-Y1 (25) 65s | P.Y.150 | 25 | 65 | DVE-3 | High viscosity |
| I-Y1 (1) 50c | P.Y.150 | 1 | 50 | C3000 | Not tinted |
| I-Y1(2)50c | P.Y.150 | 2 | 50 | C3000 | Poor tinting |
| I-Y1(10)50c | P.Y.150 | 10 | 50 | C3000 | |
| I-Y1(25)50c | P.Y.150 | 25 | 50 | C3000 | |
| I-Y1(35)50c | P.Y.150 | 35 | 50 | C3000 | High viscosity |
| I-Y1(25)5c | P.Y.150 | 25 | 5 | C3000 | |
| I-Y1(25)10 | P.Y.150 | 25 | 10 | C3000 | |
| I-Y1(25)15 | P.Y.150 | 25 | 15 | C3000 | |
| I-Y1(25)30c | P.Y.150 | 25 | 30 | C3000 | |
| I-Y1(25)45c | P.Y.150 | 25 | 45 | C3000 | |
| I-Y1(25)60c | P.Y.150 | 25 | 60 | C3000 | |
| I-Y1(25)65c | P.Y.150 | 25 | 65 | C3000 | High viscosity |
| *: The content of pigment is represented by % based on a total weight of dispersion medium, and the content of resin is represented by % based on the weight of pigment. | | | | | |

Table 4

| Pigment dispersion | Pigment | | Content of resin (%) | Dispersing medium | Remarks |
|---|---|---|---|---|---|
| | Kinds | Content (%) | | | |
| I-Y2 (25) 50el | P.Y.180 | 25 | 50 | Ethyl lactate | |
| I-Y2(25)60el | P.Y.180 | 25 | 60 | Ethyl lactate | |
| I-Y2(25) 70e1 | P.Y.180 | 25 | 70 | Ethyl lactate | High viscosity |
| I-Y1(1)45ox | P.Y.150 | 1 | 45 | OXT-221 | Not tinted |
| I-Y1(2)45ox | P.Y.150 | 2 | 45 | OXT-221 | Poor tinting |
| I-Y1(10)95ox | P.Y.150 | 10 | 45 | OXT-221 | |
| I-Y1(25)95ox | P.Y.150 | 25 | 45 | OXT-221 | |
| I-Y1(25)45m | P.Y.150 | 25 | 45 | MEK | |
| I-Y1(25)45on | P.Y.150 | 25 | 45 | ONB-DVE | |
| I-Y1(25)95ib | P.Y.150 | 25 | 45 | IBA | |
| I-Y1(25)5s-a | P.Y.180 | 25 | 5 | SR-NPG | |
| I-Yl(25)10s-a | P.Y.180 | 25 | 10 | SR-NPG | |
| I-Y1(25)15s-a | P.Y.180 | 25 | 15 | SR-NPG | |
| I-Y1 (25) 30s-a | P.Y.180 | 25 | 30 | SR-NPG | |
| I-Y1 (25) 45s-a | P.Y.180 | 25 | 45 | SR-NPG | |

(continued)

| Pigment dispersion | Pigment | | Content of resin (%) | Dispersing medium | Remarks |
|---|---|---|---|---|---|
| | Kinds | Content (%) | | | |
| I-Y1 (25) 60s-a | P.Y.180 | 25 | 60 | SR-NPG | |
| I-Y1 (25) 65s-a | P.Y.180 | 25 | 65 | SR-NPG | |
| I-Y1 (25) 5s-b | P.Y.139 | 25 | 5 | DVE-3 | |
| I-Y1 (25) 10s-b | P.Y.139 | 25 | 10 | DVE-3 | |
| I-Y1 (25) 15s-b | P.Y.139 | 25 | 15 | DVE-3 | |
| I-Y1 (25) 30s-b | P.Y.139 | 25 | 30 | DVE-3 | |
| I-Y1 (25) 45s-b | P.Y.139 | 25 | 45 | DVE-3 | |
| I-Y1 (25) 60s-b | P.Y.139 | 25 | 60 | DVE-3 | |
| I-Y1 (25) 65s-b | P.Y.139 | 25 | 65 | DVE-3 | |
| *: The content of pigment is represented by % based on a total weight of dispersion medium, and the content of resin is represented by % based on the weight of pigment. | | | | | |

To the pigment dispersion prepared as described above, DA or DB was added as a second resinous dispersing agent. The dispersing agent DA was a polyallylamine compound where aromatic polyester having an amine value of 45 was linked to the amine terminal, and the dispersing agent DB was a polyallylamine compound where aromatic polyester having an amine value of 38 was linked to the amine terminal. Further, an ionic compound was added to the dispersion medium at an amount of 2.5% by weight. When the concentration of the ionic compound in the dispersion was less than 1% by weight, the effects of the ionic compound was insufficient. However, when the concentration of the ionic compound in the dispersion was regulated to fall within the range of 1 to 10% by weight, the dispersion was enabled to exhibit excellent stability. The ionic compounds employed herein were the following compounds (C1) to (C4) or (C5) (tetrabutyl ammonium hexafluorophosphate).

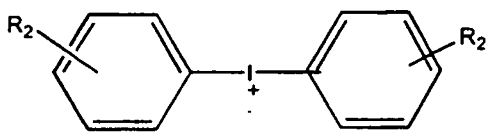

PF6-

(C1) $R_2$ is methylpropyl or ethl

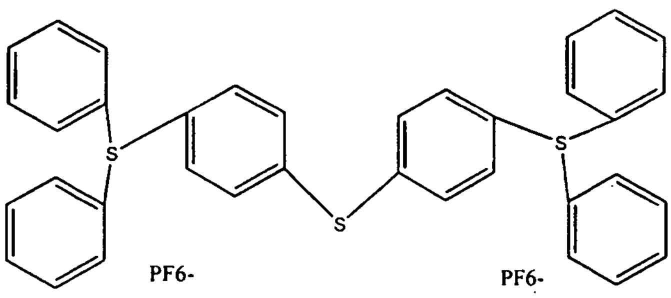

PF6- PF6-

α

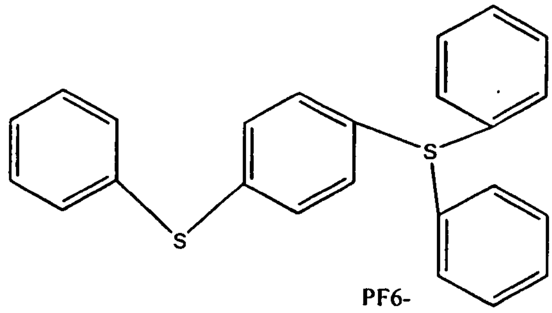

β

(C2) 1:1 mixture of α and β

(C3) only β

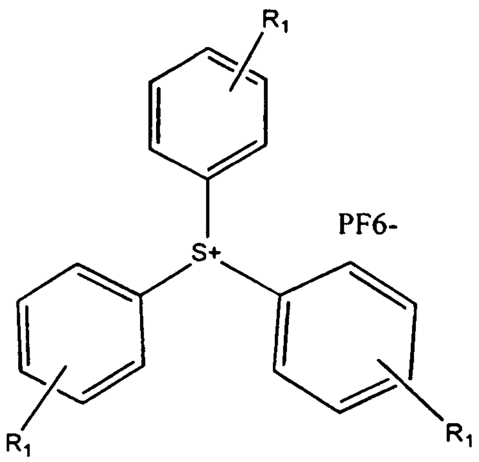

(C4) $R_1$ is $OC_4H_{10}$

Thereafter, by using an ultrasonic dispersion head (Nippon Seiki Co., Ltd.: 24 KHz, 600 W), the dispersion was re-dispersed, while being cooled, for one hour at a temperature of not higher than 40°C, thereby performing re-dispersion/ dispersion stabilization.

As a result of TEM, the second resinous dispersing agent incorporated was observed as being adsorbed, together with the first resinous dispersing agent, onto the surface of pigment at an amount of not less than 90%. The accurate coverage of resin was identified as follows. First of all, re-dispersion by centrifugal separation/decantation and ultrasonication (24 KHz, 300W) was repeated to manufacture a pigment dispersion where redundant resin was washed out. Then, the pigment in this dispersion was subjected to thermogravimetric analysis (TG) to accurately identify the coverage of resin, the results being shown in the following Tables 5 to 8. By using each of these pigments, dispersions of comparative examples (Rf) were prepared without the incorporation of the second resinous dispersing agent. Tables 5 and 6 show the blue pigment dispersions and the black pigment dispersions, respectively. Tables 7 and 8 show the yellow dispersions.

Table 5

| Pigment dispersion | 2nd dispersing agent | | Ionic compound | | Remarks |
|---|---|---|---|---|---|
| | Kinds | Content (%) | Kinds | Content (%) | |
| II-C1(1)25s | DA | 14 | C2 | 3.75 | Not tinted |
| II-C1(2)25s | DA | 15 | C2 | 3.75 | Poor tinting |
| II-C1(10)25s | DA | 16 | C2 | 3.75 | |
| II-C1(25)25s | DA | 14 | C2 | 3.75 | |

(continued)

| Pigment dispersion | 2nd dispersing agent | | Ionic compound | | Remarks |
|---|---|---|---|---|---|
| | Kinds | Content (%) | Kinds | Content (%) | |
| II-C1(35)25s | DA | 15 | C2 | 3.75 | High viscosity |
| II-C1(25)5s | DA | 16 | C2 | 3.75 | |
| II-C1(25)10s | DA | 15 | C2 | 3.75 | |
| II-C1(25)20s | DA | 13 | C2 | 3.75 | |
| II-C1(25)30s | DA | 15 | C2 | 3.75 | |
| II-C1(25)35s | DA | 16 | C2 | 3.75 | High viscosity |
| II-C2(1)25c | DA | 16 | C2 | 3.75 | Not tinted |
| II-C2(2)25c | DA | 12 | C2 | 3.75 | Poor tinting |
| II-C2(10)25c | DA | 15 | C2 | 3.75 | |
| II-C2(25)25c | DA | 15 | C2 | 3.75 | |
| II-C2(35)25c | DA | 16 | C2 | 3.75 | High viscosity |
| II-C2(25)5c | DA | 14 | C2 | 3.75 | |
| II-C2(25)10c | DA | 15 | C2 | 3.75 | |
| II-C2(25)20c | DA | 15 | C2 | 3.75 | |
| II-C2(25)30c | DA | 16 | C2 | 3.75 | |
| II-C2(25)35c | DA | 12 | C2 | 3.75 | High viscosity |
| II-C3(25)30el | DB | 18 | C5 | 3.75 | |
| II-C3(25)40el | DB | 19 | C5 | 3.75 | |
| II-C3(25)50el | DB | 13 | C5 | 3.75 | High viscosity |
| II-C2(1)25ox | DA | 15 | C1 | 3.75 | Not tinted |
| II-C2(2)2ox | DA | 17 | C1 | 3.75 | Poor tinting |
| II-C2(10)25ox | DA | 18 | C1 | 3.75 | |
| II-C2(25)25ox | DA | 14 | C1 | 3.75 | |
| II-C2(25)25m | DA | 15 | C3 | 3.75 | |
| II-C2(25)25on | DA | 15 | C4 | 3.75 | |
| II-C2(25)25ib | DA | 15 | C4 | 3.75 | |
| Rf-C1(25)30s | Not | 0 | C2 | 3.75 | |
| Rf-C2(25)30c | Not | 0 | C2 | 3.75 | |

Table 6

| Pigment dispersion | 2nd dispersing agent | | Ionic compound | | Remarks |
|---|---|---|---|---|---|
| | Kinds | Content (%) | Kinds | Content (%) | |
| II-B(1)25s | DA | 14 | C2 | 3.75 | Not tinted |
| II-B(2)25s | DA | 15 | C2 | 3.75 | Poor tinting |
| II-B(10)25s | DA | 16 | C2 | 3.75 | |
| II-B(25)25s | DA | 14 | C2 | 3.75 | |
| II-B(35)25s | DA | 15 | C2 | 3.75 | viscosity |

(continued)

| Pigment dispersion | 2nd dispersing agent | | Ionic compound | | Remarks |
|---|---|---|---|---|---|
| | Kinds | Content (%) | Kinds | Content (%) | |
| II-B(25)5s | DA | 16 | C2 | 3.75 | |
| II-B(25)10s | DA | 15 | C2 | 3.75 | |
| II-B(25)20s | DA | 13 | C2 | 3.75 | |
| II-B(25)30s | DA | 15 | C2 | 3.75 | |
| II-B(25)35s | DA | 16 | C2 | 3.75 | High viscosity |
| II-B(1)25c | DA | 16 | C2 | 3.75 | Not tinted |
| II-B(2)25c | DA | 12 | C2 | 3.75 | Poor tinting |
| II-B(10)25c | DA | 15 | C2 | 3.75 | |
| II-B(25)25c | DA | 15 | C2 | 3.75 | |
| II-B(35)25c | DA | 16 | C2 | 3.75 | High viscosity |
| II-B(25)5c | DA | 14 | C2 | 3.75 | |
| II-B(25)10c | DA | 15 | C2 | 3.75 | |
| II-B(25)20c | DA | 15 | C2 | 3.75 | |
| II-B(25)30c | DA | 16 | C2 | 3.75 | |
| II-B(25)35c | DA | 12 | C2 | 3.75 | High viscosity |
| II-B (25) 30el | DB | 18 | C5 | 3.75 | |
| II-B(25)40el | DB | 19 | C5 | 3.75 | |
| II-B(25)50lel | DB | 13 | C5 | 3.75 | High viscosity |
| II-B(1)25ox | DA | 15 | C1 | 3.75 | Not tinted |
| II-B(2)2ox | DA | 17 | C1 | 3.75 | Poor tinting |
| II-B(10)25ox | DA | 18 | C1 | 3.75 | |
| II-B(25)25ox | DA | 14 | C1 | 3.75 | |
| II-B(25)25m | DA | 15 | C3 | 3.75 | |
| II-B (25) 25on | DA | 15 | C4 | 3.75 | |
| II-B(25)25ib | DA | 15 | C4 | 3.75 | |
| Rfl-B (25) 30s | Not | 0 | C2 | 3.75 | |
| Rf2-B (25) 30c | Not | 0 | C2 | 3.75 | |

Table 7

| Pigment dispersion | 2nd dispersing agent | | Ionic compound | | Remarks |
|---|---|---|---|---|---|
| | Kinds | Content (%) | Kinds | Content (%) | |
| II-Y1(1)50s | DA | 14 | C2 | 3.75 | Not tinted |
| II-Y1(2)SOs | DA | 15 | C2 | 3.75 | Poor tinting |
| II-Y1 (10) 50s | DA | 16 | C2 | 3.75 | |
| II-Y1(25)50s | DA | 14 | C2 | 3.75 | |
| II-Y1(35)50s | DA | 15 | C2 | 3.75 | High viscosity |
| II-Y1(25)5s | DA | 13 | C2 | 3.75 | |

(continued)

| Pigment dispersion | 2nd dispersing agent | | Ionic compound | | Remarks |
|---|---|---|---|---|---|
| | Kinds | Content (%) | Kinds | Content (%) | |
| II-Y1(25)10 | DA | 14 | C2 | 3.75 | |
| II-Y1(25)15s | DA | 16 | C2 | 3.75 | |
| II-Y1(25)30s | DA | 15 | C2 | 3.75 | |
| II-Y1(25)45s | DA | 13 | C2 | 3.75 | |
| II-Y1(25)60s | DA | 15 | C2 | 3.75 | |
| II-Y1 (25) 65s | DA | 16 | C2 | 3.75 | High viscosity |
| II-Y1 (1) 50c | DA | 16 | C2 | 3.75 | Not tinted |
| II-Y1 (2) 50c | DA | 12 | C2 | 3.75 | Poor tinting |
| II-Y1 (10) 50c | DA | 15 | C2 | 3.75 | |
| II-Y1 (25) 50c | DA | 15 | C2 | 3.75 | |
| II-Y1 (35) 50c | DA | 16 | C2 | 3.75 | High viscosity |
| II-Y1(25)5c | DA | 14 | C2 | 3.75 | |
| II-Y1 (25) 10c | DA | 13 | C2 | 3.75 | |
| II-Y1(25)15c | DA | 14 | C2 | 3.75 | |
| II-Y1(25)30c | DA | 15 | C2 | 3.75 | |
| II-Y1(25)45c | DA | 15 | C2 | 3.75 | |
| II-Y1(25)60c | DA | 16 | C2 | 3.75 | |
| II-Y1(25)65c | DA | 12 | C2 | 3.75 | High viscosity |

Table 8

| Pigment dispersion | 2nd dispersing agent | | Ionic compound | | Remarks |
|---|---|---|---|---|---|
| | Kinds | Content (%) | Kinds | Content (%) | |
| II-Y2(25)50e1 | DB | 18 | C5 | 3.75 | |
| II-Y2(25)60e1 | DB | 19 | C5 | 3.75 | |
| II-Y2 (25) 70el | DB | 13 | C5 | 3.75 | High viscosity |
| II-Y1(1)45ox | DA | 15 | C1 | 3.75 | Not tinted |
| II-Y1(2)45ox | DA | 17 | C1 | 3.75 | Poor tinting |
| II-Y1(10) 45ox | DA | 18 | C1 | 3.75 | |
| II-Y1(25) 45ox | DA | 14 | C1 | 3.75 | |
| II-Y1(25) 45m | DA | 15 | C3 | 3.75 | |
| II-Y1 (25) 45on | DA | 15 | C4 | 3.75 | |
| II-Y1(25)95ib | DA | 15 | C4 | 3.75 | |
| II-Y1(25)5s-a | DA | 15 | C2 | 3.75 | |
| II-Y1(25) 10s-a | DA | 14 | C2 | 3.75 | |
| II-Y1(25)15s-a | DA | 16 | C2 | 3.75 | |
| II-Y1(25)30s-a | DA | 16 | C2 | 3.75 | |
| II-Y1(25)95s-a | DA | 17 | C2 | 3.75 | |

(continued)

| Pigment dispersion | 2nd dispersing agent | | Ionic compound | | Remarks |
|---|---|---|---|---|---|
| | Kinds | Content (%) | Kinds | Content (%) | |
| II-Y1(25)60s-a | DA | 15 | C2 | 3.75 | |
| II-Y1(25)65s-a | DA | 14 | C2 | 3.75 | High viscosity |
| II-Y1(25)5s-b | DA | 16 | C2 | 3.75 | |
| II-Y1(25)10s-b | DA | 16 | C2 | 3.75 | |
| II-Y1(25)15s-b | DA | 15 | C2 | 3.75 | |
| II-Y1(25)30s-b | DA | 17 | C2 | 3.75 | |
| II-Y1(25)45s-b | DA | 14 | C2 | 3.75 | |
| II-Y1(25)60s-b | DA | 18 | C2 | 3.75 | |
| II-Y1(25)65s-b | DA | 15 | C2 | 3.75 | High viscosity |
| Rf1-Y(2S) 50s | Not | 0 | C2 | 3.75 | |
| Rf2-Y(25)50c | Not | 0 | C2 | 3.75 | |

In the above Tables 5 to 8, the content of the second resinous dispersing agent represents a percentage by weight based on the weight of pigment, and the content of the ionic compound represents a percentage by weight based on a total weight of solvent.

The pigment dispersions shown in Tables 5 to 8 were respectively left to stand for 10 days at a temperature of 65°C to perform an accelerated test. Then, the particle diameter ($d_1$) of the pigment particle was investigated. In this case, the particle diameter of the pigment particle after dilution was measured by HPPS measuring apparatus (Malbern Co., Ltd.) to determine Z average particle diameter. On the other hand, the particle diameter after the thermally accelerated test was one which was measured after the thermally accelerated test which was continued for 10 days.

Based on the rate of increase ($S_A$) in particle diameter from the initial particle diameter ($d_0$), the dispersion stability was assessed as follows.

(After accelerated test) $S_A$=(($d_1$-$d_0$)/$d_0$)

A: $S_A < 1.05$

B: $1.05 \leq S_A < 1.3$

C: $S_A \geq 1.3$

The results thus obtained are summarized in the following Tables 9 to 12. In Tables 9 and 10, the results of the blue pigment dispersions and the black pigment dispersions are illustrated, respectively, and in Tables 11 and 12, the results of the yellow pigment dispersions are illustrated.

Table 9

| Pigment dispersion | Particle diameter (nm) | | stability | Remarks |
|---|---|---|---|---|
| | Initial | Aft. accelerating test | | |
| II-C1(1)25s | 107 | 108 | A | Not tinted |
| II-C1(2)25s | 110 | 107 | A | Poor tinting |
| II-C1(10)25s | 105 | 108 | A | |
| II-C1 (25) 25s | 110 | 112 | A | |
| II-C1 (35) 25s | 121 | 131 | B | High viscosity |
| II-C1 (25) 5s | 104 | 108 | A | |
| II-C1 (25) 10s | 105 | 103 | A | |
| II-C1 (25) 20s | 105 | 110 | A | |
| II-C1 (25) 30s | 110 | 110 | A | |
| II-C1(25)35s | 112 | 135 | B | High viscosity |

(continued)

| Pigment dispersion | Particle diameter (nm) | | stability | Remarks |
|---|---|---|---|---|
| | Initial | Aft. accelerating test | | |
| II-C2(1)25c | 105 | 105 | A | Not tinted |
| II-C2(2)25c | 109 | 105 | A | Poor tinting |
| II-C2(10)25c | 103 | 105 | A | |
| II-C2(25)25c | 109 | 111 | A | |
| II-C2(35)25c | 107 | 127 | B | High viscosity |
| II-C2 (25) 5c | 105 | 103 | A | |
| II-C2 (25) 10,c | 101 | 109 | A | |
| II-C2(25)20c | 106 | 116 | A | |
| II-C2(25)30c | 111 | 121 | A | |
| II-C2(25)35c | 115 | 136 | B | High viscosity |
| II-C3 (25) 30el | 125 | 130 | A | |
| II-C3 (25) 40el | 125 | 131 | A | |
| II-C3(25)50el | 123 | 135 | B | High viscosity |
| II-C2(1)25ox | 103 | 105 | A | Not tinted |
| II-C2(2)2ox | 107 | 109 | A | Poor tinting |
| II-C2 (10) 25ox | 112 | 115 | A | |
| II-C2 (25) 25ox | 104 | 110 | A | |
| II-C2(25)25m | 104 | 109 | A | |
| II-C2 (25) 25on | 109 | 109 | A | |
| II-C2 (25) 25ib | 115 | 119 | A | |
| Rf-C1(25)30s | 101 | 132 | C | |
| Rf-C2 (25) 30c | 107 | 142 | C | |

Table 10

| Pigment dispersion | Particle diameter (nm) | | stability | Remarks |
|---|---|---|---|---|
| | Initial | Aft accelerating test | | |
| II-B(1)25s | 106 | 108 | A | Not tinted |
| II-B(2)25s | 112 | 109 | A | Poor tinting |
| II-B(10)25s | 105 | 109 | A | |
| II-B (25) 25s | 112 | 112 | A | |
| II-B(35)25s | 121 | 135 | B | High viscosity |
| II-B (25) 5s | 104 | 109 | A | |
| II-B (25) 10s | 103 | 107 | A | |
| II-B (25) 20s | 106 | 110 | A | |
| II-8 (25) 30s | 108 | 112 | A | |
| II-B (25) 35s | 111 | 132 | B | High viscosity |
| II-B(1) 25c | 104 | 107 | A | Not tinted |

(continued)

| Pigment dispersion | Particle diameter (nm) | | stability | Remarks |
|---|---|---|---|---|
| | Initial | Aft accelerating test | | |
| II-B(2)25c | 105 | 105 | A | Poor tinting |
| II-B(10)25c | 105 | 106 | A | |
| II-B (25) 25c | 105 | 110 | A | |
| II-B(35)25c | 108 | 130 | B | High viscosity |
| II-B (25) 5c | 103 | 104 | A | |
| II-B (25) 10c | 109 | 108 | A | |
| I I-B (25) 20c | 110 | 117 | B | |
| II-B(25)30c | 113 | 122 | B | |
| II-B(25)35c | 113 | 126 | B | High viscosity |
| II-B(25)30el | 115 | 119 | A | |
| II-B(25)40el | 115 | 120 | A | |
| II-B(25)50el | 123 | 134 | B | High viscosity |
| II-B(1)25ox | 107 | 109 | A | Not tinted |
| II-B(2)2ox | 107 | 109 | A | Poor tinting |
| II-B(10)25ox | 113 | 117 | A | |
| II-B (25) 25ox | 105 | 109 | A | |
| II-B(25)25m | 106 | 108 | A | |
| II-B(25)25on | 111 | 110 | A | |
| II-B (25) 25ib | 120 | 119 | A | |
| Rf1-B(25)30s | 103 | 135 | C | |
| Rf2-B (25) 30c | 110 | 145 | C | |

Table 11

| Pigment dispersion | Particle diameter (nm) | | stability | Remarks |
|---|---|---|---|---|
| | Initial | Aft. accelerating test | | |
| II-Y1(1)50s | 117 | 118 | A | Not tinted |
| II-Y1(2)50s | 118 | 119 | A | Poor tinting |
| II-Y1(10)50s | 118 | 120 | A | |
| II-Y1(25)50s | 120 | 122 | A | |
| II-Y1(35)50s | 127 | 136 | B | High viscosity |
| II-Y1 (25) 5s | 119 | 125 | B | |
| II-Y1 (25) 10 | 117 | 121 | A | |
| II-Y1 (25) 15s | 115 | 120 | A | |
| II-Y1 (25) 30s | 119 | 121 | A | |
| II-Y1 (25) 45s | 120 | 121 | A | |
| II-Y1 (25) 60s | 121 | 123 | A | |
| II-Y1 (25) 65s | 120 | 136 | B | High viscosity |

(continued)

| Pigment dispersion | Particle diameter (nm) | | stability | Remarks |
|---|---|---|---|---|
| | Initial | Aft. accelerating test | | |
| II-Y1(1)50c | 116 | 116 | A | Not tinted |
| II-Y1(2)50c | 116 | 115 | A | Poor tinting |
| II-Y1(10)50c | 117 | 119 | A | |
| II-Y1(25)50c | 119 | 121 | A | |
| II-Y1(35)50c | 124 | 133 | B | High viscosity |
| II-Y1(25) 5c | 118 | 121 | A | |
| II-Y1(25)10c | 119 | 122 | A | |
| II-Y1(25)15c | 115 | 118 | A | |
| II-Y1(25)30c | 118 | 117 | A | |
| II-Yl(25)45c | 120 | 121 | A | |
| II-Y1(25)60c | 117 | 120 | A | |
| II-Y1(25)65c | 130 | 137 | B | High viscosity |

Table 12

| Pigment dispersion | Particle diameter (nm) | | stability | Remarks |
|---|---|---|---|---|
| | Initial | Aft. accelerating test | | |
| II-Y2(25) 50el | 132 | 138 | A | |
| II-Y2(25)60el | 135 | 140 | A | |
| II-Y2(25)70el | 129 | 147 | B | High viscosity |
| II-Y1(1)45ox | 109 | 111 | A | Not tinted |
| II-Y1(2)45ox | 115 | 116 | A | Poor tinting |
| II-Y1(10)45ox | 112 | 116 | A | |
| II-Y1(25)45ox | 118 | 120 | A | |
| II-Y1(25)45m | 119 | 119 | A | |
| II-Y1(25)45on | 123 | 128 | A | |
| II-Y1(25)45ib | 128 | 128 | A | |
| II-Y1(25)5s-a | 132 | 135 | A | |
| II-Y1(25)10s-a | 130 | 133 | A | |
| II-Y1(25)15s-a | 136 | 138 | A | |
| II-Y1(25)30s-a | 134 | 137 | A | |
| II-Y1(25)95s-a | 142 | 141 | A | |
| II-Y1 (25) 60s-a | 144 | 145 | A | |
| II-Y1(25)65s-a | 143 | 152 | B | High viscosity |
| II-Y1(25)5s-b | 120 | 129 | B | |
| II-Yl(25)10s-b | 116 | 119 | A | |
| II-Y1(25)15s-b | 118 | 119 | A | |
| II-Y1(25)30s-b | 120 | 123 | A | |

(continued)

| Pigment dispersion | Particle diameter (nm) | | stability | Remarks |
|---|---|---|---|---|
| | Initial | Aft. accelerating test | | |
| II-Y1(25)45s-b | 124 | 125 | A | |
| II-Y1(25)60s-b | 126 | 127 | A | |
| II-Y1(25)65s-b | 125 | 137 | B | High viscosity |
| Rf1-Y(25)50s | 118 | 150 | C | |
| Rf2-Y (25) 50c | 120 | 157 | C | |

As shown in the above Tables 9 to 12, irrespective of the kinds of pigment, the dispersions of comparative examples where the second resinous dispersing agent was not incorporated therein were found inferior in dispersion stability of pigment.

Then, several kinds of dispersions were selected from the dispersions shown in Tables 5 to 8 and the mixing amount of the second resinous dispersing agent was variously altered. The resultant compositions thereof are summarized in the following Tables 13 to 16. Tables 13 and 14 show the compositions of the blue pigment dispersions and the black pigment dispersions, respectively, and Tables 15 and 16 show the compositions of the yellow pigment dispersions.

Table 13

| Pigment dispersion | 2nd dispersing agent | | Ionic compound | | Remarks |
|---|---|---|---|---|---|
| | Kinds | Content (%) | Kinds | Content (%) | |
| III-C1(25)30s2 | DA | 2 | C2 | 3.75 | |
| III-Cl(25)30s5 | DA | 5 | C2 | 3.75 | |
| III-C1(25)30s10 | DA | 10 | C2 | 3.75 | |
| III-Cl(25)30s20 | DA | 20 | C2 | 3.75 | |
| III-Cl(25)30s20 | DA | 25 | C2 | 3.75 | |
| III-C1(25)30s35 | DA | 35 | C2 | 3.75 | |
| III-C2(25)30c2 | DA | 2 | C2 | 3.75 | |
| III-C2(25)30c5 | DA | 5 | C2 | 3.75 | |
| III-C2(25)30c10 | DA | 10 | C2 | 3.75 | |
| III-C2(25)30c20 | DA | 20 | C2 | 3.75 | |
| III-C2 (25) 30c25 | DA | 25 | C2 | 3.75 | |
| III-C2 (25) 30c35 | DA | 35 | C2 | 3.75 | |
| III-C2(25)25ox2 | DA | 2 | C2 | 3.75 | |
| III-C2(25)25ox5 | DA | 5 | C2 | 3.75 | |
| III-C2(25)25ox10 | DA | 10 | C2 | 3.75 | |
| III-C2(25)25ox20 | DA | 20 | C2 | 3.75 | |
| III-C2(25)25ox25 | DA | 25 | C2 | 3.75 | |
| III-C2(25)25ox35 | DA | 35 | C2 | 3.75 | |
| III-C2(25)25on2 | DA | 2 | C2 | 3.75 | |
| III-C2(25)25on5 | DA | 5 | C2 | 3.75 | |
| III-C2(25)25on10 | DA | 10 | C5 | 3.75 | |
| III-C2(25)25on20 | DA | 20 | C5 | 3.75 | |
| III-C2(25)25on25 | DA | 25 | C5 | 3.75 | |

(continued)

| Pigment dispersion | 2nd dispersing agent | | Ionic compound | | Remarks |
|---|---|---|---|---|---|
| | Kinds | Content (%) | Kinds | Content (%) | |
| III-C2(25)25on35 | DA | 35 | C1 | 3.75 | |

Table 14

| Pigment dispersion | 2nd dispersing agent | | Photo-acid generating agent | | Remarks |
|---|---|---|---|---|---|
| | Kinds | Content (%) | Kinds | Content (%) | |
| III-B(25)30s2 | DA | 2 | C2 | 3.75 | |
| III-B(25)30s5 | DA | 5 | C2 | 3.75 | |
| III-B(25)30s10 | DA | 10 | C2 | 3.75 | |
| III-B(25)30s20 | DA | 20 | C2 | 3.75 | |
| III-B(25)30s20 | DA | 25 | C2 | 3.75 | |
| III-B(25)30s35 | DA | 35 | C2 | 3.75 | |
| III-B(25)30c2 | DA | 2 | C2 | 3.75 | |
| III-B(25)30c5 | DA | 5 | C2 | 3.75 | |
| III-B(25)30c10 | DA | 10 | C2 | 3.75 | |
| III-B(25)30c20 | DA | 20 | C2 | 3.75 | |
| III-B(25)30c25 | DA | 25 | C2 | 3.75 | |
| III-B(25)30c35 | DA | 35 | C2 | 3.75 | |
| III-B(25)25ox2 | DA | 2 | C2 | 3.75 | |
| III-B(25)25ox5 | DA | 5 | C2 | 3.75 | |
| III-B(25)25oxlO | DA | 10 | C2 | 3.75 | |
| III-B(25)25ox2O | DA | 20 | C2 | 3.75 | |
| III-B(25)25ox25 | DA | 25 | C2 | 3.75 | |
| III-B(25)25ox35 | DA | 35 | C2 | 3.75 | |
| III-B(25)25on2 | DA | 2 | C2 | 3.75 | |
| III-B(25)25on5 | DA | 5 | C2 | 3.75 | |
| III-B(25)25onlO | DA | 10 | C5 | 3.75 | |
| III-B(25)25on20 | DA | 20 | C5 | 3.75 | |
| III-B(25)25on25 | DA | 25 | C5 | 3.75 | |
| III-B(25)25on35 | DA | 35 | C1 | 3.75 | |

Table 15

| Pigment dispersion | 2nd dispersing agent | | Ionic compound | | Remarks |
|---|---|---|---|---|---|
| | Kinds | Content (%) | Kinds | Content (%) | |
| III-Y1(25)50s0.5 | DA | 0.5 | C2 | 3.75 | |
| III-Y1(25)50s1 | DA | 1 | C2 | 3.75 | |
| III-Y1(25)50s5 | DA | 5 | C2 | 3.75 | |

(continued)

| Pigment dispersion | 2nd dispersing agent | | Ionic compound | | Remarks |
|---|---|---|---|---|---|
| | Kinds | Content (%) | Kinds | Content (%) | |
| III-Y1(25)50s10 | DA | 10 | C2 | 3.75 | |
| III-Y1(25)50s20 | DA | 20 | C2 | 3.75 | |
| III-Y1(25)50s25 | DA | 25 | C2 | 3.75 | |
| III-Y1(25)50s35 | DA | 35 | C2 | 3.75 | |
| III-Y1(25)50c0.5 | DA | 0.5 | C2 | 3.75 | |
| III-Y1(25)50cl | DA | 1 | C2 | 3.75 | |
| III-Y1(25)50c5 | DA | 5 | C2 | 3.75 | |
| III-Y1(25)50c10 | DA | 10 | C2 | 3.75 | |
| III-Y1(25)50c20 | DA | 20 | C2 | 3.75 | |
| III-Y1(25)50c25 | DA | 25 | C2 | 3.75 | |
| III-Y1(25)50c35 | DA | 35 | C2 | 3.75 | |
| III-Y1(25)45ox0.5 | DA | 0.5 | C2 | 3.75 | |
| III-Y1(25)45ox1 | DA | 1 | C2 | 3.75 | |
| III-Y1(25)45ox5. | DA | 5 | C2 | 3.75 | |
| III-Y1 (25) 45ox10 | DA | 10 | C2 | 3.75 | |
| III-Y1 (25) 45ox20 | DA | 20 | C2 | 3.75 | |
| III-Y1 (25) 45ox25 | DA | 25 | C2 | 3.75 | |
| III-Y1 (25) 45ox35 | DA | 35 | C2 | 3.75 | |
| III-Y1 (25) 45on0.5 | DA | 0.5 | C2 | 3.75 | |

Table 16

| Pigment dispersion | 2nd dispersing agent | | Ionic compound | | Remarks |
|---|---|---|---|---|---|
| | Kinds | Content (%) | Kinds | Content (%) | |
| III-Y1 (25) 45on1 | DA | 1 | C2 | 3.75 | |
| III-Y1 (25) 45on5 | DA | 5 | C2 | 3.75 | |
| III-Y1(25) 45on10 | DA | 10 | C2 | 3.75 | |
| III-Y1 (25) 45on20 | DA | 20 | C2 | 3.75 | |
| III-Y1 (25) 45on25 | DA | 25 | C2 | 3.75 | |
| III-Y1 (25) 45on35 | DA | 35 | C1 | 3.75 | |
| III-Y1 (25) 45s-a0.5 | DA | 0.5 | C2 | 3.75 | |
| III-Y1 (25) 95s-a1 | DA | 1 | C2 | 3.75 | |
| III-Y1(25)45s-a5 | DA | 5 | C2 | 3.75 | |
| III-Y1(25)45s-a10 | DA | 10 | C2 | 3.75 | |
| III-Y1(2S)4Ss-a20 | DA | 20 | C2 | 3.75 | |
| III-Y1(25)45s-a25 | DA | 25 | C2 | 3.75 | |
| III-Y1(25)45s-a35 | DA | 35 | C2 | 3.75 | |
| III-Yl(25)45s-b0.5 | DA | 0.5 | C2 | 3.75 | |

(continued)

| Pigment dispersion | 2nd dispersing agent | | Ionic compound | | Remarks |
|---|---|---|---|---|---|
| | Kinds | Content (%) | Kinds | Content (%) | |
| III-Y1(25)45s-b1 | DA | 1 | C2 | 3.75 | |
| III-Y1(25)45s-b5 | DA | 5 | C2 | 3.75 | |
| III-Y1(25)95s-b10 | DA | 10 | C2 | 3.75 | |
| III-Y1(25)95s-b20 | DA | 20 | C2 | 3.75 | |
| III-Y1(25)45s-b25 | DA | 25 | C2 | 3.75 | |
| III-Y1(25)45s-b35 | DA | 35 | C2 | 3.75 | |

In the same manner as described above, the stability of each of the dispersions was assessed, the results being summarized in the Tables 17 to 20. Tables 17 and 18 show the results of the blue pigment dispersions and the black pigment dispersions, respectively, and Tables 19 and 20 show the results of the yellow pigment dispersions.

Table 17

| Pigment dispersion | Particle diameter (nm) | | Stability | Remarks |
|---|---|---|---|---|
| | Initial | Aft. accelerating test | | |
| III-C1 (25) 30s2 | 101 | 132 | B | |
| III-C1 (25) 30s5 | 102 | 130 | B | |
| III-C1 (25) 30s10 | 106 | 109 | A | |
| III-C1 (25) 30s20 | 108 | 108 | A | |
| III-C1 (25) 30s20 | 108 | 112 | A | |
| III-C1 (25) 30s35 | 116 | 142 | B | |
| III-C2(25)30c2 | 107 | 130 | B | |
| III-C2 (25) 30c5 | 105 | 114 | A | |
| III-C2(25)30c10 | 104 | 108 | A | |
| III-C2(25)30c20 | 104 | 108 | A | |
| III-C2 (25) 30c25 | 112 | 115 | A | |
| III-C2(25)30c35 | 115 | 135 | B | |
| III-C2(25)25ox2 | 112 | 138 | B | |
| III-C2(25)25ox5 | 109 | 114 | A | |
| III-C2(25)25ox10 | 105 | 109 | A | |
| III-C2(25)25ox20 | 104 | 108 | A | |
| III-C2(25)25ox25 | 103 | 109 | A | |
| III-C2 (25)25ox35 | 110 | 115 | A | |
| III-C2(25)25on2 | 105 | 139 | B | |
| III-C2(25)25on5 | 105 | 115 | A | |
| III-C2(25)25on10 | 107 | 112 | A | |
| III-C2(25)25on20 | 109 | 109 | A | |
| III-C2(25)25on25 | 112 | 110 | A | |
| III-C2 (25) 25on35 | 113 | 140 | B | |

Table 18

| Pigment dispersion | Particle diameter (nm) | | Stability | Remarks |
|---|---|---|---|---|
| | Initial | Aft. accelerating test | | |
| III-B(25)30s2 | 113 | 132 | B | |
| III-B(25)30s5 | 112 | 131 | B | |
| III-B(25)30s10 | 113 | 109 | A | |
| III-B(25)30s20 | 107 | 109 | A | |
| III-B(25)30s20 | 107 | 110 | A | |
| III-B(25)30s35 | 118 | 144 | B | |
| III-B (25) 30c2 | 109 | 129 | B | |
| III-B(25)30c5 | 110 | 115 | A | |
| III-B(25)30c10 | 109 | 111 | A | |
| III-B(25)30c20 | 108 | 113 | A | |
| III-B(25)30c25 | 111 | 114 | A | |
| III-B(25)30c35 | 116 | 128 | B | |
| III-B(25)25ox2 | 113 | 135 | B | |
| III-B(25)25ox5 | 110 | 113 | A | |
| III-B(25)250x10 | 105 | 105 | A | |
| III-B(25)25ox20 | 105 | 106 | A | |
| III-B (25) 25ox25 | 105 | 110 | A | |
| III-B(25)25ox35 | 110 | 121 | B | |
| III-B(25)25on2 | 110 | 138 | B | |
| III-B(25)25on5 | 111 | 114 | A | |
| III-B (25) 25on10 | 108 | 116 | A | |
| III-B(25)25on20 | 108 | 109 | A | |
| III-B(25)25on25 | 111 | 111 | A | |
| III-B (25) 25on35 | 115 | 141 | B | |

Table 19

| Pigment dispersion | Particle diameter (nm) | | Stability | Remarks |
|---|---|---|---|---|
| | Initial | Aft. accelerating test | | |
| III-Y1(25)50s0.5 | 123 | 152 | B | |
| III-Y1(25)50s1 | 125 | 130 | A | |
| III-Y1(25)50s5 | 122 | 124 | A | |
| III-Y1(25)50s10 | 126 | 127 | A | |
| III-Y125)50s20 | 128 | 128 | A | |
| III-Y1(25)50s25 | 128 | 132 | A | |
| III-Y1(25)50s35 | 136 | 162 | B | |
| III-Y1(25)50c0.5 | 127 | 155 | B | |

(continued)

| Pigment dispersion | Particle diameter (nm) | | Stability | Remarks |
|---|---|---|---|---|
| | Initial | Aft. accelerating test | | |
| III-Y1(25)50c1 | 127 | 132 | A | |
| III-Y1(25)50c5 | 125 | 129 | A | |
| III-Y1 (25) 50c10 | 124 | 125 | A | |
| III-Y1(25)50c20 | 124 | 128 | A | |
| III-Y1(25)50c25 | 132 | 135 | A | |
| III-Y1(25)50c35 | 135 | 155 | B | |
| III-Y1(25)45ox0.5 | 131 | 139 | B | |
| III-Y1(25) 45ox1. | 131 | 135 | A | |
| III-Y1(25)45ox5 | 119 | 122 | A | |
| III-Y1(25)45ox10 | 115 | 114 | A | |
| III-Y1(25)45ox20 | 120 | 122 | A | |
| III-Y1(25)95ox25 | 113 | 109 | A | |
| III-Y1(25)45ox35 | 119 | 123 | B | |

Table 20

| Pigment dispersion | Particle diameter (nm) | | Stability | Remarks |
|---|---|---|---|---|
| | Initial | Aft. accelerating test | | |
| III-Y1(25)45ox0.5 | 119 | 120 | A | |
| III-Y1(25)45on1 | 129 | 127 | A | |
| III-Y1(25)45on5 | 125 | 135 | A | |
| III-Y1(25)45on10 | 127 | 135 | A | |
| III-Y1(25)45on20 | 126 | 129 | A | |
| III-Y1(25)45on25 | 122 | 127 | A | |
| III-Y1(25)95on35 | 123 | 158 | B | |
| III-Y1(25)45s-a0.5 | 140 | 160 | B | |
| III-Y1(25)45s-a1 | 140 | 146 | A | |
| III-Y1(25)45s-a5 | 146 | 148 | A | |
| III-Y1(25)45s-a10 | 144 | 144 | A | |
| III-Y1(25)95s-a20 | 140 | 144 | A | |
| III-Y1(25)95s-a25 | 146 | 150 | A | |
| III-Y1(25)45s-a35 | 135 | 160 | B | |
| III-Y1(25)45s-b0.5 | 124 | 150 | B | |
| III-Y1(25)45s-b1. | 121 | 126 | A | |
| III-Y1(25)45s-b5 | 128 | 130 | A | |
| III-Y1(25)45s-b10 | 126 | 131 | A | |
| III-Y1(25)45s-b20 | 125 | 130 | A | |
| III-Y1(25)45s-b25 | 132 | 137 | A | |

(continued)

| Pigment dispersion | Particle diameter (nm) | | Stability | Remarks |
|---|---|---|---|---|
| | Initial | Aft. accelerating test | | |
| III-Y1(25)45s-b35 | 133 | 170 | B | |

As shown in Tables 17 to 20, every pigments fundamentally exhibited a stability of B or more.

By using some of the dispersions shown in Tables 5 to 8 and Tables 13 to 16, the inkjet inks were prepared according to the formulations shown in Tables 21 to 23. The following Tables 21, 22 and 23 show the inks where the blue pigment dispersions, the black pigment dispersions and the yellow pigment dispersions were employed, respectively.

In the following tables, OXT-221 (trade name) incorporated as the dispersion medium 2 is an oxetane compound mentioned previously, i.e. di[1-ethyl(3-oxetanyl)]methyl ether (available from Toa Gosei Co., Ltd.), DVE-3 (trade name) incorporated likewise is a vinyl ether compound (triethyleneglycol vinyl ether (available from ISP Japan Co., Ltd.), C2021P (trade name) incorporated likewise is an epoxy compound (Celloxide 2021P (trade name); available from DAICEL Chemical Industries Ltd.), TMPTA (trade name) incorporated likewise is trimethylolpropane triacrylate (available from Aldrich Co., Ltd. and including 5% of Irgacure 365 (Ciba-Geigy Co., Ltd.)), and EL incorporated likewise is ethyl lactate. Further, as for the ionic compound or photo-acid generating agent, the same kinds of materials as those of the dispersants were employed and adjusted so as formulated to have a concentration to a total of the solvents shown in the tables.

Further, by using the dispersions of comparative examples described in Tables 5, 6 and 8, the inkjet inks (LL-Rf) of comparative examples were prepared.

Table 21

| Ink | Dispersing medium 1 | | Dispersing medium 2 | Ionic compound |
|---|---|---|---|---|
| | Pigment dispersion | Diluent | | |
| LL-C1 | III-C1(25)30s20 | C3000 | C2021P | 3.75 |
| LL-C2 | III-C2(25)25ox20 | OXT-221 | SR-NPG | 3.75 |
| LL-C3 | III-C2(25)25on25 | ONB-DVE | DVE-3 | 3.75 |
| LL-C4 | III-C2(25)30c20 | C3000 | OXT221 | 3.75 |
| LL-C5 | I-C3(25)30el | EL | EL | 3.75 |
| LL-C6 | I-C2(25)25ib | IBA | TMPTA | 3.75 |
| LL-RfC1 | Rf-C1 (25) 30s | SR-NPG | OXT-221 | 3.75 |
| LL-RfC2 | Rf-C2 (25) 30c | C3000 | C2021P | 3.75 |

Table 22

| Ink | Dispersing medium | | Dispersing medium 2 | Photo-acid generating agent |
|---|---|---|---|---|
| | Pigment dispersion | Diluent | | |
| LL-B1 | III-B(25)30s20 | C3000 | C2021P | 3.75 |
| LL-B2 | III-B (25) 25ox20 | OXT-221 | SR-NPG | 3.75 |
| LL-B3 | III-B (25) 25on25 | ONB-DVE | DVE-3 | 3.75 |
| LL-B4 | III-B (25) 30c20 | C3000 | OXT221 | 3.75 |
| LL-B5 | III-B (25) 30el | EL | EL | 3.75 |
| LL-B6 | I-B(25) 25ib | IBA | TMPTA | 3.75 |
| LL-RfB1 | Rf1-B (25) 30s | SR-NPG | OXT-221 | 3.75 |
| LL-RfB2 | Rf2-B(25)30c | C3000 | C2021P | 3.75 |

The photo-acid generating agent shown in Table 22 included dibutoxy anthracene incorporated therein as a

sensitizing agent, the mixing amount of which being 30% by weight based on the photo-acid generating agent.

Table 23

| Ink | Dispersing medium 1 | | Dispersing medium 2 | Ionic compound |
|---|---|---|---|---|
| | Pigment dispersion | Diluent | | |
| LL-Y1 | III-Y1(25)50s20 | C3000 | C2021P | 3.75 |
| LL-Y2 | III-Y1(25)45ox2O | OXT-221 | SR-NPG | 3.75 |
| LL-Y3 | III-Y1(25)45on25 | ONB-DVE | DVE-3 | 3.75 |
| LL-Y4 | III-Y1(25)50c20 | C3000 | OXT221 | 3.75 |
| LL-Y5 | II-Y2(25)50el | EL | EL | 3.75 |
| LL-Y6 | III-Y1(25)45s-a20 | SR-NPG | OXT221 | 3.75 |
| LL-Y7 | III-Y1(25)95s-b20 | SR-NPG | OXT221 | 3.75 |
| LL-Y8 | I-Y1(25)45ib | IBA | TMPTA | 3.75 |
| LL-RfY1 | Rf1-Y(25)50s | SR-NPG | OXT-221 | 3.75 |
| LL-RfY2 | Rf2-Y(25)50c | C3000 | C2021P | 3.75 |

Next, by using the ink-jet recording apparatus shown in FIG. 1, the performance test of each of the liquid inks was executed.

The liquid inks formulated as shown in Tables 21 to 23 were subjected to filtration using a 1 $\mu$m membrane filter to prepare the inks. As for the recording medium 2, the ordinary enameled paper was employed. As for the light source 5, an ultra-high pressure mercury lamp having an output of 230 W was employed with the exposure dosage thereof being set to 500 mJ/cm$^2$ (however, light was not irradiated in the cases of LL-C5, LL-B5 and LL-Y5). Further, the temperature of the recording head 4 was maintained at a temperature of 45°C. As for the heating mechanism 6, a 600 W infrared ceramic heater was employed.

The pencil hardness, printing stability, solvent resistance and image quality of the ink layer thus formed were assessed as follows.

The printing stability was indicated by the frequency of discharge error (the number of times) per 24 hours.

The solvent resistance was evaluated by examining the resistance thereof to three kinds of solvents including water, ethanol and acetone, wherein the sample which was resistive only to water was marked with the number of "I", the sample which was resistive to water and ethanol was marked with the number of "2", and the sample which was resistive to all of water, ethanol and acetone was marked with the number of "3".

The quality of image was determined visually and the image having any problem was illustrated about the situation thereof. Incidentally, in the case of the sample where a slight degree of disturbance (such as mis-direction shot) could be more or less observed in its image but the level of the disturbance was such that could not be noticed of unless it was investigated in detail, the sample was defined as "good". The sample which was completely free form any error shot was defined as "excellent". The sample which was prominent in mis-direction shot but the magnitude thereof was such a level that did not obstruct the reading of letters was defined as "fair".

The results obtained are summarized, together with the assessments of accelerated test of each of the inks, in the following Tables 24 to 26. Table 24 shows the results of the blue inks. Incidentally, since the inks where EL was employed as a solvent were not a curable ink, the hardness and solvent resistance thereof were not measured.

Table 24

| Ink | Evaluation of accelerated test | Pencil hardness | Printing stability | Solvent resistance | Quality of printing |
|---|---|---|---|---|---|
| LL-C1 | A | F(H) | 0 | 1 | Excellent |
| LL-C2 | A | F | 1 | 1 | Excellent |
| LL-C3 | A | 2H | 1 | 1 | Excellent |
| LL-C4 | A | F(H) | 0 | 1 | Excellent |
| LL-C5 | A | - | 2 | - | Excellent |

(continued)

| Ink | Evaluation of accelerated test | Pencil hardness | Printing stability | Solvent resistance | Quality of printing |
|---|---|---|---|---|---|
| LL-C6 | A | HB | 3 | 1 | Excellent |
| LL-RfC1 | C | F(H) | 10 | 1 | Good-Fair |
| LL-RfC2 | C | F(H) | 7 | 1 | Good-Fair |

As shown in Table 24, the blue inks according to Examples of the present invention were all stable in the accelerated test and in the printing, and the quality of image obtained was also excellent. As apparent from these results, it was possible to obtain a printed matter having excellent properties through the curing of the blue inks of Examples. On the other hand, in case of the inks of Comparative Examples, it will be recognized that the particle diameter was caused to increase, thus instabilizing the discahrge of ink and the quality of image obtained was also not so good as some degree of mis-direction shot was observed.

It will be seen from these results that when the mixing amount of the blue pigment was confined to the range of 2 to 30% by weight based on a total weight of the dispersing medium, it was possible to obtain excellent results in terms of color and dispersion stability. Further, it will be recognized that the optimum mixing amount of the first resinous dispersing agent was confined to the range of 10 to 30% by weight and the optimum mixing amount of the second resinous dispersing agent was confined to the range of 5 to 30% by weight based on a total weight of pigment. If the mixing amount of these resinous dispersing agents is too small, the feeling of color and dispersion stability would be deteriorated. On the other hand, if the mixing amount of these resinous dispersing agents is too large, the problems regarding the viscosity and dispersion stability would be raised prominently.

The following Table 25 shows the results obtained from the employment of the black ink.

Table 25

| Ink | Evaluation of accelerated test | Pencil hardness | Printing stability | Solvent resistance | Quality of printing |
|---|---|---|---|---|---|
| LL-B1 | A | F(H) | 0 | 1 | Excellent |
| LL-B2 | A | F | 1 | 1 | Excellent |
| LL-B3 | A | 2H | 1 | 1 | Excellent |
| LL-B4 | A | F(H) | 0 | 1 | Excellent |
| LL-B5 | A | - | 2 | - | Excellent |
| LL-B6 | A | HB | 2 | 1 | Excellent |
| LL-RfB1 | C | F(H) | 10 | 1 | Good-Fair |
| LL-RfB2 | C | F(H) | 7 | 1 | Good-Fair |

As shown in Table 25, the black inks according to Examples of the present invention were all stable in the accelerated test and in the printing, and the quality of image obtained was also excellent. As apparent from these results, it was possible to obtain a printed matter having excellent properties through the curing of the black inks of Examples. On the other hand, in case of the inks of Comparative Examples, it will be recognized that the particle diameter was caused to increase, thus instabilizing the delivery of ink and the quality of image obtained was also not so good as some degree of mis-direction shot was observed.

It will be seen from these results that when the mixing amount of the black pigment was confined to the range of 2 to 30% by weight based on a total weight of the dispersing medium, it was possible to obtain excellent results in terms of color and dispersion stability. Further, it will be recognized that the optimum mixing amount of the first resinous dispersing agent was confined to the range of 10 to 30% by weight and the optimum mixing amount of the second resinous dispersing agent was confined to the range of 5 to 30% by weight based on a total weight of pigment. If the mixing amount of these resinous dispersing agents is too small, the feeling of color and dispersion stability would be deteriorated. On the other hand, if the mixing amount of these resinous dispersing agents is too large, the problems regarding the viscosity and dispersion stability would be raised prominently.

The following Table 26 shows the results obtained from the employment of the yellow ink.

Table 26

| Ink | Evaluation of accelerated test | Pencil hardness | Printing stability | Solvent resistance | Quality of printing |
|---|---|---|---|---|---|
| LL-Y1 | A | F(H) | 0 | 3 | Excellent |
| LL-Y2 | A | F | 1 | 3 | Excellent |
| LL-Y3 | A | 2H | 1 | 3 | Excellent |
| LL-Y4 | A | F(H) | 0 | 3 | Excellent |
| LL-Y5 | A | - | 2 | - | Excellent |
| LL-Y6 | A | F(H) | 0 | 3 | Excellent |
| LL-Y7 | A | F(H) | 0 | 3 | Excellent |
| LL-Y8 | A | HB | 2 | 1 | Excellent |
| LL-RfY1 | C | F(H) | 10 | 1 | Good-Fiar |
| LL-RfY2 | C | F(H) | 7 | 1 | Good-Fiar |

As shown in Table 26, the yellow inks according to Examples of the present invention were all stable in the accelerated test and in the printing, and the quality of image obtained was also excellent. As apparent from these results, it was possible to obtain a printed matter having excellent properties through the curing of the yellow inks of Examples. On the other hand, in case of the inks of Comparative Examples, it will be recognized that the discharge ink was instabilized and the quality of image obtained was also not so good as some degree of mis-direction shot was observed.

It will be seen from these results that when the mixing amount of the yellow pigment was confined to the range of 2 to 30% by weight based on a total weight of the dispersing medium, it was possible to obtain excellent results in terms of color and dispersion stability. Further, it will be recognized that the optimum mixing amount of the first resinous dispersing agent was confined to the range of 10 to 60% by weight and the optimum mixing amount of the second resinous dispersing agent was confined to the range of 1 to 30% by weight based on a total weight of pigment. If the mixing amount of these resinous dispersing agents is too small, the feeling of color and dispersion stability would be deteriorated. On the other hand, if the mixing amount of these resinous dispersing agents is too large, the problems regarding the viscosity and dispersion stability would be raised prominently.

Incidentally, irrespective of the kinds of pigment, the inkjet inks of comparative examples where pigments were directly dispersed in the dispersion medium without employing the second resinous dispersing agent, the granulation of ink was confirmed as a result of the accelerated test. It was also confirmed that, due to this granulation, the frequency of error in the delivery of ink was increased by nearly one figure (i.e. ten times) as compared with the inks of Examples of the present invention.

Then, several kinds of dispersions were prepared by using dispersion mediums differing in viscosity from each other to investigate the influence of viscosity of the solvents to be employed as a dispersion medium. The solvents employed herein were SR-NPG, SR-16H (1,6-hexanediol diglycidyl ether), SR-TPG (tripropylene glycol diglycidyl ether), SR-4PG (polypropylene glycol diglycidyl ether), and SR-8EGS (polyethylene glycol diglycidyl ether), all available from Sakamoto Yakuhin Industries Ltd. These dispersion mediums were all found to have a boiling point of 150°C at 1 atm.

Pigment Yellow 139 was employed as a pigment and the concentration thereof based on a total weight of the solvents was set to 25%. By following the same procedures as in the case of the aforementioned I-Y1(25)15s-b excepting that the mixing amount of the resinous dispersing agent was set to 20% based on the weight of pigment, five kinds of yellow pigment dispersions were prepared.

To the pigment dispersions thus obtained, DA (as a second resinous dispersing agent) and (C2) (as an ionic compound) were added to prepare pigment dispersions. In this case, the content of DA was set to 20% and the content of (C2) was set to 3.75% by weight based on the solvent. Finally, C3000 was added as a diluting solvent (dispersion medium 2) to the dispersions to prepare inkjet inks. In these inks, the concentration of pigment was regulated to 4% and the ratio between the dispersion medium 1 and the dispersion medium 2 was set to 1:1.

The viscosity of the pigment dispersions and of the inks thus obtained was measured by using an E-type viscometer (Tohki Sangyo Co., Ltd.), the results being shown in the following Table 27 together with the viscosity of the dispersion medium. Further, by using each of the inkjet inks and by the inkjet recording apparatus shown in FIG. 1, performance test was executed to assess the printing stability of ink and the quality of image. The results obtained were as shown in the following Table 27.

Table 27

| Dispersing medium 1 | Viscosity (mPa·sec) | | | Printing stability | Quality of printing |
|---|---|---|---|---|---|
| | Dispersing medium 1 | Pigment dispersion | Ink | | |
| SR-NPG | 17 | 62 | 24 | 1 | Excellent |
| SR-16H | 25 | 80 | 28 | 0 | Excellent |
| SR-TPG | 30 | 95 | 32 | 1 | Excellent |
| SR-4PG | 53 | 135 | 58 | 8 | Good |
| SR-8EGS | 60 | 144 | 67 | 10 | Somewhat good |

As shown in the results of Table 27, it was found that the inks where dispersion mediums having a viscosity of not more than 30 mPa·s (25°C) were employed were excellent in printing stability as well as in quality of printed image. Further, it was found that the inks where dispersion mediums having a viscosity of more than 30 mPa·s (25°C) were employed were defective in that the frequency of delivery error of ink was increased and, at the same time, the quality of image was accompanied with mis-direction. It will be found from these results that the dispersion medium to be incorporated into a pigment dispersion should more preferably be selected from those having a viscosity of not more than 30 mPa·s (25°C).

As explained above, according to the present invention, it is possible to provide a dispersion which is minimal in the fluctuation of viscosity, stable in components thereof, and capable of obviating the problem of dispersion degradation such as flocculation and hence is especially suited for use in the inkjet ink for on-demand printing, and to provide a method of manufacturing such a dispersion.

Further, according to the present invention, it is possible to provide an inkjet ink for on-demand printing, which is minimal in the fluctuation of viscosity, stable in components thereof, and capable of obviating the problem of dispersion degradation such as flocculation of pigment, and to provide a method of manufacturing such an ink.

Furthermore, according to the present invention, it is possible to provide a printed matter which can be formed by using an inkjet ink for on-demand printing and which is minimal in the fluctuation of viscosity, stable in components thereof, and capable of obviating the problem of dispersion degradation such as flocculation of pigment.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

**1.** A dispersion for ink **characterized by** comprising:

a dispersion medium;
powder or pigment having an average particle diameter of not more than 300 nm;
a polymer dispersing agent containing a first resinous dispersing agent and a second resinous dispersing agent; and
an ionic compound;

wherein a mixing amount of the powder or pigment is confined to 2% to 60% based on a total weight of the dispersion medium, a mixing amount of the first resinous dispersing agent is confined to 1% to 60% based on a total weight of the powder or pigment, the second resinous dispersing agent is a resin having a basic terminal and a mixing amount of the second resinous dispersing agent is confined to 1% to 30% based on a total weight of the powder or pigment, and a mixing amount of the ionic compound is confined to 0.01% to 40% based on a total weight of the dispersion medium.

**2.** An inkjet ink **characterized by** comprising the dispersion for ink claimed in claim 1.

3. A dispersion for ink **characterized by** comprising:

a dispersion medium;
pigment having an average particle diameter of not more than 200 nm;
a polymer dispersing agent containing a first resinous dispersing agent and a second resinous dispersing agent; and
an ionic compound;

wherein a concentration of the pigment is confined to 2 to 30 parts by weight based on 100 parts by weight of the dispersion medium, a mixing amount of the first resinous dispersing agent is confined to 10% to 60% based on a total weight of the pigment, the second resinous dispersing agent is a resin having a basic terminal and a mixing amount of the second resinous dispersing agent is confined to 1% to 30% based on a total weight of the pigment, and a mixing amount of the ionic compound is confined to 0.01 to 20 parts by weight based on 100 parts by weight of a total of the dispersion medium.

4. The inkjet ink according to claim 2, **characterized in that** the dispersion medium comprises a compound exhibiting a viscosity of not more than 300 mPa·s at 25°C and a boiling point of not lower than 150°C at 1 atm.

5. The inkjet ink according to claim 2, **characterized in that** the dispersion medium comprises a cationically polymerizable compound, and the ionic compound is an onium salt-based photo-acid generating agent.

6. The inkjet ink according to claim 5, **characterized in that** the cationically polymerizable compound comprises limonene dioxide.

7. The inkjet ink according to claim 5, **characterized in that** the cationically polymerizable compound comprises [1-ethyl(3-oxetanyl)] methyl ether.

8. The inkjet ink according to claim 5, **characterized in that** the cationically polymerizable compound comprises a vinyl ether compound.

9. The inkjet ink according to claim 8, **characterized in that** the vinyl ether compound comprises a cyclic ether compound having a substituent group including a vinyl ether structure.

10. The inkjet ink according to claim 2, **characterized in that** the second resinous dispersing agent is adsorbed onto the first resinous dispersing agent.

11. The inkjet ink according to claim 2, **characterized in that** the second resinous dispersing agent is bonded to a portion of the ionic compound through adsorption and/or ionic bond.

12. The inkjet ink according to claim 2, **characterized in that** the pigment is a blue pigment, a mixing amount of the first resinous dispersing agent is confined within the range of 10 to 30% by weight based on a weight of the pigment, and a mixing amount of the second resinous dispersing agent is confined within the range of 5 to 30% by weight based on a weight of the pigment.

13. The inkjet ink according to claim 12, **characterized in that** the pigment is phthalocyanine pigment.

14. The inkjet ink according to claim 2, **characterized in that** the pigment is carbon black pigment, a mixing amount of the first resinous dispersing agent is confined within the range of 10 to 30% by weight based on a weight of the pigment, and a mixing amount of the second resinous dispersing agent is confined within the range of 5 to 30% by weight based on a weight of the pigment.

15. The inkjet ink according to claim 2, **characterized in that** the pigment is yellow pigment, a mixing amount of the first resinous dispersing agent is confined within the range of 10 to 60% by weight based on a weight of the pigment, and a mixing amount of the second resinous dispersing agent is confined within the range of 5 to 30% by weight based on a weight of the pigment.

16. The inkjet ink according to claim 15, **characterized in that** the pigment is PY139 or PY150.

**17.** A method for manufacturing a dispersion for inkjet ink **characterized by** comprising:

adding powder having an average particle diameter of not more than 300 nm to a dispersion medium at a mixing amount of 2 to 60 parts by weight based on 100 parts by weight of the dispersion medium;
mixing a first resinous dispersing agent with the dispersion medium at an amount of 1 to 60% by weight based on a weight of the powder to coat the powder with the first resinous dispersing agent;
mixing a second resinous dispersing agent with the powder at an amount of 1 to 30% by weight based on the powder to further disperse the resin-covered powder; and
adding an ionic compound to the dispersion medium at a mixing amount of 0.01 to 40 parts by weight based on 100 parts by weight of the dispersion medium.

**18.** A method for manufacturing an inkjet ink **characterized by** comprising:

adding powder having an average particle diameter of not more than 300 nm to a dispersion medium at a mixing amount of 2 to 60 parts by weight based on 100 parts by weight of the dispersion medium;
mixing a first resinous dispersing agent with the dispersion medium at an amount of 1 to 60% by weight based on a weight of the powder to coat the powder with the first resinous dispersing agent;
mixing a second resinous dispersing agent with the powder at an amount of 1 to 30% by weight based on the powder to further disperse the resin-covered powder; and
adding an ionic compound to the dispersion medium at a mixing amount of 0.01 to 40 parts by weight based on 100 parts by weight of the dispersion medium.

**19.** A printed matter having an image **characterized by** comprising a cured substance of the inkjet ink claimed in claim 2.

## Patentansprüche

**1.** Dispersion für eine Tinte, **dadurch gekennzeichnet, dass** sie umfasst:

ein Dispersionsmedium,
ein Pulver oder Pigment mit einem durchschnittlichen Teilchendurchmesser von nicht mehr als 300 nm,
ein Polymerdispergiermittel, das ein erstes harzartiges Dispergiermittel und ein zweites harzartiges Dispergiermittel enthält, und
eine ionische Verbindung,

wobei die Mischmenge des Pulvers oder Pigments auf 2 % bis 60 %, bezogen auf das Gesamtgewicht des Dispersionsmediums, beschränkt ist, die Mischmenge des ersten harzartigen Dispergiermittels auf 1 % bis 60 %, bezogen auf das Gesamtgewicht des Pulvers oder Pigments, beschränkt ist, das zweite harzartige Dispergiermittel ein Harz mit einer basischen Endgruppe ist und die Mischmenge des zweiten harzartigen Dispergiermittels auf 1 % bis 30 %, bezogen auf das Gesamtgewicht des Pulvers oder Pigments, beschränkt ist, und die Mischmenge der ionischen Verbindung auf 0,01 % bis 40 %, bezogen auf das Gesamtgewicht des Dispersionsmediums, beschränkt ist.

**2.** Tintenstrahltinte, **dadurch gekennzeichnet, dass** sie die im Anspruch 1 beanspruchte Dispersion für eine Tinte umfasst.

**3.** Dispersion für eine Tinte, **dadurch gekennzeichnet, dass** sie umfasst:

ein Dispersionsmedium,
ein Pigment mit einem durchschnittlichen Teilchendurchmesser von nicht mehr als 200 nm,
ein Polymerdispergiermittel, das ein erstes harzartiges Dispergiermittel und ein zweites harzartiges Dispergiermittel enthält, und
eine ionische Verbindung,

wobei die Konzentration des Pigments auf 2 bis 30 Gewichtsteile, bezogen auf 100 Gewichtsteile des Dispersionsmediums, beschränkt ist, die Mischmenge des ersten harzartigen Dispergiermittels auf 10 % bis 60 %, bezogen auf das Gesamtgewicht des Pigments, beschränkt ist, das zweite harzartige Dispergiermittel ein Harz mit einer basischen Endgruppe ist und die Mischmenge des zweiten harzartigen Dispergiermittels auf 1 % bis 30 %, bezogen auf das Gesamtgewicht des Pigments, beschränkt ist, und die Mischmenge der ionischen Verbindung auf 0,01 bis 20 Gewichtsteile, bezogen auf 100 Gewichtsteile der Gesamtmenge des Dispersionsmediums, beschränkt ist.

4. Tintenstrahltinte nach Anspruch 2, **dadurch gekennzeichnet, dass** das Dispersionsmedium eine Verbindung umfasst, die eine Viskosität von nicht mehr als 300 mPa · s bei 25°C und einen Siedepunkt von nicht niedriger als 150°C bei 1 atm aufweist.

5. Tintenstrahltinte nach Anspruch 2, **dadurch gekennzeichnet, dass** das Dispersionsmedium eine kationisch polymerisierbare Verbindung umfasst und die ionische Verbindung ein photosäureerzeugendes Mittel auf Oniumsalzbasis ist.

6. Tintenstrahltinte nach Anspruch 5, **dadurch gekennzeichnet, dass** die kationisch polymerisierbare Verbindung Limonendioxid umfasst.

7. Tintenstrahltinte nach Anspruch 5, **dadurch gekennzeichnet, dass** die kationisch polymerisierbare Verbindung [1-Ethyl (3-oxetanyl)]methylether umfasst.

8. Tintenstrahltinte nach Anspruch 5, **dadurch gekennzeichnet, dass** die kationisch polymerisierbare Verbindung eine Vinyletherverbindung umfasst.

9. Tintenstrahltinte nach Anspruch 8, **dadurch gekennzeichnet, dass** die Vinyletherverbindung eine cyclische Etherverbindung mit einer Substituentengruppe umfasst, die eine Vinyletherstruktur umfasst.

10. Tintenstrahltinte nach Anspruch 2, **dadurch gekennzeichnet, dass** das zweite harzartige Dispergiermittel auf dem ersten harzartigen Dispergiermittel adsorbiert ist.

11. Tintenstrahltinte nach Anspruch 2, **dadurch gekennzeichnet, dass** das zweite harzartige Dispergiermittel an einen Teil der ionischen Verbindung mittels Adsorption und/oder ionischer Bindung gebunden ist.

12. Tintenstrahltinte nach Anspruch 2, **dadurch gekennzeichnet, dass** das Pigment ein blaues Pigment ist, die Mischmenge des ersten harzartigen Dispergiermittels innerhalb des Bereichs von 10 bis 30 Gew.-%, bezogen auf das Gewicht des Pigments, beschränkt ist, und die Mischmenge des zweiten harzartigen Dispergiermittels innerhalb des Bereichs von 5 bis 30 Gew.-%, bezogen auf das Gewicht des Pigments, beschränkt ist.

13. Tintenstrahltinte nach Anspruch 12, **dadurch gekennzeichnet, dass** das Pigment ein Phthalocyaninpigment ist.

14. Tintenstrahltinte nach Anspruch 2, **dadurch gekennzeichnet, dass** das Pigment ein Rußpigment ist, die Mischmenge des ersten harzartigen Dispergiermittels innerhalb des Bereichs von 10 bis 30 Gew.-%, bezogen auf das Gewicht des Pigments, beschränkt ist, und die Mischmenge des zweiten harzartigen Dispergiermittels innerhalb des Bereichs von 5 bis 30 Gew.-%, bezogen auf das Gewicht des Pigments, beschränkt ist.

15. Tintenstrahltinte nach Anspruch 2, **dadurch gekennzeichnet, dass** das Pigment ein gelbes Pigment ist, die Mischmenge des ersten harzartigen Dispergiermittels innerhalb des Bereichs von 10 bis 60 Gew.-%, bezogen auf das Gewicht des Pigments, beschränkt ist, und die Mischmenge des zweiten harzartigen Dispergiermittels innerhalb des Bereichs von 5 bis 30 Gew.-%, bezogen auf das Gewicht des Pigments, beschränkt ist.

16. Tintenstrahltinte nach Anspruch 15, **dadurch gekennzeichnet, dass** das Pigment PY139 oder PY150 ist.

17. Verfahren zur Herstellung einer Dispersion für eine Tintenstrahltinte, **dadurch gekennzeichnet, dass** es umfasst:

Zugeben eines Pulvers mit einem durchschnittlichen Teilchendurchmesser von nicht mehr als 300 nm zu einem Dispersionsmedium in einer Mischmenge von 2 bis 60 Gewichtsteilen, bezogen auf 100 Gewichtsteile des Dispersionsmediums,
Mischen eines ersten harzartigen Dispergiermittels mit dem Dispersionsmedium in einer Menge von 1 bis 60 Gew.-%, bezogen auf das Gewicht des Pulvers, um das Pulver mit dem ersten harzartigen Dispergiermittel zu beschichten,
Mischen eines zweiten harzartigen Dispergiermittels mit dem Pulver in einer Menge von 1 bis 30 Gew.-%, bezogen auf das Pulver, um das Harz-bedeckte Pulver weiter zu dispergieren, und
Zugeben einer ionischen Verbindung zu dem Dispersionsmedium in einer Mischmenge von 0,01 bis 40 Gewichtsteilen, bezogen auf 100 Gewichtsteile des Dispersionsmediums.

**18.** Verfahren zur Herstellung einer Tintenstrahltinte, **dadurch gekennzeichnet, dass** es umfasst:

Zugeben eines Pulvers mit einem durchschnittlichen Teilchendurchmesser von nicht mehr als 300 nm zu einem Dispersionsmedium in einer Mischmenge von 2 bis 60 Gewichtsteilen, bezogen auf 100 Gewichtsteile des Dispersionsmediums,
Mischen eines ersten harzartigen Dispergiermittels mit dem Dispersionsmedium in einer Menge von 1 bis 60 Gew.-%, bezogen auf das Gewicht des Pulvers, um das Pulver mit dem ersten harzartigen Dispergiermittel zu beschichten,
Mischen eines zweiten harzartigen Dispergiermittels mit dem Pulver in einer Menge von 1 bis 30 Gew.-%, bezogen auf das Pulver, um das Harz-bedeckte Pulver weiter zu dispergieren, und
Zugeben einer ionischen Verbindung zu dem Dispersionsmedium in einer Mischmenge von 0,01 bis 40 Gewichtsteilen, bezogen auf 100 Gewichtsteile des Dispersionsmediums.

**19.** Druckerzeugnis, das ein Bild aufweist, **dadurch gekennzeichnet, dass** es eine gehärtete Substanz der im Anspruch 2 beanspruchten Tintenstrahltinte umfasst.

## Revendications

**1.** Dispersion pour encre, **caractérisée en ce qu'**elle comprend:

un milieu de dispersion ;
une poudre ou un pigment présentant un diamètre moyen de particules d'au plus 300 nm ;
un agent dispersant polymère contenant un premier agent dispersant résineux et un second agent dispersant résineux ; et
un composé ionique ;

dans laquelle une quantité de mélange de la poudre ou du pigment est confinée à de 2 % à 60 %, rapportée au poids total du milieu de dispersion, une quantité de mélange du premier agent dispersant résineux est confinée à de 1 % à 60 %, rapportée au poids total de la poudre ou du pigment, le second agent dispersant résineux est une résine présentant une terminaison basique et une quantité de mélange du second agent dispersant résineux est confinée à de 1 % à 30 %, rapportée au poids total de la poudre ou du pigment, et une quantité de mélange du composé ionique est confinée à de 0,01 % à 40 %, rapportée au poids total du milieu de dispersion.

**2.** Encre pour jet d'encre, **caractérisée en ce qu'**elle comprend la dispersion pour encre selon la revendication 1.

**3.** Dispersion pour encre, **caractérisée en ce qu'**elle comprend :

un milieu de dispersion ;
un pigment présentant un diamètre moyen de particules d'au plus 200 nm ;
un agent dispersant polymère contenant un premier agent dispersant résineux et un second agent dispersant résineux ; et
un composé ionique ;

dans laquelle une concentration du pigment est confinée à de 2 à 30 parties en poids, rapportée à 100 parties en poids du milieu de dispersion, une quantité de mélange du premier agent dispersant résineux est confinée à de 10 % à 60 %, rapportée au poids total du pigment, le second agent dispersant résineux est une résine présentant une terminaison basique et une quantité de mélange du second agent dispersant résineux est confinée à de 1 % à 30 %, rapportée au poids total du pigment, et une quantité de mélange du composé ionique est confinée à de 0,01 à 20 parties en poids, rapportée à 100 parties en poids d'un total du milieu de dispersion.

**4.** Encre pour jet d'encre selon la revendication 2, **caractérisée en ce que** le milieu de dispersion comprend un composé exhibant une viscosité d'au plus 300 mPa·s à 25°C et un point d'ébullition d'au moins 150°C à 1 atm.

**5.** Encre pour jet d'encre selon la revendication 2, **caractérisée en ce que** le milieu de dispersion comprend un composé cationiquement polymérisable et le composé ionique est un agent produisant un photo-acide à base de

sel d'onium.

**6.** Encre pour jet d'encre selon la revendication 5, **caractérisée en ce que** le composé cationiquement polymérisable comprend le dioxyde de limonène.

**7.** Encre pour jet d'encre selon la revendication 5, **caractérisée en ce que** lé composé cationiquement polymérisable comprend le [1-éthyl(3-oxétanyl)]méthyléther.

**8.** Encre pour jet d'encre selon la revendication 5, **caractérisée en ce que** le composé cationiquement polymérisable comprend un composé de vinyléther.

**9.** Encre pour jet d'encre selon la revendication 8, **caractérisée en ce que** le composé de vinyléther comprend un composé d'éther cyclique présentant un groupe substituant comprenant une structure vinyléther.

**10.** Encre pour jet d'encre selon la revendication 2, **caractérisée en ce que** le second agent dispersant résineux est adsorbé sur le premier agent dispersant résineux.

**11.** Encre pour jet d'encre selon la revendication 2, **caractérisée en ce que** le second agent dispersant résineux est lié à une partie du composé ionique par adsorption et/ou liaison ionique.

**12.** Encre pour jet d'encre selon la revendication 2, **caractérisée en ce que** le pigment est un pigment bleu, une quantité de mélange du premier agent dispersant résineux est confinée dans l'intervalle de 10 à 30 % en poids, rapportée au poids du pigment, et une quantité de mélange du second agent dispersant résineux est confinée dans l'intervalle de 5 à 30 % en poids, rapportée au poids du pigment.

**13.** Encre pour jet d'encre selon la revendication 12, **caractérisée en ce que** le pigment est le pigment de phtalocyanine.

**14.** Encre pour jet d'encre selon la revendication 2, **caractérisée en ce que** le pigment est un pigment de noir de carbone, une quantité de mélange du premier agent dispersant résineux est confinée dans l'intervalle de 10 à 30 % en poids, rapportée au poids du pigment, et une quantité de mélange du second agent dispersant résineux est confinée dans l'intervalle de 5 à 30 % en poids, rapportée au poids du pigment.

**15.** Encre pour jet d'encre selon la revendication 2, **caractérisée en ce que** le pigment est un pigment jaune, une quantité de mélange du premier agent dispersant résineux est confinée dans l'intervalle de 10 à 60 % en poids, rapportée au poids du pigment, et une quantité de mélange du second agent dispersant résineux est confinée dans l'intervalle de 5 à 30 % en poids, rapportée au poids du pigment.

**16.** Encre pour jet d'encre selon la revendication 15, **caractérisée en ce que** le pigment est PY139 ou PY150.

**17.** Procédé pour la fabrication d'une dispersion pour encre pour jet d'encre, **caractérisé en ce qu'**il comprend :

l'addition d'une poudre ayant un diamètre moyen de particules d'au plus 300 nm à un milieu de dispersion à une quantité de mélange de 2 à 60 parties en poids, rapportée à 100 parties en poids du milieu de dispersion ;
le mélange d'un premier agent dispersant résineux avec le milieu de dispersion à une quantité de 1 à 60 % en poids, rapportée à un poids de la poudre, pour revêtir la poudre avec le premier agent dispersant résineux ;
le mélange d'un second agent dispersant résineux avec la poudre à une quantité de 1 à 30 % en poids, rapportée à la poudre, pour disperser encore la poudre revêtue de résine ; et
l'addition d'un composé ionique au milieu de dispersion à une quantité de mélange de 0,01 à 40 parties en poids, rapportée à 100 parties en poids du milieu de dispersion.

**18.** Procédé pour la fabrication d'une encre pour jet d'encre, **caractérisé en ce qu'**il comprend :

l'addition de poudre présentant un diamètre moyen de particules d'au plus 300 nm à un milieu de dispersion à une quantité de mélange de 2 à 60 parties en poids, rapportée à 100 parties en poids du milieu de dispersion ;
le mélange d'un premier agent dispersant résineux avec le milieu de dispersion à une quantité de 1 à 60 % en poids, rapportée au poids de la poudre, pour revêtir la poudre avec le premier agent dispersant résineux ;
le mélange d'un second agent dispersant résineux avec la poudre à une quantité de 1 à 30 % en poids, rapportée à la poudre, pour disperser encore la poudre revêtue de résine ; et

l'addition d'un composé ionique au milieu de dispersion à une quantité de mélange de 0,01 à 40 parties en poids, rapportée à 100 parties en poids du milieu de dispersion.

**19.** Matière imprimée présentant une image, **caractérisée en ce qu'**elle comprend une substance durcie de l'encre pour jet d'encre selon la revendication 2.

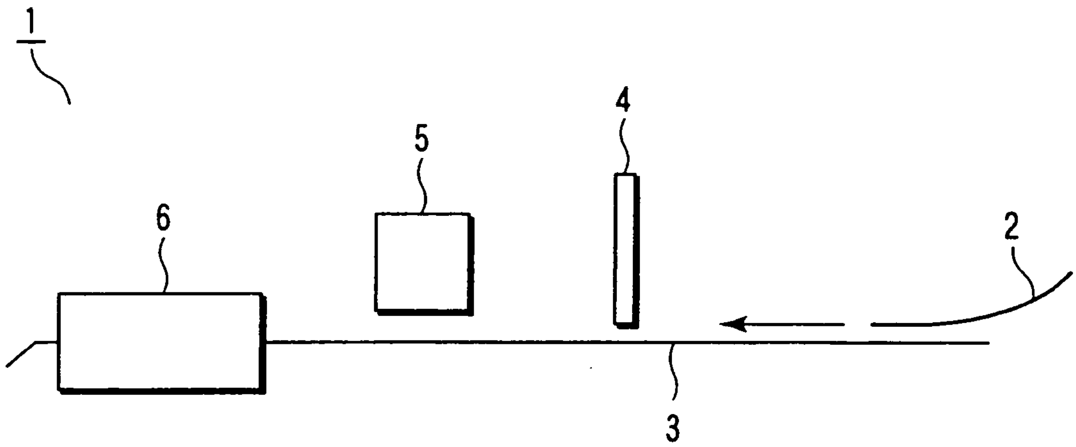


FIGURE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1491592 A2
- WO 0246323 A2
- EP 1621348 A1
- EP 1528089 A2
- US 20040244622 A1
- JP 9151342 A
- JP 10316909 A


### Non-patent literature cited in the description


- *J. Am. Soc.,* 2002, vol. 124 (8), 1590-1591